(19) Europäisches Patentamt
European Patent Office
Office européen des brevets

(11) **EP 2 664 058 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **11700421.8**

(22) Anmeldetag: **14.01.2011**

(51) Int Cl.:
**H02N 1/00** (2006.01)     **G02B 26/08** (2006.01)

(86) Internationale Anmeldenummer:
**PCT/EP2011/050483**

(87) Internationale Veröffentlichungsnummer:
**WO 2012/095185 (19.07.2012 Gazette 2012/29)**

(54) **MIKROMECHANISCHES BAUELEMENT**

MICROMECHANICAL COMPONENT

COMPOSANT MICRO-MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.11.2013 Patentblatt 2013/47**

(73) Patentinhaber: **Fraunhofer-Gesellschaft zur Förderung der angewandten Forschung e.V.
80686 München (DE)**

(72) Erfinder:
• **CONRAD, Holger**
  **01307 Dresden (DE)**
• **SCHENK, Harald**
  **01109 Dresden (DE)**
• **SCHIRRMANN, Christian**
  **01097 Dresden (DE)**
• **SANDNER, Thilo**
  **01156 Dresden (DE)**
• **ZIMMER, Fabian**
  **01099 Dresden (DE)**
• **SCHMIDT, Jan-Uwe**
  **01108 Dresden (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
EP-A1- 1 526 399          WO-A1-02/49199
US-A- 5 290 400           US-A1- 2004 160 118
US-A1- 2005 040 654       US-A1- 2007 017 994

**Beschreibung**

Die vorliegende Erfindung bezieht sich auf ein mikromechanisches Bauelement, wie z. B. einen mikromechanischen Aktor oder einen mikromechanischen Sensor.

Für eine sehr große Anzahl und Vielfalt von Anwendungen werden mikromechanisch hergestellte und aktiv auslenkbare Balken- und Plattenstrukturen genutzt. Die auslenkbaren Platten werden aufgrund ihrer geringen Dicke oft auch als Membranen bezeichnet. Für die aktiv auslenkbaren Balken wird häufig auch der Begriff Cantilever genutzt. In Tabelle 1 sind einige Beispiele von Mikrosystemen aufgeführt und das Funktionsprinzip der aktiv auslenkbaren Mikrostrukturen wird erklärt.

Tabelle 1: Beispiele von Mikrosystemen und Beschreibung möglicher Funktionsprinzipien der auslenkbaren Mikrostrukturen

| Mikrosystem | Funktionsprinzip der aktiv auslenkbaren Mikrostrukturen | Bespiel / Referenz |
|---|---|---|
| aktiv **verkrümmbarer Spiegel** für die Fokusvariation von Lichtstrahlen oder zur gezielten Korrektur der Phase der Wellenfront von Licht | Dünne und an dessen Rand fest eingespannte Spiegelplatten werden mit Hilfe eines elektrostatischen Feldes verkrümmt. Die Kräfte aus dem elektrostatischen Feld greifen hier vertikal an der Plattenunterseite an. | 0, [2], [3], [8], [9] |
| | Dünne Spiegelplatten werden mit Hilfe einer aktiv einstellbaren, lateralen Materialdehnung innerhalb einer Materialschicht verkrümmt (Bi- oder Monomorphprinzip). Die aktive veränderbare laterale Materialdehnung kann thermomechanischen, piezoelektrischen, piezomagnetischen, elektrostriktiven oder magnetostriktiven Ursprungs sein. | 0, [4], [5], [11] |
| aktiv **verkrümmbare Fokussierspiegelarrays** für transmissive Displays | Dünne und an dessen Rand fest eingespannte, kreisringförmige Spiegelplatten werden mit Hilfe eines elektrostatischen Feldes verkrümmt. Die Kräfte aus dem elektrostatischen Feld greifen hier vertikal an der Plattenunterseite an. | [21] |
| aktiv **kippbare Spiegel** zur räumlichen Ablenkung von Lichtstrahlen | Die Spiegelplatten sind über Federelemente an einem festen Rahmen verbunden und werden mit Hilfe eines elektrostatischen Feldes verkippt. | [6] |
| | Die Kräfte aus dem elektrostatischen Feld greifen hier vertikal an der Plattenunterseite an. Dieses Prinzip wird auch für Mikrokippspiegelarrays genutzt. | [7] |
| | Die Spiegelplatten sind über dünne bi- oder monomorphe Balkenstrukturen mit einem festen Rahmen verbunden. Die Verkippung der Spiegelplatte erfolgt über eine aktiv einstellbare Schichtspannung und die damit einhergehende Verkrümmung der Balkenstrukturen. Die aktive veränderbare laterale Materialdehnung kann thermomechanischen, piezoelektrischen, piezomagnetischen, elektrostriktiven oder magnetostriktiven Ursprungs sein. | [10], [12], [13] |
| aktiv verstellbarer **Hub- bzw. Senkspiegel** für die Phasenvariation von Licht (z. B. in FTIR-Spektrometern) | Die Spiegelplatten sind über Federelemente an einem festen Rahmen verbunden und werden mit Hilfe eines elektrostatischen Feldes orthogonal zur Spiegelfläche bewegt. Die Kräfte aus dem elektrostatischen Feld greifen hier vertikal an der Plattenunterseite an. Dieses Prinzip wird auch für Senkspiegelarrays für die adaptive Optik genutzt. | [15] |
| | Die Spiegelplatten sind über dünne bi- oder monomorphe Balkenstrukturen mit einem festen Rahmen verbunden. Die Auslenkung der Spiegelplatte erfolgt über eine aktiv einstellbare Schichtspannung und die damit einhergehende Verkrümmung der Balkenstrukturen. Die aktive veränderbare laterale Materialdehnung kann thermomechanischen, piezoelektrischen, piezomagnetischen, elektrostriktiven oder magnetostriktiven Ursprungs sein. | [14] |

(fortgesetzt)

| Mikrosystem | Funktionsprinzip der aktiv auslenkbaren Mikrostrukturen | Bespiel / Referenz |
|---|---|---|
| Atomic Force Microscopy (AFM) in Messmodi mit dynamischer Anregung | Ein Balken (= Blattfeder oder Cantilever) wird entweder über ein elektrostatisches Feld zw. Messprobe und Spitze des Balkens, oder über piezoelektrische induzierte Dehnung innerhalb des Balkens ausgelenkt. | |

Prinzipiell lassen sich die hier vorgestellten Funktionsprinzipien der aktiv auslenkbaren Mikrostrukturen in zwei Klassen unterteilen:

Bei der ersten Klasse wirkt eine Kraft orthogonal zu der auszulenkenden Struktur 100 (= Balken oder Platte).

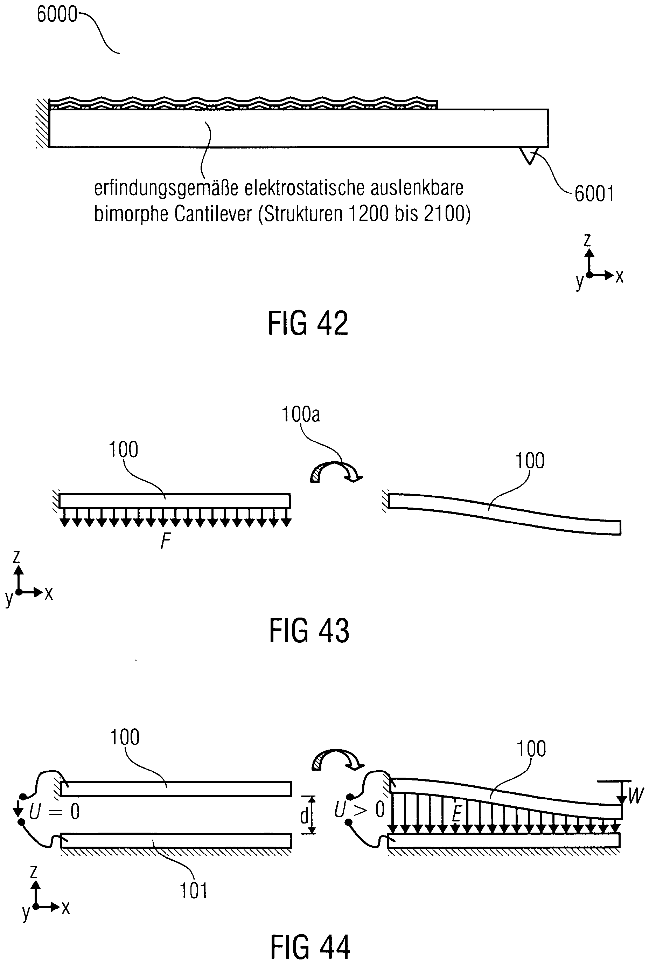

Fig. 43 zeigt exemplarisch einen mikromechanischen Aktor dieser Sorte. Fig. 43 zeigt ein mikromechanisches Bauelement mit einer auslenkbaren Platte oder einem auslenkbaren Balken 100, das in dem vorliegenden Fall einseitig aufgehängt ist, und an dem eine extern bewirkte Kraft F angreift, die die Platte oder den Balken 100 senkrecht zur Erstreckungsrichtung aus seiner Ruhelage bringt, wie es durch einen Pfeil 100a zwischen der Ruhelagestellung links und der ausgelenkten Stellung rechts in Fig. 43 angedeutet ist. Bei dieser Gelegenheit wird darauf hingewiesen, dass in dem gesamten Dokument der vorliegenden Anmeldung die darin enthaltenen Zeichnungen und Skizzen schematische Koordinatensymbole, die mit x, y und z beschriftet sind, umfassen, und dass dabei konsequent darauf geachtet worden ist, dass die x-y-Ebene parallel zur Substratebene bzw. der Chipebene, in dem Fall, dass die gezeigten Bauelemente in einem Chip integriert sind, liegt, und dass die z-Richtung demnach orthogonal zur Substratebene steht, in dem Fall, dass eine Chipintegration vorliegt.

Sehr oft ist die vertikal angreifende Kraft F die Kraft aus einem elektrostatischen Feld. Hierbei wird das elektrostatische Feld E mit Hilfe einer elektrischen Spannung U zwischen dem auszulenkenden Balken (oder Platten) und einer festen Elektrode 101 (auch Gegenelektrode genannt) erzeugt.

Fig. 44 zeigt einen mikromechanischen Aktor, bei dem die auszulenkende Struktur 100 dadurch ausgelenkt wird, dass zwischen die auszulenkende Struktur 100 und eine ihr gegenüberliegende Elektrode 101 eine Spannung U angelegt wird, die bewirkt, dass die auszulenkende Struktur 100 und die Elektrode 101 zueinander angezogen werden. Die auszulenkende Struktur, hier ein einseitig eingespannter Balken oder Platte, wird in dem Fall von Fig. 44 also durch die Kraft eines elektrostatischen Feldes ausgelenkt.

Der Grund für die Dominanz des elektrostatischen Antriebes in der Mikrosystemtechnik ist das gute Skalierungsverhalten der Kräfte (welche auf die Elektroden eines elektrostatischen Feldes wirken) in den für Mikrosysteme üblichen Dimensionen. Für einfache, planparallele Elektrodenanordnungen, welche keine oder eine sehr geringe Bewegung ausführen, ist die Kraft umgekehrt proportional zum Quadrat des Elektrodenabstandes ($F \sim 1/d^2$). Somit resultiert aus geringen Elektrodenabständen eine hohe Kraftwirkung auf die Elektroden.

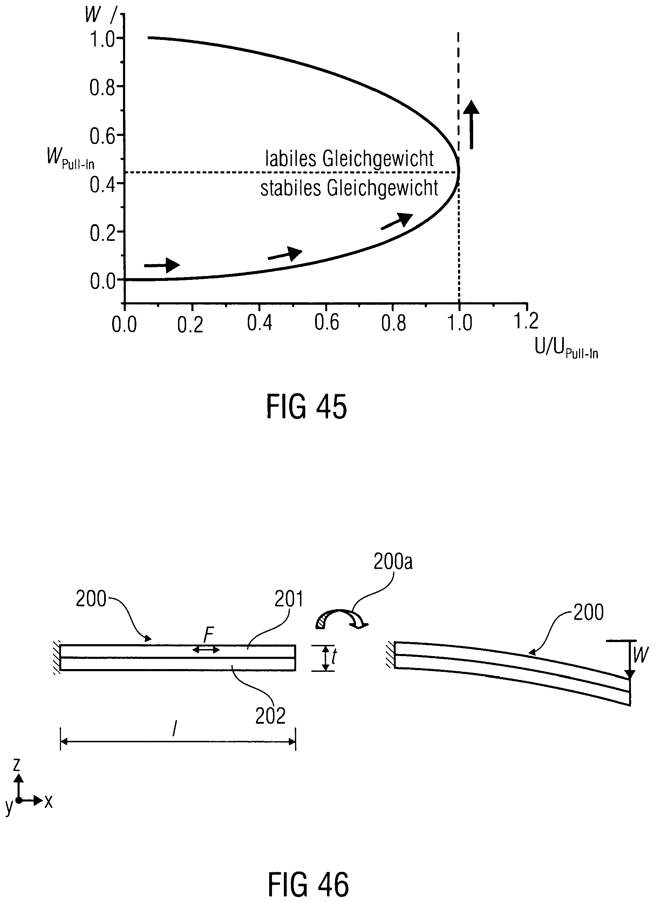

Die Auslenkung w der Mikrostrukturen (Balken oder Platten) ist von der der angelegten elektrischen Spannung U näherungsweise quadratisch abhängig (für planparallele Elektrodenanordnung ist $F \sim U^2$). Der prinzipielle Verlauf ist in Fig. 45 dargestellt.

Der erste Bereich dieser Kennlinie ist durch ein stabiles Gleichgewicht zw. den Kräften des elektrostatischen Feldes und den Rückstellkräften der Einspannung gekennzeichnet. Der zweite Bereich ist durch labiles Gleichgewicht gekennzeichnet. Eine kleine Änderung der elektrischen Spannung führt hier dazu, dass die Kräfte des elektrostatischen Feldes größer, als die mechanischen Rückstellkräfte der Einspannung (= Halterung der Mikrostruktur) werden. Der Balken (oder die Platte) 100 gerät somit in einen instabilen Bereich und wird bis zur Gegenelektrode 101 beschleunigt. Dieses Verhalten ist als "Pull-in-Effekt" dem Fachmann bekannt:

• Der Pull-in-Effekt tritt in allen elektrostatisch auslenkbaren Mikrostrukturen auf.

• Die maximal mögliche Auslenkung $w_{Pull-In}$ wird (je nach mechanischen Charakteristik der Einspannung) durch den Pull-in-Effekt auf maximal ca. 1/3 des Elektrodenabstandes d begrenzt.

• Große Auslenkungen können nur durch große Abstände d der Elektroden ermöglicht werden. Große Abstände erhöhen wiederum die benötigte elektrische Antriebsspannungen signifikant (wegen: $F \sim 1/d^2$).

Aufgrund des Pull-in-Effektes und des Verhältnisses $F \sim 1/d^2$ ist eine große Auslenkung von elektrostatisch auslenkbaren Mikrostrukturen immer mit hohen elektrischen Spannung verbunden. Spannungen im 100 V - Bereich sind für Auslenkungen im μm - Bereich oft üblich (z. B.: [2] und [3]).

Bei einer zweiten Klasse von Mikrostrukturen wirkt eine laterale Kraft innerhalb einer oder mehrerer Schichten der auszulenkenden Struktur 200.

Fig. 46 zeigt eine auszulenkende Struktur 200, die sich aus einem Schichtstapel aus zwei oder mehr Schichten 201 und 202 zusammensetzt. In mindestens einer der Schichten wird eine laterale Dehnung erzeugt, durch deren Kraft F die auszulenkende Struktur 200, hier wieder beispielsweise ein Balken oder eine Platte, ausgelenkt wird, wie es mit 200a angezeigt ist.

Diese Form der auslenkbaren Strukturen ist dem Fachmann als mono- oder bimorph auslenkbare Cantilever oder Membranen (Balken oder Platten) bekannt. Die laterale Kraft F (genauer: durch den physikalischen Effekt hervorgerufene laterale Dehnung) kann durch unterschiedliche physikalische Effekte hervorgerufen werden:

◦ Thermomechanische Anregung (thermomechanischer Bimorph): Hier werden zwei Materialien 201 und 202 mit verschiedenen Längenausdehnungskoeffizienten fest miteinander verbunden. Bei einer Erwärmung dieser Struktur (beispielsweise durch eine integrierte elektrothermische Mikroheizung = Nutzung der resistiven Leistung) entsteht eine laterale Dehnung und somit eine verschieden hohe laterale Kraft in beiden Schichten. Infolge dessen erfährt die Mikrostruktur eine Verkrümmung.

◦ Piezoelektrische und elektrostriktive Anregung (elektroaktive Mono-, Bi- und Multimorphs unter der Nutzung der transversalen Effekte): Hier wird durch ein elektrostatisches Feld und unter Verwendung eines elektroaktiven Materials eine laterale Dehnung bzw. Kraft innerhalb mindestens einer Schicht 201 erzeugt. Diese Materialdehnung kann mit Hilfe der elektrischen Spannung bzw. des elektrischen Feldes aktiv verändert werden. Infolge dessen verfährt die Mikrostruktur eine Verkrümmung.

◦ Piezomagnetische und magnetostriktive Anregung (magnetoaktive Mono-, Bi- und Multimorphs unter der Nutzung des transversalen Effektes): Hier wird durch ein magnetisches Feld und unter Verwendung eines magnetoaktiven Materials eine laterale Dehnung innerhalb mindestens Schicht 201 erzeugt. Infolge dessen erfährt die Mikrostruktur eine Verkrümmung.

Für geeignete Verhältnisse von maximaler Auslenkung w zur Balken- oder Plattendicke t (w < t) stellt sich ein sphärisches Deformationsprofil ein. Hieraus resultiert, dass die maximale Auslenkung $w$ proportional zum Quadrat der Länge $l$ der Mikrostrukturen ist (w ~ $l^2$).

Der Vorteil der bi- oder monomorph auslenkbaren Mikrostrukturen besteht darin, dass sich mit relativ geringen, aktiv einstellbaren Materialdehnungen große Auslenkungen bei ausreichender großer Strukturlänge 1 ergeben. Die maximal möglichen Auslenkungen wird hier nicht (wie im obigen Fall) durch die Charakteristik des Antriebsprinzips begrenzt.

Ein Problem, das mit der thermomechanischen Anregung einhergeht, besteht darin, dass zwar prinzipiell durch den thermomechanischen Effekt und eine geeignete Materialauswahl (für 201 und 202) ausreichend hohe Materialdehnungen für eine Verkrümmung von mikromechanischen Cantilevern und Platten erzeugt werden können [1], aber die Erzeugung der hierfür benötigten Temperaturen aus dreierlei Gründen problematisch ist:

o Die Höhe der mit einer gegebenen Leistungseinkopplung erzeugbaren Temperaturen, hängt von der thermischen Isolierung (genauer: Wärmeflussbilanz) der auszulenkenden Mikrostrukturen gegenüber ihrer Umgebung ab. Je nach Größe der zu heizenden Balken- oder Plattenfläche ist eine hohe thermische Isolation der auszulenkenden Strukturen nicht immer realisierbar. Somit ist eine relative hohe Leistungsaufnahme des Mikrosystems notwendig, damit die für die Auslenkung benötigten Temperaturen erzeugt werden können.

◦ Wird eine resistive Mikroheizung (= Verwendung ohmscher "Verlustleistung") genutzt, muss der Arbeitsbereich der Temperaturen, welche für die Sollbewegung des Cantilevers bzw. der Platte genutzt werden sollen, immer über der maximalen Umgebungstemperatur der Zielanwendung liegen. Der Grund hierfür ist, dass mit einer resistiven Mikroheizung ausschließlich Temperaturen erhöht werden können. Somit hat das Mikrosystem auch bei geringen Sollauslenkungen eine hohe Leistungsaufnahme [5]. Prinzipiell ließen sich die Temperaturen mit Hilfe des Peltier-Effektes sowohl erhöhen, als auch verringern, aber aufgrund des geringen Wirkungsgrades ist auch hier ein Mikrosystem mit geringer Leistungsaufnahme nicht möglich.

◦ Die Größe der mit der thermischen Isolation der auszulenkenden Mikrostrukturen einhergehenden Wärmekapazität (z. B. der umgebenden Luft) begrenzt die maximal mögliche Geschwindigkeit der Bewegung der Auslenkung. Aufgrund der relativ hohen Wärmekapazitäten liegt die thermische Grenzfrequenz auch für die geringe Dimensionen von Mikrosystemen im unteren Hz-Bereich [5], [16]. Daraus folgt:

- Sollen bimorphe Balken oder Platten mit höheren Frequenzen quasistatisch bewegt werden, muss aufgrund des Tiefpassverhaltens der Temperaturerzeugung eine deutliche Reduzierung der Auslenkung hingenommen werden.

- Bei sprungförmigen Änderungen der Sollauslenkung regiert (aufgrund der geringen thermischen Grenzfrequenz) die auszulenkende Mikrostruktur sehr träge und benötigt demnach viel Zeit, bis die Sollauslenkung erreicht ist.

Aufgrund der zuvor genannten Einschränkungen (große Leistungsaufnahme, "ständiges Vorheizen" und geringe Grenzfrequenz der Auslenkung) wird der thermomechanische Effekt zur aktiven Auslenkung von Platten oder Balken sehr selten genutzt. Ein kommerzielles Mikrosystem, welches den thermomechanischen Effekt zur aktiven Auslenkung von Mikrostrukturen nutzt, ist diesseitig nicht bekannt.

Probleme, die mit der Anregung mit Hilfe elektro- oder magnetoaktiven Materialien einhergeht, sind beispielsweise folgende. In der Mikrosystemtechnik ist beispielsweise vorrangig die Nutzung des inversen piezoelektrischen Effektes geläufig (siehe auch [4]). Problematisch ist jedoch die Verwendung der üblichen elektro- oder magnetoaktiven Materialien innerhalb der halbleiterkompatiblen Fertigungsanlagen (oft wird von "CMOS - kompatiblen Materialien" gesprochen): Materialien mit einer hohen elektromechanischen oder magnetomechanischen Materialkopplung (wie z. B. die piezoelektrischen Materialien: PZT, $BaTiO_3$ oder $LiNbO_3$) können aufgrund der möglichen Verunreinigung der Fertigungsanlagen nicht in halbleiterkompatiblen Fertigungsanlagen bzw. -prozessen verwendet werden. Prinzipiell gibt es halbleiterkompatible, elektroaktive Materialen, wie z. B. Aluminiumnitrid oder PVDF. Jedoch ist aber hier entweder die elektromechanische Materialkopplung sehr gering (wie z. B. bei Aluminiumnitrid oder Galliumnitrid), oder diese Materialen haben keine Temperatur- oder langzeitstabiles Verhalten (wie z. B. Zinkoxid). Eine Optimierung der Abscheidungsbedingungen für hohe elektroaktive Materialkopplungen ist sehr aufwendig und in einigen Fällen müssen die Materialien nachträglich aktiv polarisiert werden. Bei den magnetoaktiven Materialien ist prinzipiell das Problem der hohen Leistungsaufnahme des Mikrobauteils (ähnlich wie bei thermomechanischen Prinzip) gegeben, da für die aktive Auslenkung des Materials ein Magnetfeld mit veränderbarer Feldstärke werden muss. Die Erzeugung eines variablen Magnetfeldes kann nur durch ein variablen Stromfluss einer Spulenanordnung mit ausreichender Stromstärke erfolgen. Die Nutzung von Permanentmagneten ist hier nicht möglich, da diese ein "stationäres Magnetfeld" erzeugen.

Zusammenfassend ausgedrückt wäre es also wünschenswert, ein alternatives Antriebsprinzip für ein mikromechanisches Bauelement zu haben, das zumindest einige der Vorteile der verschiedenen oben kurz skizzierten Antriebsprinzipien vereinigt, und zwar ohne dabei all die damit einhergehenden Nachteile in Kauf nehmen zu müssen.

Die WO 02/49199 A1 beschreibt ein elektrostatisch betriebenes Bauelement mit einer flexiblen Elektrode, auf welcher eine Mehrzahl von zweiten Elektroden befestigt ist, um die erste Elektrode zu bewegen bzw. zu biegen. Auf das Anlegen einer elektrischen Spannung hin bewirken zweite Elektroden eine Biegung der ersten Elektrode, wobei die Biegung dadurch verbessert wird, dass sich die zweiten Elektroden jeweils mitbewegen. Das Antriebsprinzip beruht darauf, dass die erste Elektrode deformiert wird und die Deformation am Ende des Elektrodensegmentes an das benachbarte Segment weitergegeben wird. Dazu ist die zweite Elektrode in Segmente unterteilt. Zwischen den Segmenten sind Schlitze vorhanden.

Die Aufgabe der vorliegenden Erfindung besteht deshalb darin, ein mikromechanisches Bauelement zu schaffen, die diesem Wunsch nachkommt.

Diese Aufgabe wird durch ein mikromechanisches Bauelement gemäß Anspruch 1 gelöst.

Die Grundidee, die der vorliegenden Anmeldung zugrunde liegt, besteht darin, erkannt zu haben, dass es möglich ist, die verschiedenen Vorteile der verschiedenen bekannten Antriebsprinzipien miteinander zu verbinden, um auf diese Weise zu einem effektiveren Antriebsmechanismus zu gelangen. Insbesondere besteht die Erkenntnis darin, dass es prinzipiell sehr lukrativ ist, das bi- oder monomorphe Prinzip für die Auslenkung von Balken oder Platten oder anderen auslenkbaren Strukturen bzw. verformbaren Elementen zu nutzen, da eine kleine laterale Materialdehnung zu einer großen Auslenkung führen kann, aufgrund des oben bereits vorgestellten Zusammenhangs, wonach die Auslenkung w proportional zu dem Quadrat der Länge der auszulenkenden Struktur bzw. des verformbaren Elements ist, d. h. $w \sim 1^2$. Die vorliegenden Erfinder haben erkannt, dass es möglich ist, die hierfür benötige Materialdehnung oder -kontraktion ohne die thermomechanischen, elektroaktiven oder magnetoaktiven Effekte zu generieren, welche in der Beschreibungseinleitung erörterten Probleme mit sich bringen. Insbesondere besteht eine Erkenntnis der vorliegenden Erfindung darin, dass es möglich ist, eine Verformung eines verformbaren Elements gemäß dem bi- oder monomorphen Prinzip durch elektrostatische Kräfte zu bewirken. Da die Kräfte auf die Elektroden eines elektrostatischen Feldes in einer Plattenkondensatoranordnung sehr gut in den Mikrometer- und noch wesentlich stärker in den Nanometerbereich skalieren, und zwar wegen des Zusammenhangs $F \sim 1/d^2$, ist es außerordentlich vorteilhaft, mit Hilfe elektrostatischer Kräfte eine laterale Dehnung oder mechanische Spannung auf oder innerhalb eines verformbaren Elements bzw. einer auszulenkenden Struktur zu erzeugen. Die vorliegende Erfindung beruht also auch darauf, erkannt zu haben, dass es möglich ist, die Kraft auf die Elektroden eines elektrostatischen Feldes so zu nutzen, dass laterale Zug- oder Druckkräfte entstehen, die ein verformbares Element verformen bzw. eine auslenkbare Struktur auslenken können. Erfindungsgemäß wird dies ermöglicht, indem ein mikromechanisches Bauelement neben einer Elektrode und einem verformbaren Element eine isolierende Abstandshalterschicht aufweist, über die die Elektrode an dem verformbaren Element fixiert ist, wobei die isolierende Abstandshalterschicht entlang einer lateralen Richtung in mehrere voneinander beabstandete Segmente strukturiert ist, so dass durch Anlegen einer elektrischen Spannung zwischen der Elektrode und dem verformbaren Element laterale Zug- oder Druckkräfte entstehen, die das verformbare Element entlang der lateralen Richtung verkrümmen. Aufgrund der erfindungsgemäßen Struktur wird das Problem überwunden, das normalerweise mit elektrostatischen Antrieben einhergeht, nämlich das Problem des Pull-in-Effektes. Erfindungsgemäß kann die Auslenkung des verformbaren Elements also viel größer sein als die Abstände der beiden Elektroden, d. h. der vorerwähnten Elektrode und des verformbaren Elements.

Alternativ oder zusätzlich ist es auf die vorerwähnte Weise möglich, ein mikromechanisches Bauelement mit einer Elektrode, einem verformbaren Element und einer isolierenden Abstandshalterschicht, über die die Elektrode an dem verformbaren Element fixiert ist, möglich, das mikromechanische Bauelement auch als Sensor zu verwenden, indem die isolierende Abstandshalterschicht entlang einer lateralen Richtung in mehrere voneinander beabstandete Segmente so strukturiert ist, dass sich durch eine Verformung des verformbaren Elements in der lateralen Richtung eine Kapazität zwischen der Elektrode und dem verformbaren Element ändert.

Vorteilhafte Ausgestaltungen der vorliegenden Erfindung sind Gegenstand der abhängigen Patentansprüche.

Bevorzugte Ausführungsbeispiele der vorliegenden Erfindung werden nachfolgend Bezug nehmend auf die Zeichnungen näher erläutert. Es zeigen:

Fig. 1          einen schematischen Querschnitt einer Plattenkondensatoranordnung mit Kennzeichnung der wirkenden Kräfte für eine positive Querkontraktion;

Fig. 2a bis 2c          einen schematischen Querschnitt verschiedener Plattenkondensatoranordnungen mit verkippten Elektroden unter Kennzeichnung der wirkenden Kräfte für eine positive Querkontraktion;

Fig. 3a und 3b          einen schematischen Querschnitt weiterer Plattenkondensatoranordnungen mit verkippten Elektroden unter Kennzeichnung der wirkenden Kräfte für eine positive Querkontraktion;

Fig. 4a und 4b          einen schematischen Querschnitt von "Platten"-Kondensatoranordnungen mit verkippten Elektroden unter Kennzeichnung der wirkenden Kräfte für eine negative Querkontraktion;

Fig. 4c          schematische Kräftediagramme zur Verständlichmachung des Zustandekommens der negativen Querkontraktion;

Fig. 5          einen schematischen Querschnitt einer "Platten"-Kondensatoranordnung mit verkippten Elektroden unter Kennzeichnung der wirkenden Kräfte für eine negative Querkontraktion;

Fig. 6a          einen schematischen Querschnitt eines mikromechanischen Bauelements in Gestalt eines elektrostatisch bimorph auslenkbaren und einseitig eingespannten Cantilevers;

Fig. 6b          eine schematische Draufsicht zur Querschnittansicht von Fig. 6a;

Fig. 7          ein Blockschaltbild einer vereinfachten Wirkungskette der physikalischen Größen, die bei dem mikromechanischen Bauelements von Fig. 6a und 6b wirken;

Fig. 8          einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 9          einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 10          eine bemaßte Zeichnung eines mikromechanischen Bauelements in Form eines Cantilevers, zu der eine Simulation durchgeführt wurde;

Fig. 11          einen Graphen, der die z-Auslenkung des Balkens von Fig. 10 in Abhängigkeit vom Ort x bei U = 50 V zeigt;

Fig. 12      einen Graphen, der die maximale Auslenkung des Balkens am Balkenende vom Fig. 10 in Abhängigkeit der angelegten elektrischen Spannung U anzeigt;

Fig. 13      einen Graphen, der in Abhängigkeit von der angelegten elektrischen Spannung U an Elektroden des Cantilevers von Fig. 10 die "äquivalente Schichtspannung" einer 200 nm dicken Schicht zeigt, welche zu einer vergleichbaren Auslenkung $w_{max}$ des Balkens führen würde;

Fig. 14a bis 14g      vereinfachte, schematische Querschnitte eines mikromechanischen Bauelements in aufeinanderfolgenden Stadien bei einer Herstellung desselben gemäß einem Ausführungsbeispiel;

Fig. 14h      eine Draufsicht zu dem Endzustand aus Fig. 14g;

Fig. 15      einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 16      einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 17      einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 18      eine schematische Raumansicht eines mikromechanischen Bauelements in Gestalt eines elektrostatisch bimorph auslenkbaren und einseitig eingespannten Cantilevers gemäß einem weiteren Ausführungsbeispiel;

Fig. 19      einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 20      einen schematischen Querschnitt eines mikromechanischen Bauelements in Gestalt eines elektrostatisch bimorph auslenkbaren und einseitig eingespannten Cantilevers gemäß einem weiteren Ausführungsbeispiel;

Fig. 21a bis 21c      schematische Querschnitte eines mikromechanischen Bauelements in Gestalt eines elektrostatisch bimorph auslenkbaren und einseitig eingespannten Cantilevers gemäß einem weiteren Ausführungsbeispiel;

Fig. 22a      eine schematische Querschnittansicht eines mikromechanischen Bauelements, hier exemplarisch in Gestalt eines elektrostatisch bemorph auslenkbaren und einseitig eingespannten Cantilevers für eine Auslenkbarkeit innerhalb einer Ebene gemäß einem Ausführungsbeispiel;

Fig. 22b      eine schematische Draufsicht zu der Seitenansicht von Fig. 22a;

Fig. 23a bis 23d      vereinfachte, schematische Draufsichten auf ein mikromechanisches Bauelement an verschiedenen Stadien bei dessen Herstellung gemäß einem Ausführungsbeispiel;

Fig. 23e      eine schematische Seitenschnittansicht zu der Draufsicht von Fig. 23d;

Fig. 24a bis 24d      vereinfachte, schematische Draufsichten auf ein mikromechanisches Bauelement in verschiedenen Stadien bei dessen Herstellung gemäß einem Ausführungsbeispiel;

Fig. 24e      eine schematische Draufsicht eines elektrostatisch bimorph auslenkbaren und einseitig eingespannten, ringförmigen Cantilevers mit einer Auslenkbarkeit innerhalb einer Ebene;

Fig. 25a      eine Draufsicht auf ein mikromechanisches Bauelement gemäß einem weiteren Ausführungsbeispiel in Gestalt einer kreisförmigen Spiegelplatte, welche durch vier Federelemente mit einem festen Rahmen verbunden ist, mit der Möglichkeit einer aktiven Verkrümmung der Spiegelplatte, um damit beispielsweise eine aktive Fokusvariation zu erreichen;

Fig. 25b      eine Seitenschnittansicht entlang der Schnittebene A-A aus Fig. 25a in dem nicht-ausgelenkten Zustand der Spiegelplatte;

Fig. 25c      eine Seitenschnittansicht entlang der Schnittebene A-A aus Fig. 25a in dem ausgelenkten Zustand der Spiegelplatte;

Fig. 26a      eine schematische Draufsicht eines mikromechanischen Bauelements in Gestalt einer rechteckigen Spiegelplatte, welche durch zwei balkenförmige Federelemente mit einem festen Rahmen verbunden ist, die ihrerseits aktiv verkrümmbar sind, gemäß einem Ausführungsbeispiel;

Fig. 26b      eine schematische Seitenschnittansicht entlang der Schnittebene A-A aus Fig. 26a in dem nicht-ausgelenkten Zustand;

Fig. 26c      eine schematische Seitenschnittansicht entlang der Schnittebene A-A aus Fig. 26a in dem ausgelenkten Zustand;

Fig. 27      eine Prinzipskizze für die Erzeugung eines Drehmoments mit Hilfe einer Parallelbalkenstruktur mit verkrümmbaren Balken gemäß einem Ausführungsbeispiel;

Fig. 28      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem Ausführungsbeispiel;

Fig. 29      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 30      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 31      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 32      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 33      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 34      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 35      eine schematische Draufsicht eines mikromechanischen Bauelements in Gestalt einer kreisförmigen Spiegelplatte, welche durch zwei Y-förmige Federelemente mit einem festen Rahmen verbunden ist, die ihrerseits wiederum aktiv verkrümmbar sind, gemäß einem weiteren Ausführungsbeispiel;

Fig. 36a      eine schematische Draufsicht eines mikromechanischen Bauelements in Gestalt einer rechteckigen Spiegelplatte, welche über □-förmige Federn mit einem festen Rahmen verbunden ist, die ihrerseits wiederum mit aktiv verkrümmbaren Abschnitten versehen sind, gemäß einem Ausführungsbeispiel zum Kippen und translatorischen Bewegen der Spiegelplatte;

Fig. 36b      eine schematische Seitenschnittansicht entlang der Schnittebene A-A aus Fig. 36a;

Fig. 37      eine schematische Draufsicht eines mikromechanischen Bauelements in Gestalt einer rechteckigen Spiegelplatte, welche über □-förmige Federn mit einem festen Rahmen verbunden ist, die ihrerseits wiederum mit aktiv verkrümmbaren Abschnitten versehen sind, gemäß einem weiteren Ausführungsbeispiel zum Kippen der Spiegelplatte;

Fig. 38      eine schematische Draufsicht eines mikromechanischen Bauelements in Gestalt einer rechteckigen Spiegelplatte, welche über □-förmige Federn mit einem festen Rahmen verbunden ist, die ihrerseits wiederum mit aktiv verkrümmbaren Abschnitten versehen sind, gemäß einem weiteren Ausführungsbeispiel zum Kippen und translatorischen Bewegen der Spiegelplatte;

Fig. 39      eine schematische Draufsicht eines mikromechanischen Bauelements in Gestalt einer rechteckigen Spiegelplatte, welche über □-förmige Federn mit einem festen Rahmen verbunden ist, die ihrerseits wiederum mit aktiv verkrümmbaren Abschnitten versehen sind, gemäß einem weiteren Ausführungsbeispiel zum Kippen und translatorischen Bewegen der Spiegelplatte;

Fig. 40      eine schematische Draufsicht eines mikromechanischen Bauelements gemäß einem Ausführungsbeispiel in Gestalt einer kardanisch aufgehängten 2D-Kippspiegelanordnung, bei welcher die innere Spiegelplatte über einen beweglichen Rahmen mit einem festen Rahmen verbunden ist und innere Spiegelplatte in der Lage ist, eine Kippbewegung um eine Achse und der bewegliche Rahmen eine Kippbewegung um eine hierzu rechtwinklig angeordnete Achse auszuführen;

Fig. 41      eine schematische Draufsicht eines mikromechanischen Bauelements gemäß einem Ausführungsbeispiel in Gestalt einer aktiv krümmbaren Spiegelplatte mit 2D-Verkippbarkeit;

Fig. 42      eine schematische Querschnittsansicht eines mikromechanischen Bauelements gemäß einem Ausführungsbeispiel in Gestalt eines AFM-Cantilevers für AFM mit dynamischer Anregung bzw. einem Nicht-Kontakt-Modus oder einem intermittierenden Modus;

Fig. 43      eine schematische Querschnittsansicht eines einseitig eingespannten Balkens oder einer Platte, welche durch eine vertikal angreifende Kraft ausgelenkt wird;

Fig. 44      eine schematische Querschnittsansicht eines einseitig eingespannten Balkens oder einer Platte, welche durch die Kraft eines elektrostatischen Feldes ausgelenkt wird;

Fig. 45      einen Graphen, der den prinzipiellen Verlauf der normierten Auslenkung eines Balkens oder einer Platte gemäß Fig. 44 im Abhängigkeit der normiertem elektrischen Spannung zeigt; und

Fig. 46      eine schematische Querschnittsansicht eines einseitig eingespannten Balkens oder einer Platte, welche durch eine laterale Dehnung in mindestens einer Schicht ausgelenkt wird.

Bevor im Folgenden bevorzugte Ausführungsbeispiele der vorliegenden Erfindung näher erläutert werden, soll zunächst im Rahmen einer Vorbetrachtung das Grundprinzip bzw. der grundsätzliche Effekt, der den nachfolgend beschriebenen Ausführungsbeispielen zugrunde liegt, näher erläutert bzw. motiviert werden. Zunächst werden dabei Geometrien für eine positive Querkontraktion vorgestellt.

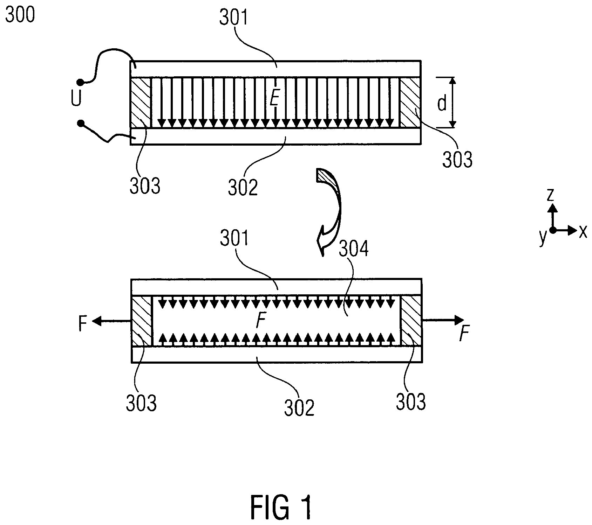

In Fig. 1 ist der Querschnitt einer einfachen Plattenkondensatoranordnung 300 gezeigt. Die Elektroden 301 und 302 sind hier mit Hilfe eines elektrisch isolierenden Materials 303 im Abstand d voneinander getrennt angeordnet. Der Zwischenraum 304 zwischen den Elektroden kann mit Luft, einem anderen Gas gefüllt oder evakuiert (Vakuum) sein und besitzt die Permittivität $\varepsilon$. Wird über den Elektroden 301 und 302 eine elektrische Spannung U angelegt, so bildet sich ein elektrostatisches Feld E aus. Das elektrostatische Feld übt eine vertikale Kraft $F_z$ auf beide Elektrodenflächen aus.

Sind die Elektroden 301 und 302 sehr steif ausgeführt (z. B. durch Materialien mit hohem Elastizitätsmodul oder durch eine ausreichende Dicke), d. h. sie führen nur eine sehr kleine Bewegung aus, dann wirkt auf die Elektroden die Flächenkraft $F_z/A$:

$$\frac{F_z}{A} = \frac{1}{2} \cdot U^2 \cdot \frac{\varepsilon}{d^2}$$

Diese Flächenkraft kann sehr große Werte annehmen. Sind beispielsweise die Elektrodenplatten in einem Abstand d = 100 nm voneinander getrennt und es befindet sich Luft zwischen den Platten ($\varepsilon$ = 8,85 · 10-12 AsV$^{-1}$m$^{-1}$), dann wird bei einer elektrischen Spannung von 10 V eine Flächenkraft von 44 kN/m$^2$ auf beide Elektroden ausgeübt. Eine Herstellung von Plattenabständen im Einhunderter Nanometerbereich ist mit den in der Mikrosystemtechnik bekannten Opferschichttechnologien relativ einfach möglich.

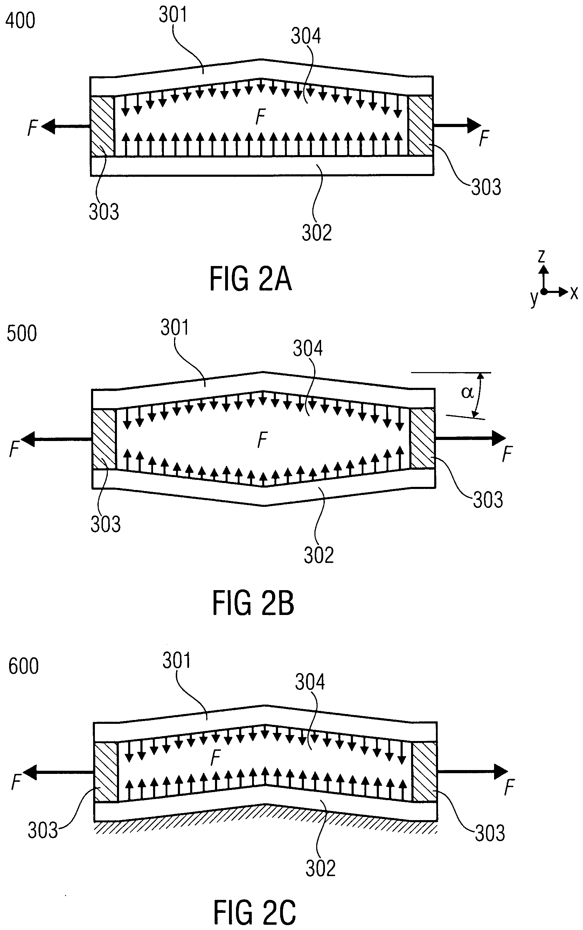

In Folge der vertikal wirkenden Kräfte des elektrostatischen Feldes $F_z$ werden die horizontal wirkenden Reaktionskräfte $F_x$ entstehen (Fig. 1). Dieser Effekt ist analog des in der Strukturmechanik bekannten Effektes der Querkontraktion zu verstehen. Der Effekt kann durch eine leichte Verkippung einer oder beider Elektroden signifikant verstärkt werden. In den beispielhaften Anordnungen in Fig. 2a - 2c wurde die obere Elektrode 301 beziehungsweise beide Elektroden 301 und 302 um einen Winkel $\alpha$ verkippt. Die Beispiele 300, 400, 500 und 600 sind mit dem Effekt einer positiven Querkontraktion vergleichbar.

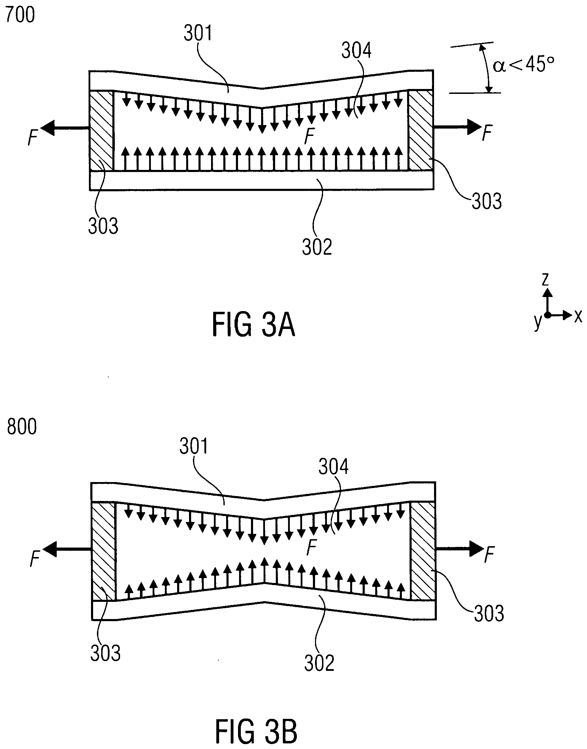

Auch für kleine Verkippungswinkel $\alpha$, wie sie in Fig. 3a, 3b gezeigt sind, entsteht aus der vertikalen Kraft des elektrostatischen Feldes $F_z$ horizontale Kräfte $F_x$, welche voneinander wegzeigen. Auch diese "Kraftumsetzung" ist für Winkel $\alpha$ < 45° mit dem aus der Strukturmechanik bekannten Effekt der positiven Querkontraktion vergleichbar.

Die vorhergehende Vorbetrachtung kann für "Geometrien für negative Querkontraktion" fortgeführt werden. Wird in den Geometrien 700 und 800 (der Plattenkondensatoren aus Fig. 3a, 3b) der Winkel $\alpha$ auf über 45° erhöht, dann erzeugen die vertikalen Kräfte $F_z$ horizontale Kraftkomponenten $F_x$, welche aufeinander zuzeigen. Dieses Prinzip lässt sich mit dem in der Strukturmechanik als negativer Querkontraktion bekannten Effekt vergleichen.

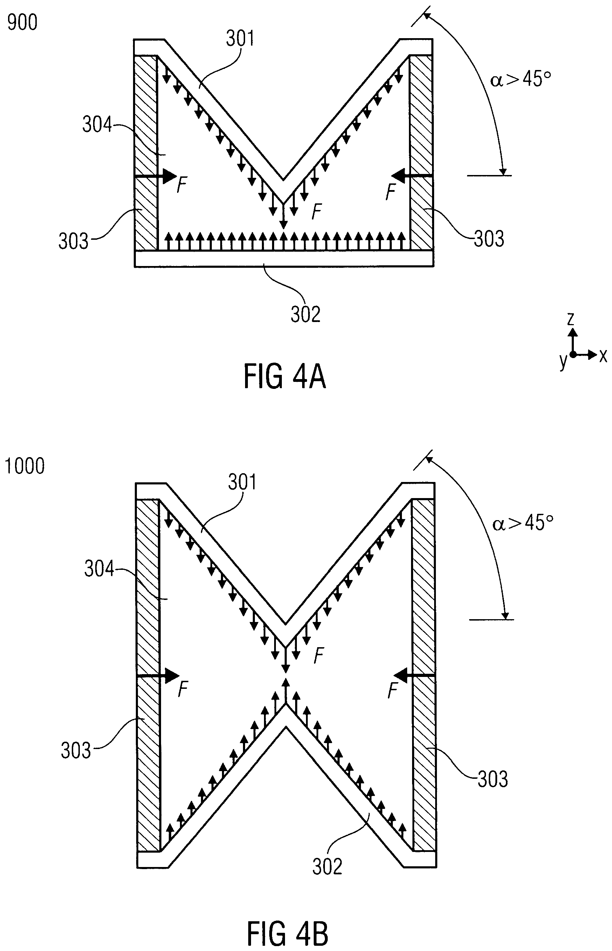

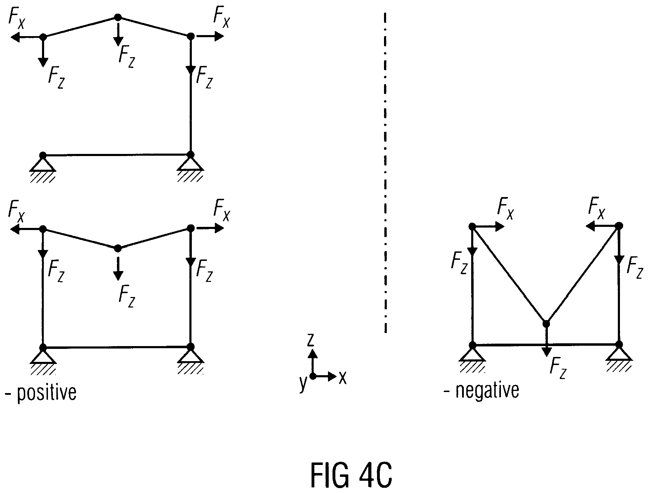

Zum Verstehen der "negativen Querkontraktion" kann man auch ebene, starre Tragwerke (= Stabwerke, wobei die Stäbe ideal starr sind und nicht verformt werden können) nutzen. In den linksseitigen Abbildungen der Fig. 4c wird die vertikale Kraft $F_z$ in nach außen wirkende Reaktionskraftkomponenten $F_x$ umgesetzt, was der positiven Querkontraktion entspricht. In der rechtsseitigen Zeichnung der Fig. 4c werden durch den Anstellwinkel der oberen Elektrode ($\alpha$ > 45°, siehe Abbildung 4a bis 5) aufeinander zuzeigende Reaktionskräfte $F_x$ erzeugt, was hier als "negative Querkontraktion" bezeichnet wird. Dass das so ist, könnte man anhand der Kräftegleichgewichte (bzw. eines Kräfte- und Momentengleichungen) zeigen, was aber in diesem konkreten Fall nicht ohne weiteres möglich ist, da es sich hier um ein unterbestimmtes Gleichungssystem handelt. Der Nachweis über die negative Querkontraktion wurde anhand von FEM-Berechnungen durchgeführt.

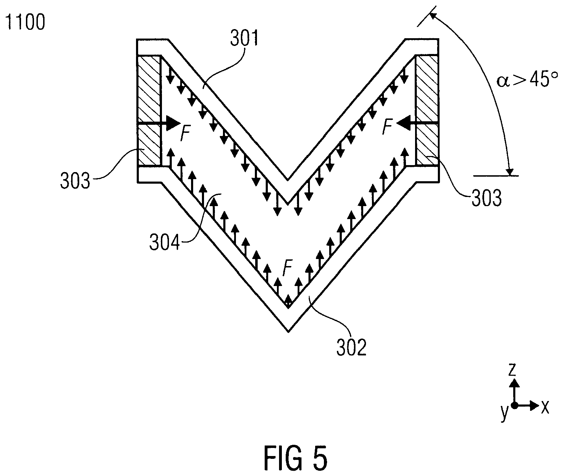

Der große Winkels $\alpha$ ist jedoch aus zwei Gründen ungünstig: Die Geometrien 900 und 1000, wie sie in Fig. 4a, 4b gezeigt sind, lassen sich sehr schlecht mit Hilfe einer Opferschichttechnologie fertigen und es werden aufgrund der durchschnittlich größeren Elektrodenabständen höhere Antriebsspannungen benötigt. Eine Abhilfe der schafft die in Fig. 5 gezeigte Geometrie. Diese Geometrie lässt sich wiederum auf einem vorstrukturierten Substrat mit Hilfe der Opferschichttechnologie erzeugen.

Die zuvor erläuterten Plattenkondensatoren werden gemäß nachfolgend erläuterter Ausführungsbeispiele auf oder innerhalb eines verformbaren Elements, wie z. B. eines einseitig eingespannten Balkens oder einer einseitig eingespannten Platte, vorgesehen, um durch die entstehenden Querkräfte die gewünschte Verformung zu erzielen.

An den zuvor erläuterten Plattenkondensatorgeometrien wurde gezeigt, wie die aus dem elektrostatischem Feld resultierenden Kräfte $F_z$ in horizontal wirkende Kräfte $F_x$ umgesetzt werden können. Die Hauptidee nachfolgender Ausführungsbeispiele für Aktuatoren ist die Nutzung der horizontal wirkenden Kräfte, um Balken und Platten aktiv verkrümmen zu können. Hierfür werden die Plattenkondensatoren auf oder innerhalb eines Cantilevers bzw. eines verformbaren Elements angebracht.

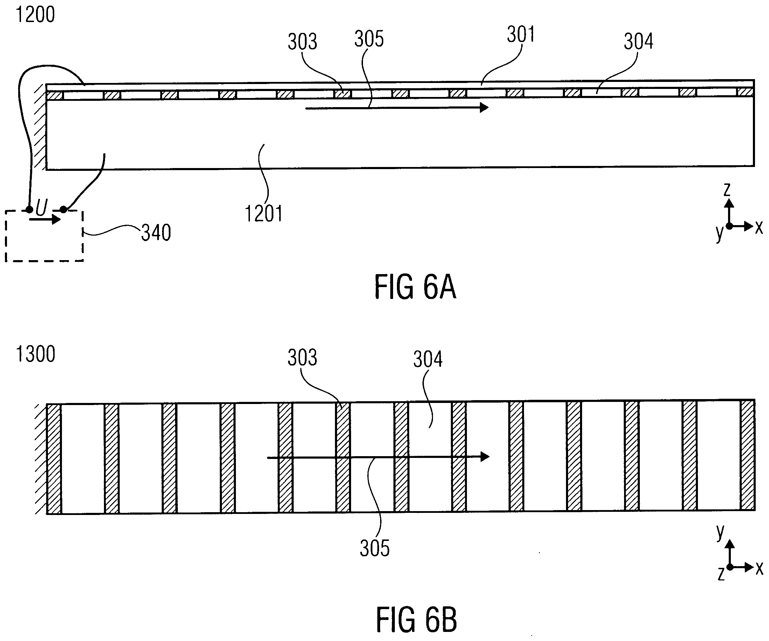

In Fig. 6a, 6b ist ein einseitig eingespannter Balken als Beispiel eines verformbaren Elements gezeigt (Draufsicht 1200 und Querschnitt 1300). Hier wird oberhalb eines elektrisch leitfähigen Balkens 1201 ein isolierendes Material 303 und ein elektrisch leitfähiges Material 301 aufgebracht. Das isolierende Material 303 kann beispielsweise durch eine Opferschichttechnologie lateral so strukturiert werden, so dass sich ein dünner Hohlraum 304 zwischen den Elektroden 1201 und 301 ausbildet. Der Hohlraum besitzt die Dicke der dielektrischen Opferschicht und definiert somit den Plattenabstand des Kondensators. Legt man nun eine elektrische Spannung zw. den Elektroden 1201 und 301 an, so resultiert aus den vertikalen Kräften des elektrostatischen Feldes eine laterale Dehnung auf der Oberfläche des Balkens. Infolge der Oberflächendehnung wird der Balken (analog des oben beschriebenen Bi- oder Monomorphprinzips) ausgelenkt. Werden, wie in 6a, 6b gezeigt, regelmäßige laterale Geometrien genutzt, so ist die Oberflächendehnung näherungsweise konstant und es stellt sich ein sphärisches Deformationsprofil w(x) ein.

Mit anderen Worten ausgedrückt zeigen Fig. 6a und 6b ein mikromechanisches Bauelement mit einer Elektrode 301 und einem verformbaren Element 1201, das in dem vorliegenden Fall exemplarisch als einseitig eingespannter Balken oder Platte ausgebildet ist, aber auch anders ausgebildet sein könnte, wie es auch Gegenstand der nachfolgend beschriebenen Figuren ist, und einer isolierenden Abstandshalterschicht 303, wobei die Elektrode 301 über die isolierende Abstandshalterschicht 303 an dem verformbaren Element 1201 fixiert ist, und wobei die isolierende Abstandshalterschicht 303 entlang einer lateralen Richtung 305, die in Fig. 6a und 6b mit der x-Richtung zusammenfällt, in mehrere voneinander beabstandete Segmente strukturiert ist, die in Fig. 6a und 6b schraffiert dargestellt sind, so dass durch Anlegen einer elektrischen Spannung zwischen der Elektrode 301 und dem verformbaren Element 1201 laterale Zug- oder Druckkräfte entstehen, die das verformbare Element entlang der lateralen Richtung 305 verkrümmen, hier in die positive oder negative z-Richtung. Dabei können, wie es in Fig. 6b gezeigt ist, die Segmente jeweils eine Längserstreckungsrichtung aufweisen, die quer zu der lateralen Richtung 305 verläuft. In dem Ausführungsbeispiel von Fig. 6a und 6b sind die Segmente streifenförmig ausgebildet. Gleiches gilt natürlich auch für die Zwischenräume 304 zwischen denselben.

Bei dem verformbaren Element 1201 muss es sich nicht notwendigerweise um eine Platte oder einen Balken handeln. Eine Ausbildung als Schale, Membran oder Stab ist ebenfalls möglich. Insbesondere kann das verformbare Element 1201 wie in dem Fall von Fig. 6a und 6b so aufgehängt und eingespannt sein, dass es durch Anlegen der elektrischen Spannung U entlang einer zu der lateralen Richtung 305 senkrechten lateralen Richtung, hier der y-Richtung, ungekrümmt bleibt. Nachfolgende Ausführungsbeispiele werden aber ebenfalls zeigen, dass das verformbare Element so aufgehängt und eingespannt sein kann, dass es sich bei Anlegen der elektrischen Spannung U zwischen der Elektrode und dem verformbaren Element entlang einer zu der lateralen Richtung 305 senkrechten lateralen Richtung in die gleiche Richtung krümmt wie entlang der lateralen Richtung 305. Das Ergebnis ist eine schüssel- oder helmförmige Krümmung, bei der beispielsweise die Richtung 305 der Radialrichtung entspricht und die vorerwähnte gemeinsame Richtung der Krümmung entlang der Dicke der isolierenden Schicht 303 von der Elektrode 301 zu dem verformbaren Element 1201 weist.

Wie es durch das Koordinatensystem in Fig. 6a und 6b angedeutet ist, kann das mikromechanische Bauelement in einem Substrat, wie z. B. einem Wafer oder einem Chip, so gebildet sein, dass die Elektrode 301 in einer Substratdickenrichtung, d. h. der z-Richtung, oberhalb oder unterhalb des verformbaren Elements 1201 fixiert ist, so dass durch die Verkrümmung des verformbaren Elements 1201 dasselbe aus einer Substratebene, die beispielsweise der Ruhelage des verformbaren Elements 1201 entspricht, heraus verkrümmt wird, nämlich in die Krümmungsrichtung, die in dem Fall von Fig. 6a und 6b in die entgegengesetzte Richtung von z weist. Allerdings werden nachfolgend auch noch alternative Ausführungsbeispiele beschrieben, wonach das mikromechanische Bauelement beispielsweise auch in einem Substrat so gebildet sein kann, dass die Elektrode 301 seitlich an dem verformbaren Element fixiert ist, so dass durch die Verkrümmung des verformbaren Elements dasselbe innerhalb der vorliegenden Substratebene verkrümmt wird.

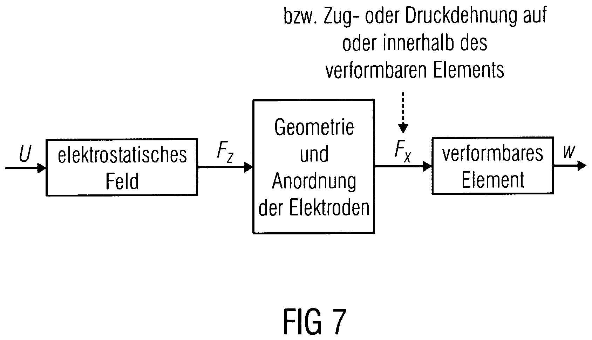

Die Höhe der Auslenkung des Balkens oder der Platte bzw. des verformbaren Elements 1201 kann durch eine Veränderung der elektrischen Spannung aktiv variiert werden. Das zugrundeliegende physikalische Prinzip kann auch durch die Wirkungskette (= Wandlung der physikalischen Größen) in Fig. 7 erklärt werden.

Wie es in Fig. 7 gezeigt ist, erzeugt die elektrische Spannung U ein elektrostatisches Feld, das wiederum dafür sorgt, dass die Elektrode 301 und das verformbare Element 1201 entlang der Dickenrichtung bzw. der z-Achse mit der Kraft $F_z$ zueinander hin gezogen werden, wobei wiederum die Geometrie und Anordnung aus Elektrode 301, verformbarem Element 1201 und isolierender Schicht 303 dafür sorgt, dass auf oder innerhalb des verformbaren Elements bzw. zwischen der Elektrode 301 und dem verformbaren Element 1201 Zug- oder Druckkräfte $F_x$ entstehen, die in dem verformbaren Element eine Verkrümmung w bewirken. Zum leichtern Verständnis wird nachfolgend davon ausgegangen, dass es sich bei dem verformbaren Element 1201 um einen Balken oder eine Platte handelt, wobei aber all diese speziellen Ausführungsbeispiele ohne weiteres auch verallgemeinerbar sind.

Wie zuvor erläutert, kann die Umsetzung der vertikalen Kräfte $F_z$ in lateral wirkende Kräfte $F_x$ signifikant erhöht werden, wenn eine oder beide Elektroden angeschrägt (= angekippt) werden. Die größere Kraftumsetzung ist mit einer höheren Auslenkung der Balken oder Platten verbunden. Beziehungsweise werden geringere elektrische Antriebsspannungen für gleiche Auslenkungen benötigt.

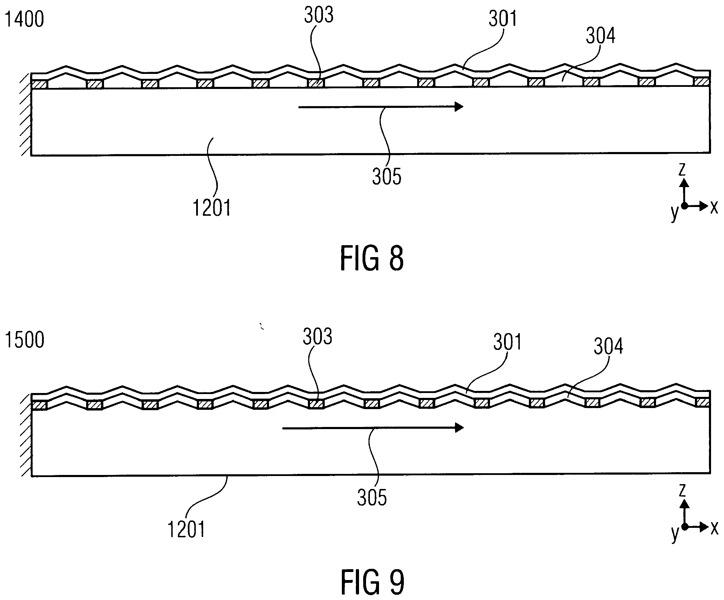

In Fig. 8 ist ein Ausführungsbeispiel gezeigt, wo die obere Elektrode 301 angekippt wurde. Diese Geometrie kann beispielsweise hergestellt werden, indem die Opferschicht zur Erzeugung des Hohlraums 304 bereits in ihrer Schichtdicke vorstrukturiert wird, bevor die Elektrode 301 aufgebracht wird.

Fig. 8 zeigt, dass die Elektrode 301 flächig und zwischen den Segmenten der isolierenden Schicht 303 von dem verformbaren Element 1201 weg gewölbt geformt sein kann. Bei dem Ausführungsbeispiel von Fig. 8 ist, wie es auch bei den Vorbetrachtungen bezüglich der Fig. 1 - 5 der Fall war, die Elektrode 301 so geformt, dass sie zwischen den Segmenten der isolierenden Schicht 303 einen V-förmigen Querschnitt in einer Ebene aufweist, die durch die laterale Richtung 305 und eine Dickenrichtung der isolierenden Abstandshalterschicht 303 aufgespannt wird, d. h. die xz-Ebene. Die Wölbung könnte aber auch anders ausgeführt sein, insbesondere ohne quer zur Richtung 305 verlaufende Kanten bzw. mit einem differenzierbaren Verlauf entlang der Richtung 305. In dem Fall von Fig. 8 umfasst die Elektrode 301 in jedem Zwischenraumabschnitt zwischen den Segmenten der isolierenden Schicht 303 zwei planare Abschnitte, die von unmittelbar benachbarten Segmenten der isolierenden Schicht 303 aufeinander zu und sich von dem verformbaren Element 1201 zunehmend entfernend verlaufen, um sich unter einen Winkel 180° - 2*$\alpha$ zu treffen, wobei die Definition von $\alpha$ aus Fig. 2b bzw. Fig. 3a verwendet worden ist, nämlich so, dass $\alpha$ den Winkel dieser beiden planaren Abschnitte gegenüber der Ebene der isolierenden Schicht 303 angibt. Für jeden Zwischenraum 304 ergibt sich somit eine Kante in der schichtförmigen Elektrode 301, die in der Mitte zwischen den Segmenten der isolierenden Schicht 303 verläuft. Der Winkel α liegt beispielsweise zwischen 1° und 45°, jeweils einschließlich.

Ein Ausführungsbeispiel, wo die Oberfläche der unteren Elektrode bzw. das Balkenmaterial 1201 vorstrukturiert wurde, ist in Fig. 9 gezeigt. Fig. 9 zeigt, dass auch die der Elektrode 301 zugewandte Oberfläche des verformbaren Elements 1201 zwischen den Segmenten der isolierenden Schicht 303 gewölbt geformt sein kann, nämlich, wie es beispielsweise in Fig. 9 gezeigt ist, zu der Elektrode 301 hin gewandt. Die Oberfläche könnte allerdings auch von der oberen Elektrode weggewandt sein, wie es beispielsweise auch in Fig. 2b der Fall war. Prinzipiell sind alle neun Kombinationsmöglichkeiten möglich, wonach die Elektrode 301 planar, zu dem verformbaren Element 1201 hin gewölbt, zu der Elektrode 301 hin oder von derselben weg gewölbt sein kann. Sechs der Möglichkeiten waren in den Fig. 1a - 3b dargestellt. Wie es ebenfalls in Fig. 9 der Fall ist, die insofern dem Beispiel von Fig. 2c entspricht, kann die der Elektrode 301 zugewandte Oberfläche des verformbaren Elements 1201 zwischen den Segmenten der isolierenden Schicht 303 jeweils so geformt sein, dass sie parallel zu der schichtförmigen Elektrode 301 verläuft. Die isolierende Abstandshalterschicht kann planar sein. Wenn sie eine Krümmung aufweist, so ist sie kleiner als die abschnittsweise Krümmung bzw. Wölbung der Elektrode 301 und/oder der entsprechenden Oberfläche des verformbaren Elements 1201.

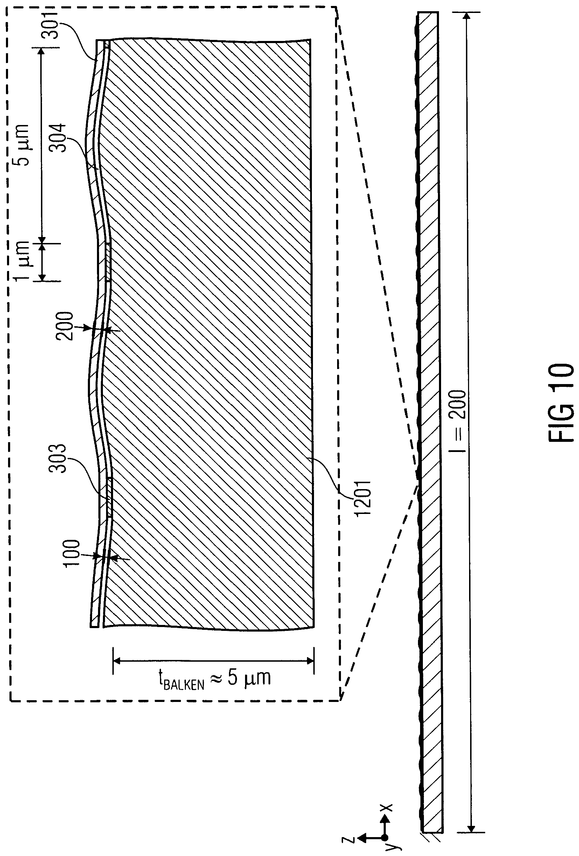

Damit die Größenordnung der soeben beschriebenen Effekte abgeschätzt werden kann, wurde das Ausführungsbeispiel 1500 (in Fig. 9) mit Hilfe einer finiten Elementanalyse untersucht. Hierfür wurde die <u>nicht optimierte</u> Geometrie in Fig. 10 genutzt:

- Ein einseitig eingespannter Balken aus Silizium mit der Länge von 200 μm und einer Dicke von ca. 5 μm stellt die untere Elektrode 1201 dar. Die Oberfläche des Balkens wurde so vorstrukturiert, dass sich ein Böschungswinkel α von 5° ergibt.

- Auf dem Balken befindet sich eine isolierende Schicht 303 aus Siliziumdioxid mit einer Dicke von 100 nm.

- Die obere Elektrode 303 ist 200 nm dick und besteht ebenfalls aus Silizium.

- Der Abstand zwischen den Elektroden ist 100 nm groß. Die einzelnen Elektrodensegmente sind 5 μm lang.

Zwischen den Grenzschichten der Elektroden wurden der Einfachheit halber folgende, von der Auslenkung der Elektroden unabhängig Flächenlasten angelegt:

- Grenzschicht zw. 1201 und 304: $\dfrac{F_z}{A} = \dfrac{1}{2} \cdot U^2 \cdot \dfrac{8,85 \cdot 10^{-12} \frac{As}{Vm}}{\left(100 \ nm\right)^2}$

- Grenzschicht zw. 304 und 301: $\dfrac{F_z}{A} = -\dfrac{1}{2} \cdot U^2 \cdot \dfrac{8,85 \cdot 10^{-12} \frac{As}{Vm}}{\left(100 \ nm\right)^2}$

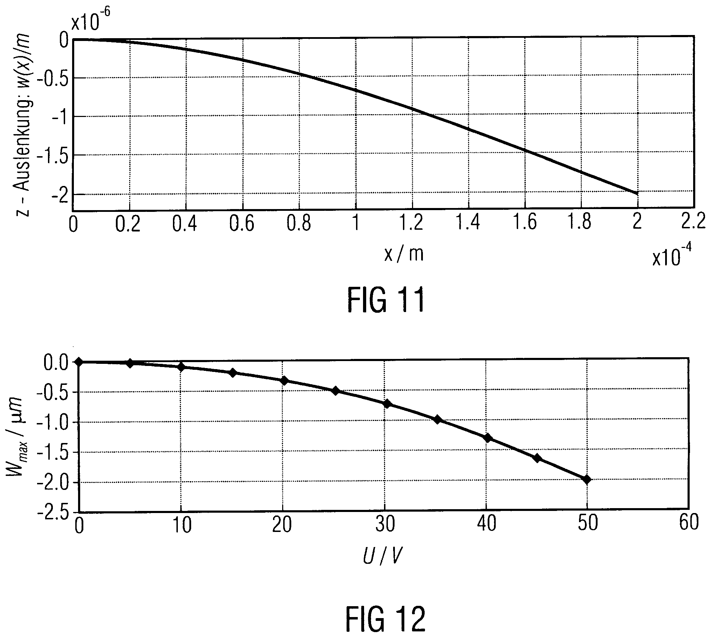

Mit Hilfe des Finiten Element Modells wurde die Auslenkung des Balkens berechnet. Ein beispielhaftes Deformationsprofil des gesamten Balkens bei einer elektrischen Spannung von 50 V ist in Fig. 11 gezeigt (x = 0 ist der Aufhängungsort).

Die maximale Auslenkung am Ende des Balkens in Abhängigkeit der angelegten elektrischen Spannung ist in Fig. 12 gezeigt.

Legt man ein näherungsweise sphärische Deformationsprofil zu Grunde, dann kann aus der maximalen Auslenkung $w_{max}$ des Balkens eine "äquivalente Schichtspannung" σ abgeschätzt werden, welche eine 200 nm dicke Schicht auf einem 5 μm dicken Balken besitzen muss, damit er eine vergleichbare Verkrümmungen erfährt:

$$\sigma = \frac{E_{Balken}}{1 - \nu_{Balken}} \cdot \frac{t_{Balken}{}^2}{6 \cdot t_{Film}} \cdot \frac{2 \cdot w_{max}}{l^2} \ \text{mit:}$$

- $E_{Balken}$ und $\nu_{Balken}$ dem Elastizitätsmodul und der Querkontraktionszahl des Balkens, wobei für (100)- orientiertes Silizium das Verhältnis dieser elastischen Materialwerte isotrop ist: $\dfrac{E_{Balken}}{1-\nu_{Balken}} = 180,5 \, GPa$,

- $t_{Balken}$ der Dicke des Balkens ($t_{Balken} \approx 5 \, \mu m$),

- $t_{Film}$ der Dicke der Schicht, welche aufgrund der mechanischen (Vergleichs-) Spannung den Balken verkrümmen wird ($t_{Film} = 200 \, nm$) und

- 1 der Länge des Balkens (1 = 200 $\mu m$).

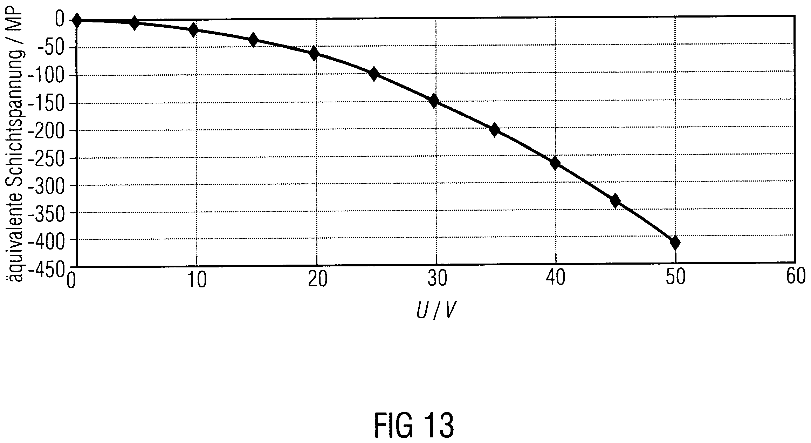

Die für das Beispiel berechnete äquivalente Schichtspannung in Abhängigkeit der elektrischen Spannung ist in Fig. 13 gezeigt:

1. Die Kennlinie verdeutlicht, dass bereits bei kleinen elektrischen Spannungen große äquivalente Schichtspannungen (hier Druckspannung im MPa-Bereich) mit der Geometrie von Fig. 10 erzeugt werden können. Der Effekt ist also signifikant.

2. Der Verlauf der beispielhaften Kennlinie zeigt auch, dass die Nutzung von Plattenkondensatoren für die bi- oder monomorphe Verkrümmung von Platten oder Balken mit einer Verwendung von elektrostriktiven Materialien vergleichbar ist. Bei elektrostriktiven Materialien ist die aktiv erzeugbare Materialdehnung bzw. Materialspannung quadratisch zum elektrischen Feld bzw. quadratisch zur elektrischen Spannung abhängig ($\rightarrow \sigma \sim U^2$). Anders ausgedrückt, kann ein elektrostriktives Material durch die Verwendung der in Fig. 10 gezeigten Plattenkondensatorgeometrien auf oder innerhalb von aktiv auslenkbaren Cantilevers oder anderen verformbaren Elementen substituiert werden. Da für die Herstellung der auslenkbaren Strukturen bzw. des verformbaren Elements Standardmaterialien genutzt werden können, ermöglichen die obigen Ausführungsbeispiele die Nutzung eines mit den elektrostiktiven Effekten vergleichbaren Effektes, ohne dass ein Material mit hoher elektrostiktiver Materialkopplung genutzt werden muss.

In diesem Rechenbeispiel wurden die einzelnen Segmente der oberen Elektrode 301 bei einer elektrischen Spannung von 50 V um weniger als 30 nm in z-Richtung auslenkt. Die Bewegung der Elektroden ist somit noch nicht in den oben beschriebenen, instabilen Pull-in-Bereich gelangt. Gleichzeitig kann man (aufgrund der Kraftumsetzung der erfindungsgemäßen Strukturen) eine Gesamtauslenkung des Balkens von mehr als 2 $\mu m$ beobachten. Die Gesamtauslenkung ist somit wesentlich größer als die maximale Bewegung der Elektroden und sogar wesentlich größer als der Abstand der Elektroden.

Somit lösen die obigen sowie die folgenden Ausführungsbeispiele das oben beschrieben "Dilemma" des Pull-in-Effekts, welches bisher immer in herkömmlichen, elektrostatisch auslenkenden Aktoren auftrat.

Oben vorgestellte Ausführungsbeispiele ermöglichen es also, elektrostatische Felder für die Auslenkung von Mikrostrukturen zu nutzen, wobei die Gesamtauslenkung wesentlich größer als die Abstände der Elektroden sein kann. Dies war bisher nicht möglich. Somit können sehr kleine Elektrodenabstände und demnach auch kleine elektrische Spannungen für die Auslenkung der Mikrostrukturen verwendet werden. Es wird also eine hohe Antriebseffizienz ermöglicht.

Obige Ausführungsbeispiele haben somit auch den Vorteil, dass elektrostatisch auslenkende Mikrostrukturen eine geringe Leistungsaufnahme haben, da nur zum Zeitpunkt der Veränderung des elektrostatischen Feldes ein elektrischer Strom fließt, was gegenüber thermomechanisch, piezomagnetisch oder magnetostriktiv bi- oder monomorph auslenkbaren Balken oder Platten einen großen Vorteil darstellt.

Die kleinen Elektrodenabstände zwischen Elektrode 301 und verformbaren Element 1201 können mit Hilfe der bekannten Opferschichttechnologie relativ einfach hergestellt werden. Es können halbleiterkompatible "Standardmaterialien" zur Herstellung der Strukturen verwendet werden.

Es können aktiv bi- oder monomorph auslenkbare Balken oder Platten als verformbares Element hergestellt werden, ohne dass ein elektroaktives oder magnetoaktives Material eingesetzt wird. Somit wird das Problem der Verwendung von Materialien mit hohen piezoelektrischen, elektrostriktiven, piezomagnetischen oder magnetostriktiven Materialkopplungen gelöst, welche nämlich nicht in halbleiterkompatiblen Fertigungsprozessen verwendet werden dürfen.

Die üblichen piezoelektrischen Materialien, welche zudem auch ferroelektrische Eigenschaften besitzen (wie z. B. PZT oder $BaTiO_3$), besitzen eine Hysterese in der Kennlinie der Materialdehnung gegenüber der elektrischen Feldstärke. Werden mit diesen Materialien Mikrostrukturen ausgelenkt, so besitzt auch die Bauelementkennlinie (Auslenkung in Abhängigkeit der Steuerspannung) eine Hysteresefunktion. Somit ist das Verhalten von piezoelektrisch auslenkbaren Mikrostrukturen nicht determiniert. Unter der Voraussetzung, dass die mechanisch beanspruchten Komponenten der elektrostatisch, bi- oder monomorph auslenkbaren Mikrostrukturen der vorgestellten und noch vorzustellenden Ausführungsbeispiele nicht plastisch verformt werden, besitzt ein solches Mikrosystem hier keine Hysterese. Es kann von einem vorteilhaften, determinierten Bauelementverhalten ausgegangen werden.

Ein einziger Nachteil besteht darin, dass bei Plattenkondensatoren mit sehr geringen Elektrodenabständen Ladungsträger direkt von einer Elektrode zu der gegenüberliegenden Elektrode springen können. Dieser Effekt ist als "Feldemission" bekannt und reduziert infolge des dadurch fließenden, elektrischen Stromes die maximal verwendbare elektrische Spannung. Die Stärke dieses nachteiligen Effektes hängt von den verwendeten Elektrodenmaterialien ab. Dieser nachteilige Effekt kann in seinem Ausmaß begrenzt werden, indem die Elektrodenmaterialien für die Elektrode 301 und das verformbaren Element 1201 geeignet ausgewählt werden oder andere Maßnahmen zusätzlich getroffen werden, wie sie auch noch im Folgenden vorgestellt werden, wie z.B. das Vorsehen dünner isolierender Schichten auf den einander zugewandten Oberflächen der Elektrode bzw. des verformbaren Elements 1201 oder zumindest einer derselben.

Bevor im Folgenden ein beispielhafter Herstellungsprozess für ein mikromechanisches Bauelement gemäß obiger Ausführungsbeispiele beschrieben wird, soll darauf hingewiesen werden, dass das verformbare Element 1201 aus einem leitfähigen Material bestehen kann, d.h. selbst leitfähig sein kann, lokal leitfähig gemacht sein kann, wie z. B. durch Dotierung, oder mit einem leitfähigen Material beschichtet sein kann, wie z. B. mit einer Metallbeschichtung, wie z. B. auf der der Elektrode 301 zugewandten Seite. Das verformbare Element kann aus Halbleitermaterial oder einem anderen geeigneten Material bestehen. Die isolierende Schicht ist ebenfalls hinsichtlich Materialauswahl kaum eingeschränkt. Vorzugsweise besitzt sie eine hohe Steifigkeit und einen hohen elektrischen Widerstand. Die Elektrode 301 kann ebenso wie das verformbare Element aus einem leitfähigen Material bestehen, lokal leitfähig gemacht sein oder mit einem leitfähigen Material beschichtet sein.

Wie es aus der nachfolgenden Erörterung für ein exemplarisches Herstellungsverfahren noch gezeigt wird, kann es sein, dass das verformbare Element einem abgedünnten Bereich eines Substrats, wie z. B. eines Halbleitersubstrats, entspricht, wobei eine nur lokale, wie z. B. einseitige oder zweiseitige Aufhängung, optional auch in Gestalt entsprechender Federelemente, dadurch realisiert sein kann, dass eine sich entlang eines Umfangs des verformbaren Elements erstreckende, in Dickenrichtung durchgehende Öffnung entsprechende Abschnitte des Umfangs von dem ansonsten starren Substrat trennt. Das verformbare Element könnte alternativ allerdings auch dadurch Bewegungsfreiheit besitzen, dass es beispielsweise durch Unterätzen oberhalb einer entsprechend großen Vertiefung in dem Substrat angeordnet ist.

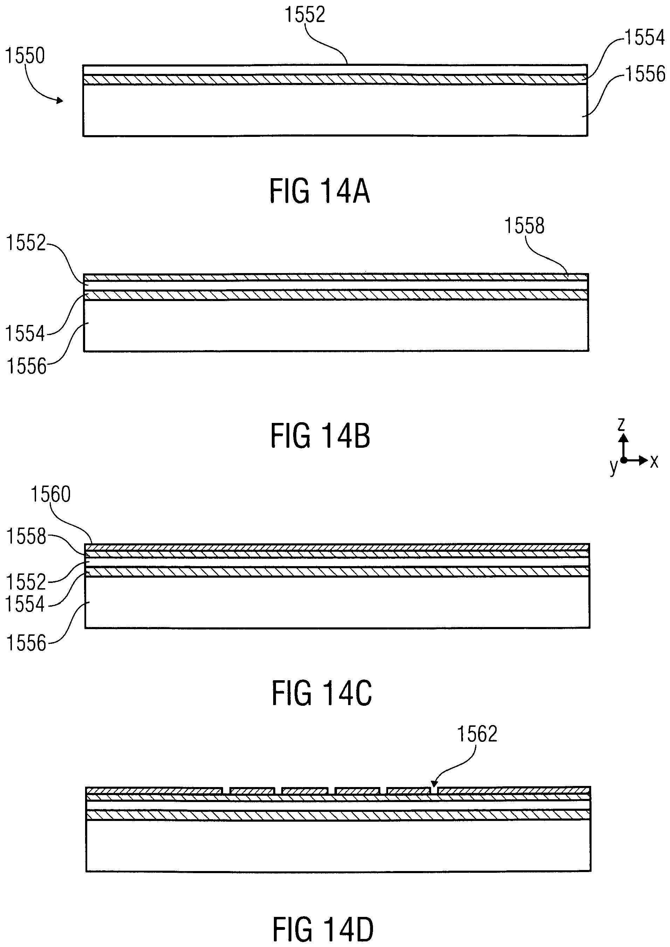

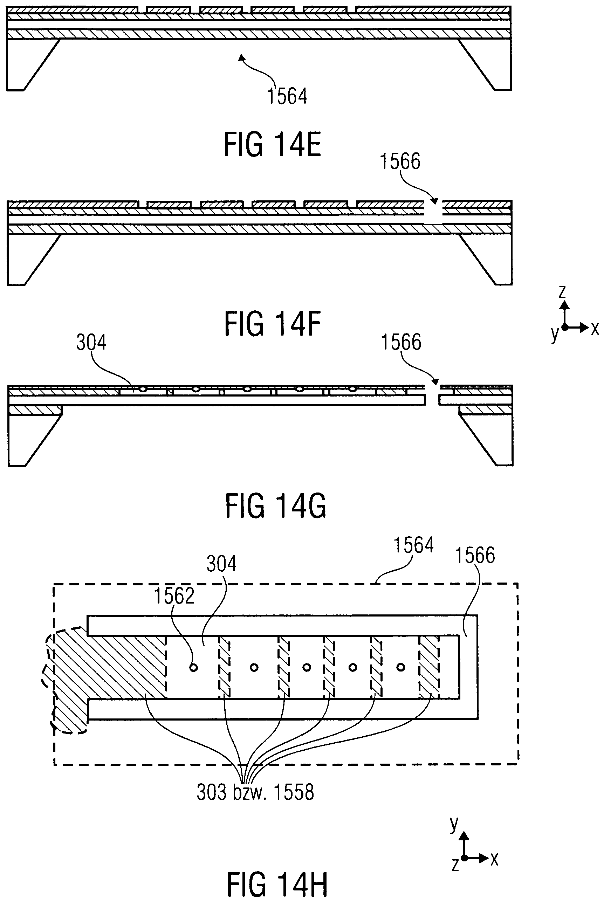

Ein beispielhafter Prozessfluss für die Herstellung der erfindungsgemäßen Strukturen ist in Fig. 14 gezeigt. Der Prozess wird hier exemplarisch mit einem BSOI- (bonded silicon on insulator) Wafer 1550 begonnen (Schritt a)), wobei die SOI- Schicht 1552 (obere Schicht oder device silicon) aus Silizium mit geeigneter Dotierung für eine ausreichend hohe Leitfähigkeit besteht. Anstelle eines BSOI-Wafers könnte es sich natürlich auch um einen anderen SOI-Wafer handeln. Sogar Abwandlungen mit anderen Wafertypen sind ohne weiteres möglich. Wie gezeigt, umfasst der Wafer 1550 einen Schichtstapel, der unterhalb der SOI- bzw. dem Halbleitersubstrat 1552 eine vergrabene Oxidschicht 1554 und ein Trägersubstrat 1556 aufweist. Als erster Prozessschritt b) erfolg die Aufbringung einer Siliziumoxidschicht 1558 z.B. mittels Abscheidung (mit Hilfe der CVD-Abscheidung oder dem thermischen Wachstum), deren Dicke später die den Elektrodenabstand definiert. Im nachfolgenden Schritt c) wird ein geeignetes, leitfähiges Material (z. B. einer Aluminiumlegierung, amorphes Silizium oder amorphes Titanaluminid) abgeschieden, dass später die Elektrode 301 definieren wird, wobei das Material mit 1560 angezeigt ist. Anschließend werden durch geeignete photolithographische Prozessschritte in die oberste Materialschicht 1560 kleine Löcher 1562 (z. B. durch reaktives Ionenätzen (RIE)) für die spätere Opferschichtätzung eingebracht (Schritt d)). Der Abstand, die Anordnung und die Größe der Löcher wird z. B. so gewählt, dass durch die Opferschichtätzung (vgl. Schritt B) die isolierenden Gebiete 303 stehen bleiben. Nachfolgend wird auf der Rückseite des BSOI-Wafers eine geeignete Rückseitenlithographie vorgenommen, so dass im Schritt e) das Handle- bzw. Trägersilizium (= unterste Schicht bzw. Substrat des BSOI-Wafers 1556) durch nasschemische Verfahren (TMAH- oder KOH-Ätzung), aber evtl. auch durch tiefen, reaktives Ionenätzen (DRIE) über einer geeigneten Lack- oder Hartmaske geätzt werden kann. Es entsteht ein großer, durch die Rückseitenlöcher in einer in Fig. 14e nicht gezeigten Maske definierter Bereich 1564 mit dünnen, freitragenden Membranen oberhalb der Grube 1564. Im Folgeschritt f) wird für die Umrandung des Cantilevers (oder einer anderen auszulenkenden Mikrostruktur) eine Ätzung einer oder mehrerer offenen Gräben (= Trenche) 1566 vorgenommen. Die dafür notwendige Ätzmaske kann aber auch schon vor Schritt e) aufgebracht sein und die Ätzung der SOI-Schicht 1552 kann durch RIE, DRIE, aber evtl. auch rein chemisch (z. B. durch $XeF_2$ - Gas) erfolgen. Im Releaseschritt g) wird die Opferschichtätzung der obersten $SiO_2$-Schich 1558 durchgeführt. Es wird auch die vergrabene Oxidschicht 1554 geätzt, so dass die Gräben 1566 zu durchgehenden Öffnungen werden. In Fig. 14h ist eine Draufsicht gezeigt, aus der die Struktur des verformbaren Elements als Cantilever bzw. einseitig eingespannter Balken bzw. Platte klarer herauskommt. Eine geeignete Ätzlösung strömt hierbei durch die im Schritt d) eingebrachten Ätzlöcher 1562 und untergräbt die obere Elektrodenschicht 301 bzw. 1562, um die Zwischenräume 304 zu bilden. Theoretisch kann man hierfür nasschemische Verfahren (z. B. mit BOE) verwenden, was aber aufgrund der starken Oberflächenkräfte von Flüssigkeiten und die damit einhergehende mechanische Beanspruchung der dünnen, freiliegenden Sturkuren nicht ratsam ist (sog. Sticking-Effekte können auftreten). Als gute Alternative ist die SiO$_2$ - Opferschichtätzung mit Hilfe dampfförmiger Fluorwasserstoff (Dampf-HF) bekannt und kann für eine isotrope Unterätzung der oberen Elektroden 301 genutzt werden. Diese Dampf-HF - Ätzung sollte durch entsprechend gewählte Ätzdauer so vorgenommen werden, dass das isolierende Material 303 bzw. 1558 in ausreichender Breite stehen bleibt.

Der zuvor und in Fig. 14 vorgestellte "Basisprozess" kann durch folgende Erweiterungen, oder Änderungen angepasst oder verbessert werden:

- Anstatt den Abscheidungen b) und c) kann auch ein Mehrfach-BSOI-Wafer (BSOISOI-Wafer) verwendet werden. Die obere Elektrode 301 besteht demnach auch aus Silizium, die für die Opferschichtätzung benötigte Schicht ist die obere SiO$_2$-Schicht innerhalb des Mehrfach-BSOI-Wafers und der Cantilever bzw. die auszulenkende Mikrostruktur wird durch die mittlere Siliziumschicht realisiert. Der Vorteil dieses Ansatzes ist, dass die mechanisch beanspruchten Elemente aus einkristallinem Silizium hergestellt werden können. Einkristallines Silizium ist durch seine hervorragende mechanische Festigkeit in der Mikroaktorik sehr bekannt (und "beliebt").

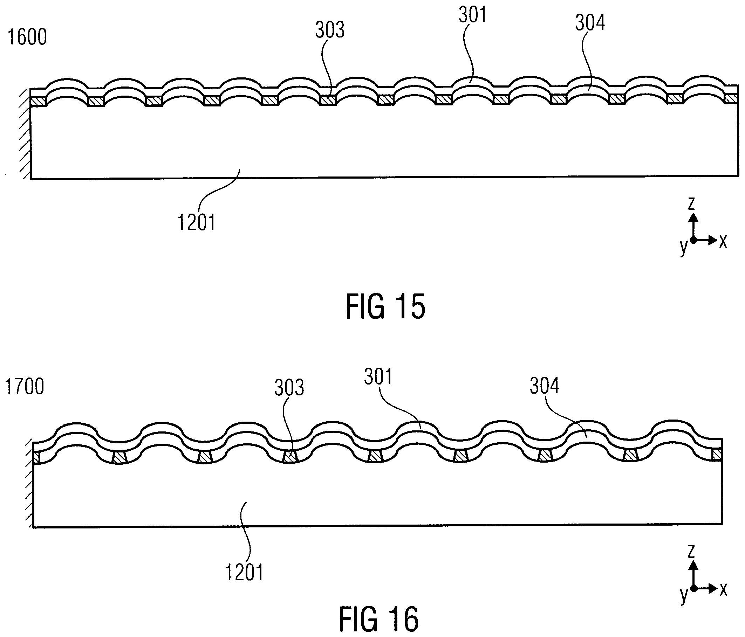

- Angewinkelte Elektroden 301 aber auch die Herstellung der komplexen, z. B. sinusförmigen Elektrodengeometrien (siehe Fig. 15 und 16 im Folgendem) können durch eine geeignet hergestellte Vorstrukturierung der SOI-Schicht 1560 realisiert werden. Hierfür wird vor dem Schritt b) die obere Siliziumschicht (SOI) mit Hilfe nass- oder trockenchemischer Verfahren und über Graustufenlithographie oder evtl. auch Nanoimprintverfahren strukturiert. Speziell der in den erfindungsgemäßen Beispielen (z. B. in 1100 in Fig. 5) gezeigte Winkel von 54,7° kann durch eine TMAH - Ätzung in einkristallinem, 100-orientiertem Silizium erzeugt werden.

- Zudem kann auch die obere Opferschicht 1558 durch ein geeignetes formgebendes Verfahren vor der Abscheidung der oberen Elektrode 301 in Schritt c) strukturiert werden, damit weitere komplexe Elektrodengeometrien hergestellt werden können. Beispielsweise kann eine sinusförmige Elektrodengeometrie durch ein Verfließen von Siliziumdioxid bei hohen Temperaturen, welche über der Glasübergangstemperatur liegt, ermöglicht werden. Hierfür werden in die SiO$_2$ - Schicht z. B. durch ein geeignetes Trockenätzverfahren Stufen hineingeätzt. Bei einer Erwärmung dieser recheckförmigen SiO$_2$ - Stufen oberhalb der Glasübergangstemperatur beginnt das Material verstärkt zu fliesen und ist aufgrund energetischer Bedingungen bestrebt seine Oberfläche zu minimieren. Bei geeigneter Wahl von Stufenabstand und -höhe sowie Erwärmungsdauer entspricht die energetisch günstige minimale Oberfläche einem sinusförmigen Verlauf.

Die folgenden Ausführungsbeispiele 1600 bis 2100 (in Fig. 15 bis 20) für elektrostatisch auslenkbare Balken decken nur einige, aber nicht alle möglichen Geometrievariationen ab, sollen aber zur weiteren Veranschaulichung dienen. Zuvor wird aber auf Folgendes hingewiesen.

Beispielsweise ist es möglich, wie in Fig. 15 gezeigt und worauf auch schon im Vorhergehenden hingewiesen worden ist, dass die Wölbungen der Elektrode 301 und/oder der derselben zugewandten Seite des verformbaren Elements 1201 zwischen den Segmenten der isolierenden Schicht 303 weniger V-förmig als vielmehr abgerundet sind. Wie es Fig. 16 zeigt, ist es dabei nicht notwendig, in den Flächenabschnitten der Segmenten der isolierenden Schicht 303 selbst die Elektrode 301 und die derselben zugewandte Seite des verformbaren Elements 1201 planar auszuführen. Vielmehr kann sich die Welligkeit von Elektrode 301 und/oder der derselben zugewandten Seite des verformbaren Elements 1201 kontinuierlich über mehrere Segmente der isolierenden Schicht 303 und deren Zwischenräume 304 erstrecken. Die isolierende Schicht 303 bzw. deren Segmente können aber, wie es in den Ausführungsbeispielen gezeigt ist, in einer gemeinsamen Ebene, d.h. planar, gebildet sein, so dass sich für jede Wölbung der Elektrode 301 und/oder der derselben zugewandten Seite des verformbaren Elements 1201 auch eine entgegengesetzt ausgeführte Wölbung an den Stellen der Segmente der isolierenden Schicht 303 vorhanden ist.

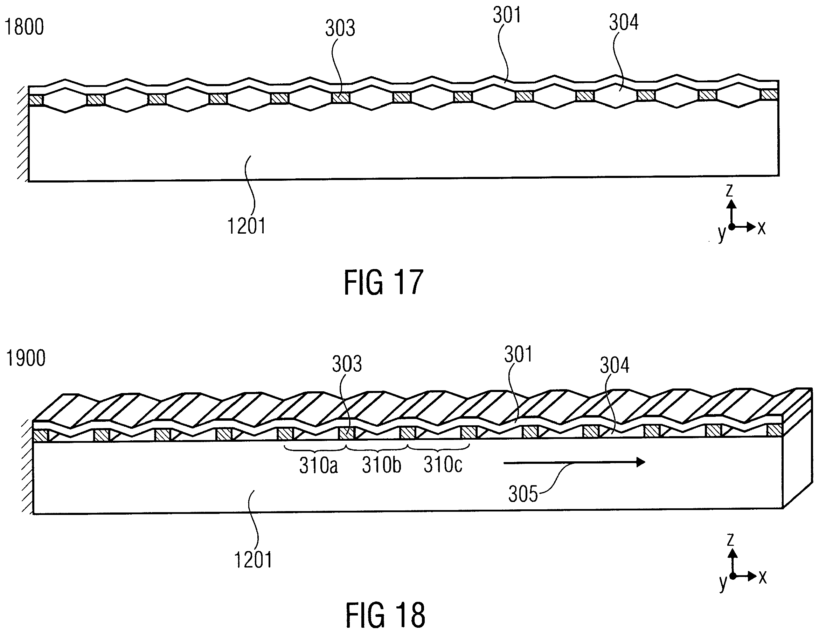

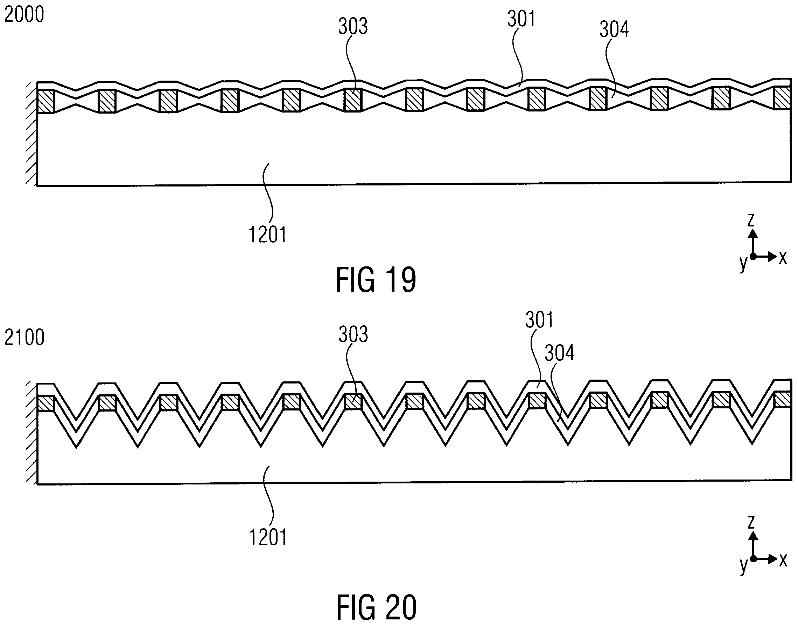

Fig. 17 zeigt, worauf bereits auch schon im Vorhergehenden hingewiesen worden ist, nämlich, dass den Vorüberlegungen in Fig. 2b entsprechend die in Fig. 17 exemplarisch V-förmigen Wölbungen der Elektrode 301 und der derselben zugewandten Oberfläche der verformbaren Struktur 1201 voneinander wegweisend ausgeführt sein können. Die Fig. 18 und 19 zeigen weitere Möglichkeiten für mikromechanische Bauelemente 1900 bzw. 2000, die hinsichtlich der Wölbung der oberen Elektrode 301 bzw. der derselben zugewandten Seite der verformbaren Struktur 1201 den Fallgestaltungen von Fig. 3a bzw. 3b entsprechen. Fig. 20 zeigt noch ein mikromechanisches Bauelement 2100, bei dem die Abschnitte zwischen den Segmenten der isolierenden Schicht 303 der Fallgestaltung von Fig. 5 entsprechend gebildet sind, so dass sich durch Anlegen einer Spannung zwischen der Elektrode 301 und dem verformbaren Element 1201 eine Verformung des verformbaren Elements 1201 in Richtung der z-Achse, d. h. nach oben in Fig. 20, ergibt, nämlich aufgrund einer Querkontraktion der einzelnen Abschnitte zwischen den Segmenten der isolierenden Schicht 303.

Bezug nehmend auf die vorhergehende Beschreibung wird noch auf Folgendes hingewiesen. Die bisherigen Ausführungsbeispiele zeigten sämtlich, dass die periodischen Abschnitte, die in Fig. 18 exemplarisch für drei Abschnitt mit 310a, 310b und 310c angegeben sind und sich zwischen den unmittelbar benachbarten Segmenten der isolierenden Schicht 303 erstrecken, immer gleich aufgebaut waren, d. h. hinsichtlich der Auswahl der Fallgestaltung aus beispielsweise einer der Fig. 1a - 5, dem Abstand der Segmente in der Richtung 305, bis hin zu den Abmessungen der Querschnitte der Zwischenräume 304. Dies ist aber nicht notwendigerweise so. Über die einzelnen Abschnitte 310a - 310c hinweg können Abmessungen oder Fallgestaltungen hinsichtlich Wölbung von Elektrode 301 bzw. der derselben zugewandten Oberfläche des verformbaren Elements 1201 auch variiert werden. Fig. 18 ist exemplarisch als ein Raumbild gezeichnet und aus dieser Figur wird deutlich, dass vorzugsweise die einzelnen Segmente der isolierenden Schicht 303 voneinander völlig getrennt sind und auch am Rand bzw. am lateralen Außenumfang des verformbaren Elements 1201 getrennt bleiben, so dass die Zwischenräume 304 an den Enden quer zur Richtung 305 bzw. den Enden, die quer zur Richtung 305 einander gegenüber liegen, offen sind.

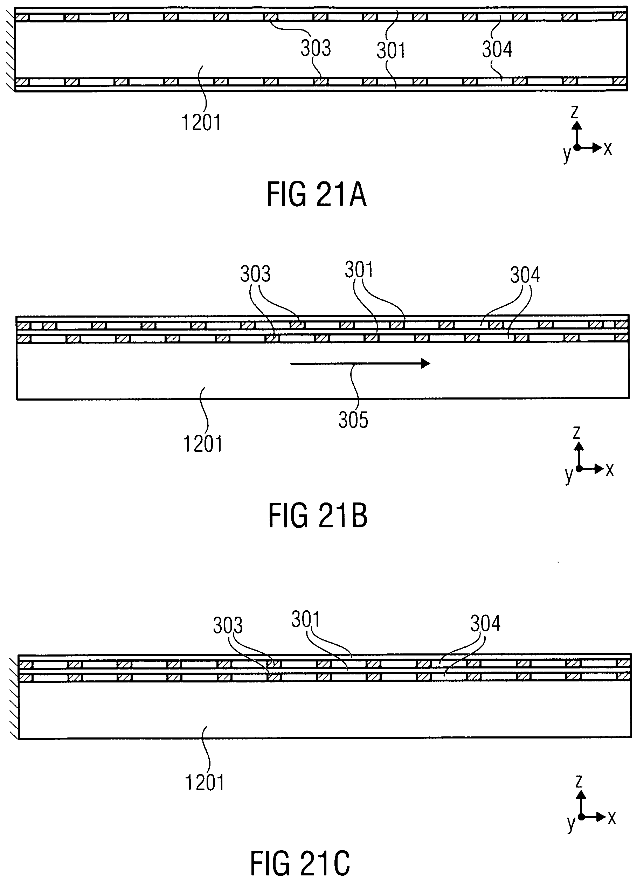

Zudem wird daraufhingewiesen, dass bei den bisher beschriebenen Ausführungsbeispielen die periodischen Plattenkondensatoranordnungen stets nur auf einer der Hauptseiten des verformbaren Elements 301 angeordnet waren. Es ist aber ebenfalls möglich, dass diese periodisch wiederkehrenden Plattenkondensatoranordnungen auf der Oberseite und der Unterseite des verformbaren Elements bzw. über und unterhalb der neutralen Phase des verformbaren Elements angeordnet sind. Dies ist in Fig. 21a gezeigt. Wenn, wie in Fig. 21a gezeigt, auf der Oberseite und auf der Unterseite des verformbaren Elements 1201 ein elektrostatischer Aktor für die Erzeugung von lateraler Druckspannung angebracht ist, d. h. die einzelnen Abschnitte zwischen den Segmenten der isolierenden Schicht 303 den Fallgestaltungen für eine positive Querkontraktion entsprechen, dann kann das verformbare Element 1201 bzw. der Balken oder die Platte je nach Adressierung der Elektroden 301 in beide Richtung, d. h. in Fig. 21a nach oben oder nach unten (oder auch resonant schwingend), ausgelenkt werden. Entsprechendes gilt auch, wenn oben und unten die Plattenkondensatoren für eine laterale Zugspannung ausgebildet sind bzw. den Fallgestaltungen für eine negative Querkontraktion entsprechen.

Im Fall von Fig. 21a verkrümmt sich der Balken 1201 nach oben, wenn eine Spannung zwischen der oberen Elektrode 301 und dem verformbaren Element 1201 angelegt wird, und nach unten, wenn diese Spannung zwischen der unteren Elektrode 301 und Element 1201 angelegt wird, während keine Spannung an dem jeweils anderen Elektrodenpaar anliegt. Allerdings wäre es ebenfalls möglich, dass auf der Oberseite des verformbaren Elements 1201 die Plattenkondensatoranordnungen für eine Zugspannung bzw. für eine negative Querkontraktion und auf der Unterseite für eine laterale Druckspannung bzw. eine positive Querkontraktion ausgebildet sind. In diesem Fall wäre eine Auslenkung des verformbaren Elements verstärkbar bzw. es könnte bei gleicher elektrischer Antriebsspannung die Auslenkung erhöht werden. Sowohl zwischen die obere Elektrode 301 und das verformbaren Element 1201 als auch zwischen das verformbaren Element 1201 und die untere Elektrode 301 würde in diesem Fall gleichzeitig jeweils eine Spannung angelegt werden. Die umgekehrte Konfiguration wäre natürlich ebenfalls möglich, wonach oben die Kondensatoranordnungen für eine positive Querkontraktion und unten für eine negative Querkontraktion ausgelegt wären.

Zudem wäre es möglich, mehrere Ebenen von Plattenkondensatoranordnungen aufeinander zu stapeln, um auf diese Weise einen Mehrfachaktor zur Verstärkung des Verkrümmungseffektes zu ergeben. Die Möglichkeiten hierfür sind in den Fig. 21b und 21c gezeigt. Beide Figuren zeigen, dass neben der ersten Elektrode 301 eine weitere Elektrode 301 existiert, die über eine weitere isolierende Abstandshalterschicht 303 auf einer dem verformbaren Element 1201 abgewandten Seite der ersten Elektrode 301 fixiert ist, wobei die weitere isolierende Abstandshalterschicht 303 ebenfalls entlang der lateralen Richtung in mehrere voneinander beabstandete Segmente strukturiert ist. In Fig. 21b sind die Segmente der weiteren Elektrode 301 lateral in Zwischenräumen der Segmente der ersten Elektrode 301 positioniert, während im Fall von Fig. 21c die Segmente der beiden isolierenden Schichten 303 lateral zueinander ausgerichtet sind, so dass sie einander über die erste Elektrode 301 gegenüber liegen, ebenso wie die entsprechenden Zwischenräume 304 zwischen denselben.

Die Fallgestaltung nach Fig. 21b, nach der die Aktorelemente um jeweils eine halbe Rasterbreite gegenüber den darunterliegenden Aktorelementen versetzt angeordnet sind, verringert die mechanische Wechselwirkung der Aktorschichten. Zur Verkrümmung wird in der Fallgestaltung nach Fig. 21b und 21c eine Spannung sowohl zwischen den Elektroden 301 einerseits als auch zwischen der ersten Elektrode 301 und dem verformbaren Element 1201 andererseits gleichzeitig angelegt, wodurch sich der Verkrümmungseffekt, wie beschrieben, verstärken lässt.

Bisherige Ausführungsbeispiele zeichneten sich dadurch aus, dass durch den horizontalen Aufbau der elektrostatischen Antriebe ein Balken oder eine Platte aus der Ebene heraus verkrümmt und somit in z-Richtung ausgelenkt werden kann. Dies wurde unter anderem durch die schematischen Koordinatensysteme verdeutlicht, wobei die x-y-Ebene parallel zur Substratebene lag. Der Grund hierfür war die relativ einfache Herstellung der geringen Elektrodenabstände mit Hilfe einer dünnen Opferschicht.

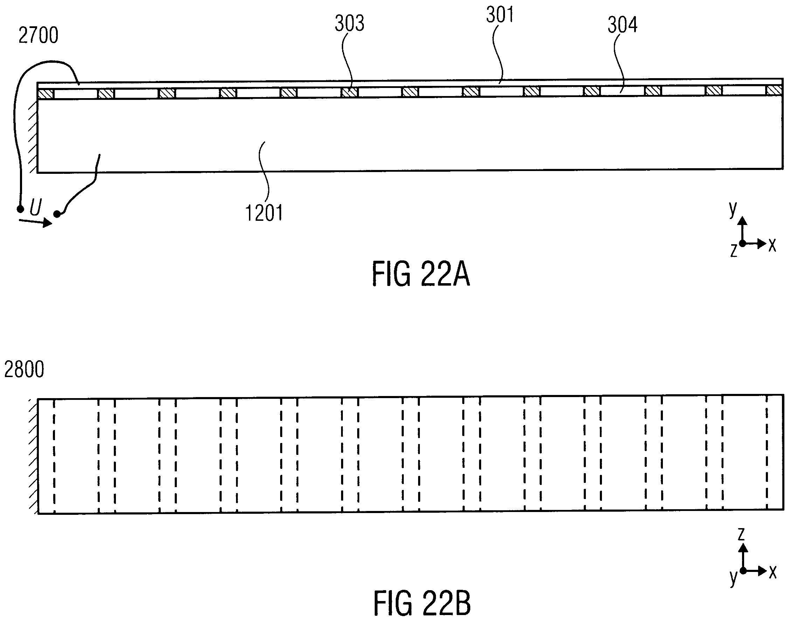

Prinzipiell ist es aber auch möglich, die Aufbauten verkippt, wie in Fig. 22 gezeigt, aufzubauen. Die Elektrodenflächen 301 und 1201 werden hier orthogonal zur Substratebene angeordnet. Somit können Mikrokomponenten auch innerhalb der Chipebene (z. B. in y-Richtung in Fig. 22) ausgelenkt werden.

Mit dem mikromechanischen Bauelement von Fig. 22 ist also auch eine Auslenkung des verformbaren Elements 1201 in der Ebene des Substrats, in welcher dasselbe gebildet ist, möglich. Ein mögliches Herstellungsverfahren wird im Folgenden noch beschrieben.

Eine bi- oder monomorphe Auslenkung von Mikrostrukturen innerhalb einer Ebene war bisher nur mit Hilfe der thermischen Anregung (z. B. [19] oder mit dem Hot-Arm-Prinzip: [20]) möglich. Soweit bekannt, können die elektro- oder magnetoaktiven Effekte hier nicht genutzt werden, da es schwierig ist entsprechende Materialien mit den benötigten Schichteigenschaften z. B. an die Seitenwand von Balken abzuscheiden. Gegenüber der thermomechanischen Anregung besitzen die elektrostatisch mono- oder bimorph auslenkbaren Aktoren eine geringe Leistungsaufnahme. Somit kann eine energieeffiziente, mono- oder bimorphe Auslenkung von Mikrostrukturen innerhalb der Chipebene ermöglicht werden. Dies war bisher nicht möglich.

Im Folgenden wird nun ein beispielhafter Herstellungsprozess für das Ausführungsbeispiel von Fig. 22 mit Auslenkung innerhalb einer Chipebene beschrieben.

Die Herstellung dieser Strukturen ist zwar nicht so einfach wie für die Fig. 1 - 21c, jedoch mit Hilfe der für Mikrosysteme üblichen Technologien nicht unmöglich. Vor allem durch die fortschreitende Verkleinerung der minimalen Strukturbreiten in der Mikroelektronik ist zu erwarten, dass laterale Strukturbreiten im 100-ter nm-Bereich auch in der Mikrosystemtechnik nutzbar werden. Derzeit sind in der Mikrosystemtechnik minimale Strukturauflösungen von ca. 1 $\mu$m üblich.

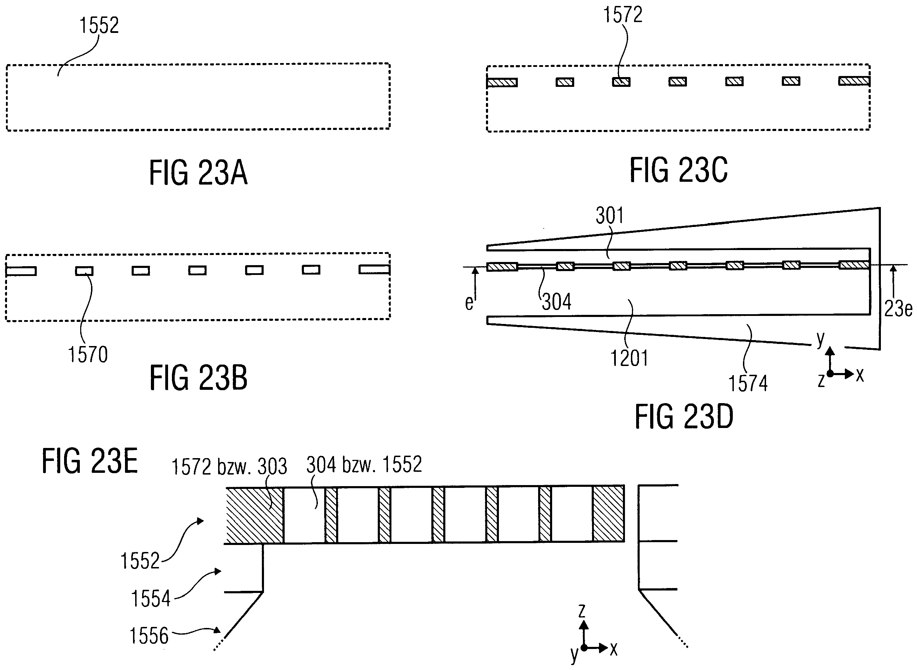

Fig. 23 zeigt einen beispielhaften, vereinfachten Prozessfluss der erfindungsgemäßen vertikal aufgebauten Strukturen. Hier werden in das Device-Silizium 1552 eines geeigneten Wafers (z. B. BSOI-Wafer) kleine Löcher 1570 mit Hilfe des tiefen, reaktiven Ionenätzens (DRIE) eingebracht (Schritt b)). Die Löcher 1570 dienen als die Segmente der isolierenden Schicht 303 bzw. als die Orte derselben. Im Folgeschritt c) werden die kleinen Löcher 1570 z. B. mit Hilfe einer CVD-Abscheidung oder des thermischen Wachstums mit Siliziumoxid oder einem anderen isolierenden Material verfüllt. Danach kann durch eine Strukturierung mit ausreichend hoher lateraler Strukturauflösung der Raum 304 zwischen den Elektroden 301 und 1201 mit Hilfe z. B. der DRIE - Technologie geätzt werden. Bei diesem Schritt d) ist es auch möglich, zeitgleich die Kontor 1574 der auszulenkenden Mikrostrukturen (z. B. die Umrandung eines Balkens) mit DRIE zu ätzen. Die in Subtratdickerichtung durchgehende Öffnung 1574 definiert aber nicht nur die Kontur des verformbaren Elements, sondern auch den auslenkbaren Weg des verformbaren Elements, weshalb die Öffnung 1574 in Fig. 3d großzügiger ausfällt. In Fig. 23e ist der Endzustand aus Fig. 23d in einem Seitenschnitt gezeigt. Wie es daraus hervorgeht, kann es sein, dass die Elektrode und das verformbare Element 1201 inklusive der dazwischen befindlichen isolierenden Abstandshalterschicht 303 nur in der SOI-Schicht 1552 des Wafers bzw. des Substrats gebildet sind, wobei die vergrabene Oxidschicht 1554 und das Trägersubstrat 1556 an dieser Stelle lokal entfernt sein können, um die Bewegung des verformbaren Elements 1201 freizugeben. Es kann allerdings auch sein, dass nur die vergrabene Oxidschicht 1554 entfernt ist, wohingegen das Trägersubstrat 1556 unter dem verformbaren Element verbleibt. Schließlich muss es sich auch nicht unbedingt um einen SOI-Wafer handeln.

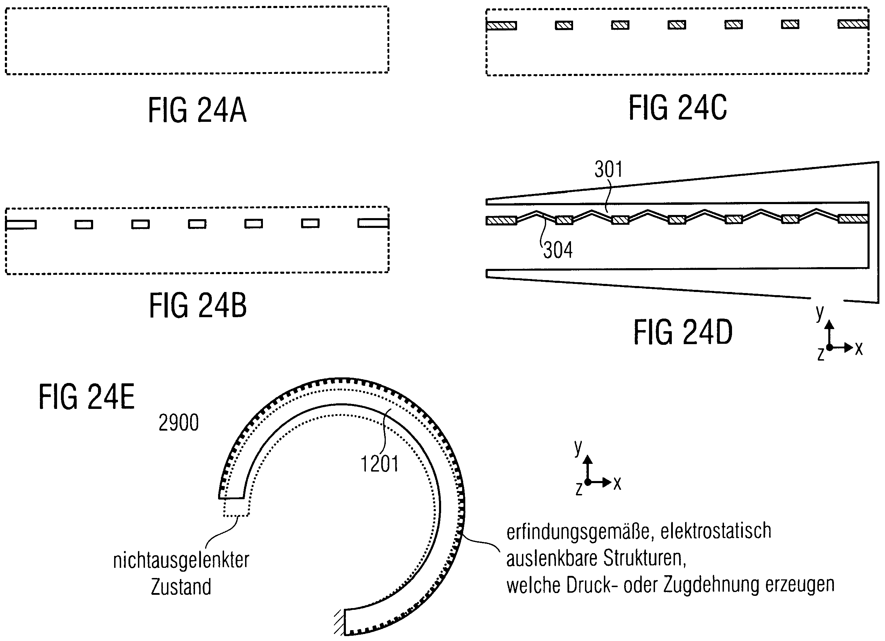

Wie in Fig. 24a verdeutlicht, ist es möglich durch die laterale Strukturierung (und anschließender Ätzung) beliebige Formen der Freiräume 304 aber auch beliebige Formen der oberen Elektrode 301 zu gestallten. Somit können alle im Vorhergehenden gezeigten Ausführungsbeispiele mit Auslenkung in z-Richtung auch hier hergestellt werden. Zudem sind auch die in Fig. 15 - 21c gezeigten Kombinationen sowie Mehrschichtaktuatoren sowie Kombinationen von Aktoren für die Erzeugung lateraler Zug- oder Druckdehnung auf- und unterhalb der neutralen Faser möglich und ohne zusätzlichen Aufwand umsetzbar.

Der in Fig. 24 gezeigte Prozessfluss verdeutlicht, dass er für die In-plane-Auslenkung beliebig komplexer Mikrostrukturen geeignet ist. In Fig. 24 wird dies anhand eines ringförmigen Balkens verdeutlicht. Dieser Balken ist an einem Ende fest eingespannt. Werden die elektrostatischen Aktoren außerhalb der neutralen Faser (in der Nähe des Rands) des Balkens angebracht, so ändert sich der Radius des ringförmigen Balkens aufgrund einer steuerbaren elektrischen Spannung. Das freie Ende des Balkens führt eine laterale Bewegung innerhalb der Chipebene aus.

Beliebige andere Formen einer auf diese Art auszulenkenden Mikrostruktur sind aber ebenfalls möglich.

Im Folgenden werden nun Ausführungsbeispiele beschrieben, bei denen obige Ausführungsbeispiele bei speziellen Anwendungen verwendet werden. Dabei werden die bisher gezeigten Strukturen 1200 - 2100 innerhalb aktiv auslenkbarer Mikrobauteile genutzt. Der folgende Abschnitt zeigt die Verwendung der zuvor gezeigten elektrostatisch auslenkbaren Balken und Platten anhand einiger Beispiele. Die Beispiele sind natürlich nicht vollständig, sollen aber die Verwendungsvielfalt der oben gezeigten mikromechanischen Bauelemente bzw. von Abwandlungen davon veranschaulichen.

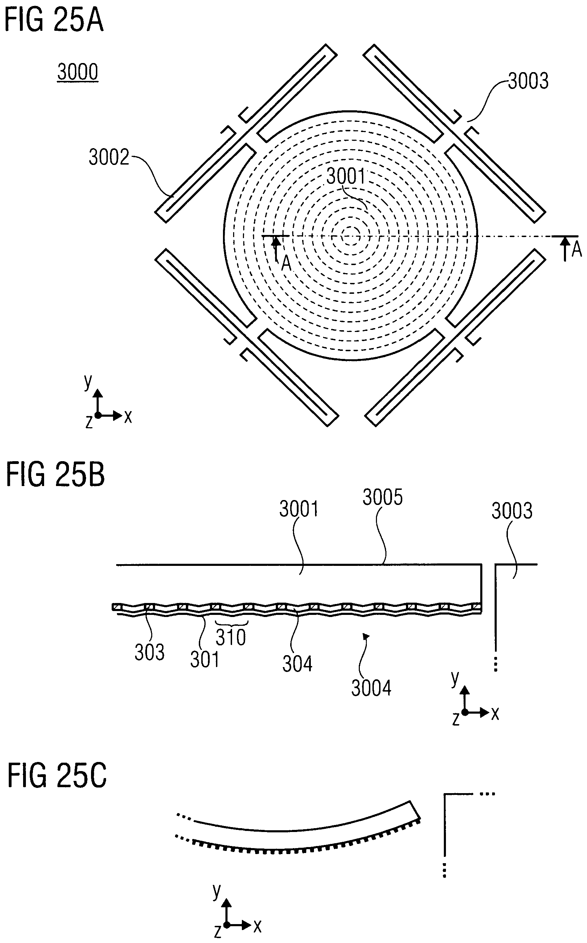

Bei dem Ausführungsbeispiel von Fig. 25 wird beispielsweise ein mikromechanisches Bauelement ähnlich demjenigen der im Vorhergehenden beschriebenen Ausführungsbeispiele verwendet, um einen aktiv krümmbaren Mikrospiegel für eine aktive Fokusvariation zu ergeben. Als verformbares Element dient eine Spiegelplatte mit runder Kontur, die geeignet aufgehängt ist, wobei an einer Rückseite derselben Segmente einer isolierenden Abstandshalterschicht kreisförmig und konzentrisch zueinander und zu der Kontur der Spiegelplatte gebildet sind, über die eine Elektrode an der Rückseite der Spiegelplatte fixiert ist. In Analogie zu den vorhergehend beschriebenen Ausführungsbeispielen existiert somit eine laterale Richtung, nämlich die Radialrichtung, entlang der die Abstandshalterschicht strukturiert ist und entlang der die Spiegelplatte verkrümmt werden kann, und zwar je nach Ausgestaltung der Plattenkondensatorabschnitte für eine positive oder negative Querkontraktion zu einem Hohl- bzw. Sammelspiegel oder Zerstreuungsspiegel.

In Fig. 25 ist stellvertretend ein Ausführungsbeispiel eines elektrostatisch, aktiv verkrümmbaren Mikrospiegels für die aktive Fokusvariation gezeigt. In diesem Bild sind die dünnen schwarzen Linien offene, geätzte Gräben, welche die Geometrie des Festkörpers (zwischen den Linien) definieren. Die kreisrunde Spiegelplatte 3001 ist hier über vier elastische Federelemente 3002 mit einem festen Rahmen 3003 verbunden. An der Unterseite 3004 der Spiegelplatte ist beispielhaft die Struktur 1500 angebracht (siehe Fig 25b). Das Anlegen einer elektrischen Spannung zwischen den beiden Elektroden 301 und 3001 der elektrostatisch auslenkbaren Struktur bewirkt eine laterale Druckdehnung auf der Unterseite 3004 der Platte. Infolge der lateralen Druckdehnung wird die Platte schüsselförmig verkrümmt, was in Fig 25c gezeigt ist. Sind die lateralen Geometrien der einzelnen Plattenkondensatorsegmente 310 klein gegenüber dem Gesamtmaß der Platte 3001 und zudem gleichmäßig verteilt, dann kann von einer näherungsweise homogenen, radial wirkenden Oberflächendruckdehnung auf der Unterseite 3004 der Platte 3001 ausgegangen werden. Durch diese homogene Oberflächendehnung erhält man eine näherungsweise sphärische Deformation der Platte 3004.

Ist auf der Oberfläche 3005 der Platte eine Reflexionsschicht aufgebracht, so kann die Struktur 3000 für die aktive Fokusvariation von Licht verwendet werden. Hier wird die Änderung der Fokuslänge des Hohlspiegels durch eine Veränderung der elektrischen Spannung erreicht.

Mögliche Erweiterungen des Beispiels von Fig. 25 sind Folgende:

- Werden Strukturen verwendet, welche durch die elektrische Spannung laterale Zugdehnung generieren, auf der Unterseite der Spiegelplatte 3001 angebracht, so erfährt die Spiegelplatte eine helmförmige Verkrümmung. Die helmförmige Verkrümmung kann unter Umständen auch für die aktive Fokusvariation von Licht mit Hilfe eines geeigneten optischen Systems genutzt werden.

- Es können alle erfindungsgemäßen Strukturen 1200 bis 2100 prinzipiell auch auf der Oberseite der Spiegelplatte angebracht sein. Nachteilig ist jedoch, dass diese erfindungsgemäßen Strukturen (außer 1200) aufgrund der angewinkelten Elektrodensegmente 301 eine Oberflächentopologie besitzen. Je nach verwendeter Wellenlänge des zu fokussierenden Lichtes, kann diese Oberflächentopologie zu meist unerwünschten Beugungs- und Streueffekten im reflektierten Lichtstrahl führen. Sollen demnach die Strukturen auf der Oberfläche von verkrümmbaren Spiegelplatten angeordnet werden, kann es von Vorteil sein, wenn auf der oberen Elektrode 301 in den Strukturen 1300 bis 2100 eine weitere Planarisierungsschicht aufgebracht wird. Dies kann beispielsweise durch Abscheidung einer geeigneten Dünnschicht und Planarisieren mit Hilfe des in der Mikrosystemtechnik bekannten Verfahrens des chemischmechanischen Polierens (CMP) vorgenommen werden.

- Es ist auch möglich mit Hilfe einer segmentierten Anordnung der Strukturen 1200 bis 2100, oder mit einer Segmentierung mind. einer der Elektroden 301 oder 1201 und entsprechender elektrischer Beschaltung lokale Bereiche mit unterschiedlich hoher Druck- oder Zugdehnung auf oder unter der Spiegelplatte zu erzeugen. Damit wird die Spiegelplatte lokal unterschiedlich stark verkrümmt. Mit diesem Prinzip erhält man einen Mikrospiegel zur gezielten (nicht nur rein defokussierenden) Beeinflussung der Wellenfront von Licht (sog. adaptiv optischer Spiegel = AO-Spiegel).

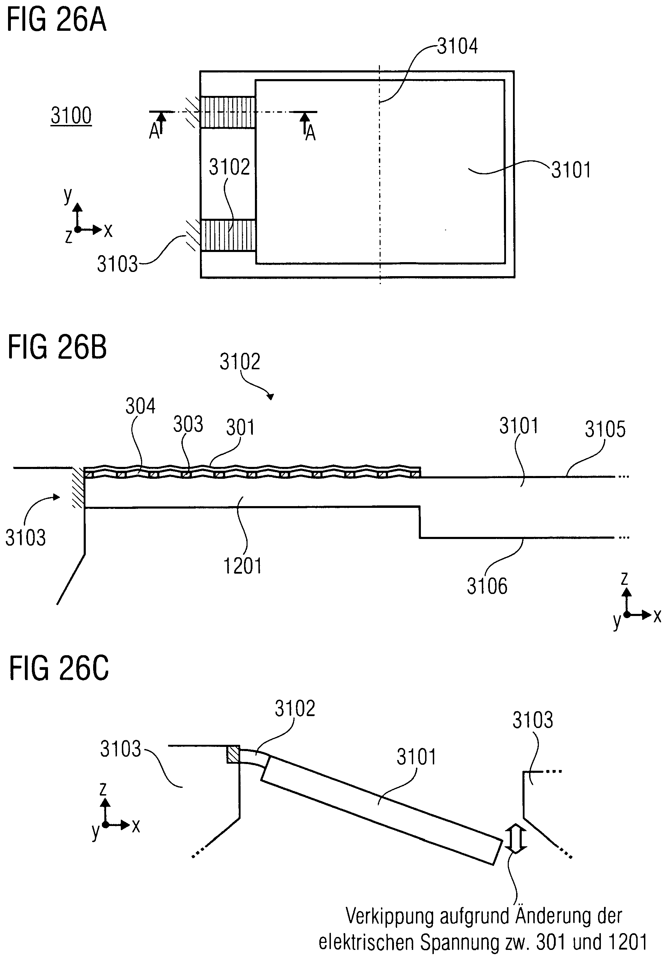

Bezug nehmend auf Fig. 26 wird im Folgenden ein Ausführungsbeispiel beschrieben, wonach ein Mikrokippspiegel für eine räumliche Ablenkung von Licht unter Zuhilfenahme obiger Ausführungsbeispiele für ein mikromechanisches Bauelement erhalten wird. Bei diesem Ausführungsbeispiel bildet das verformbare Element eine Feder, über die die Spiegelplatte verkippbar aufgehängt ist. Die Verkrümmung des Federelements bzw. des verformbaren Elements ergibt die Verkippung.

Die einfache Möglichkeit, um Platten mit Hilfe bi- oder monomorph auslenkbarer Balkenstrukturen aktiv verkippen zu können, ist in Fig. 26a - 26c gezeigt. Hier wird die (hier beispielsweise rechteckförmige) Spiegelplatte 3101 über einen oder mehreren balkenförmigen Federelemente 3102 mit einem festen Rahmen 3103 verbunden. Abermals werden die Kräfte des elektrostatischen Feldes der Strukturen 1200 bis 2100 genutzt (hier exemplarisch die Struktur 1500). Dafür werden diese Strukturen auf, innerhalb oder auf der Unterseite der balkenförmigen Federelemente 3102 angebracht. Die durch die elektrischen Spannungen erzeugten Zug- oder Druckdehnungen führten hier wiederum zu einer aktiven Verkrümmung der Federelemente 3102. Infolge dessen wird die an dem Federelementen befestigte Platte 3101 verkippt, wie es in Fig 26c gezeigt ist. Besitzt diese Platte eine geeignete Verspiegelungsschicht an der Oberseite 3105 und/oder der Unterseite 3106, so kann sie zur räumlichen Ablenkung von Licht (z. B. eindimensionaler Lichtscan oder Strahlpositionierung innerhalb einer Ebene) genutzt werden. Die Auslenkung des Spiegels kann quasistatisch, aber auch resonant-oszillierend geschehen.

Bei der in Fig. 26 gezeigten Möglichkeit einer elektrostatisch bi- oder monomorph verkippbaren Spiegelplatte ist nachteilig, dass es keine zentrale Drehachse gibt. Das heißt, dass die Drehachse des Kippspiegels nicht mit einer Symmetrieachse der Spiegelplatte 3104 zusammenfällt. Die nachfolgenden Ausführungen von Mikrokippspiegeln für die räumliche Ablenkung von Licht besitzen eine zentrale Drehachse.

Es wird noch darauf hingewiesen, dass, wie es in Fig. 26b und 26c gezeigt ist, das Federelement bzw. das verformbare Element eine gegenüber der Spiegelplatte 3101 reduzierte Dicke aufweist, so dass die Spiegelplatte 3101 steifer und somit gegenüber Verformungen resistenter ist, und andererseits das Federelement bzw. verformbare Element leichter verformbar ist. Dies ist aber nicht zwingend erforderlich.

Bei dem resonanten Antrieb wird die Spannung zwischen der Elektrode 301 und dem verformbaren Element 1201 in Form einer Wechselspannung mit einer Frequenz angelegt, die im Bereich der mechanischen Resonanzfrequenz des Feder-Masse-Systems aus dem Gewicht der Platte 3101, der Feder und dessen Rückstellkraft in Form der verformbaren Elemente 1201 definiert ist.

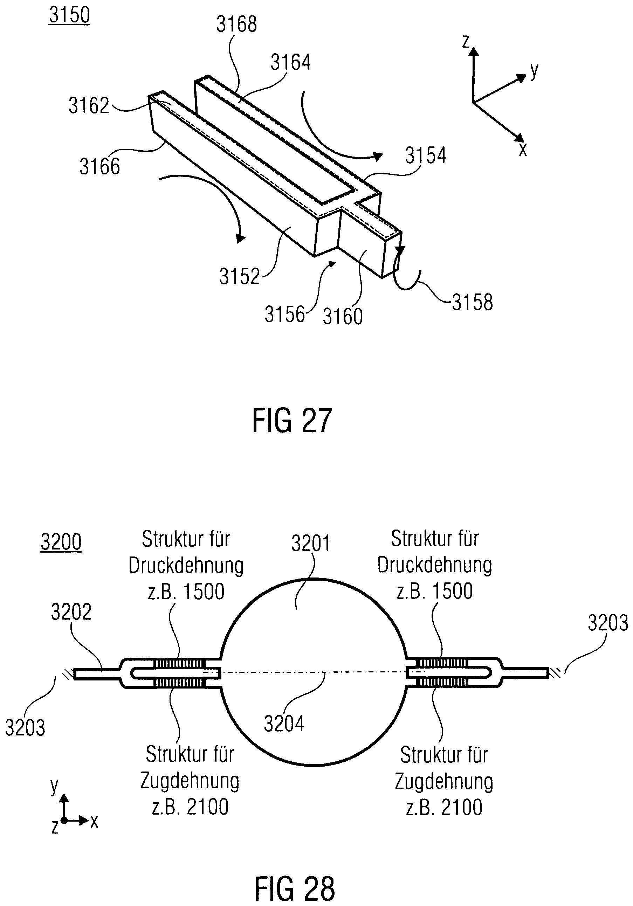

Eine mögliche Struktur, um das für das Verkippen von (Spiegel-) Platten benötigte Drehmoment mit Hilfe von mono- oder bimorph auslenkbarer Parallelbalkenstrukturen zu erzeugen, ist in Fig. 27 gezeigt. Bezüglich des Prinzips wird auch auf [18] verwiesen. Hier wird auf jedem Ansteuerschaltungsteil 3152 und 3154 der Parallelbalkenstruktur 3150 eine Struktur gemäß einem der obigen Ausführungsbeispiele mit aktiv einstellbarer Materialdehnung aufgebracht. Ist die Höhe der aktiv einstellbaren Materialdehnungen der aktiven Schichten auf den Balken verschieden (z. B., wie in Fig. 27, Bsp. 1, gezeigt durch unterschiedliche Vorzeichen der Dehnung), dann wird an der Verbindungsstelle 3156 beider Balken ein Drehmoment 3158 erzeugt.

In anderen Worten ausgedrückt zeigt Fig. 27 eine Parallelbalkenstruktur 3150, die zur Aufhängung von verkippbaren Platten verwendet werden kann, wie z. B. achsenparallel zu einer Spiegelachse der Platte. Die Balkenstruktur 3150 besitzt zwei parallel zueinander angeordnete Balken 3152 und 3154. An einem Ende dieser Balken 3152 und 3154 entlang ihrer Erstreckungsrichtung sind dieselben an einer Verbindungsstelle 3156 miteinander verbunden, um entweder von da ab über einen gemeinsamen Verbindungsbalken 3160 mit der zu verkippenden Struktur, die in Fig. 27 nicht gezeigt ist, verbunden zu sein, oder unmittelbar mit der zu verkippenden Struktur. An den gegenüberliegenden Enden sind die Balken 3152 und 3154 fest mit dem Rahmen, der in Fig. 27 wieder nicht gezeigt ist, verbunden. Die Balken 3152 und 3154 sind auf ihrer Oberseite 3162 bzw. 3164 und/oder ihrer Unterseite 3166 oder 3168, d. h. in Seiten, die die einander zugewandten und einander abgewandten Seitenflächen der Balken 3152 und 3154 miteinander verbinden, mit einer der obigen Strukturen aus Segmenten der isolierenden Schicht 303 und der Elektrode versehen, damit einer der Balken 3152 in die entgegengesetzte z-Richtung verkrümmbar, wie in Fig. 27 der Balken 3152, und der andere in die entgegengesetzte Richtung, d. h. die z-Richtung, in Fig. 27 der Balken 3154, verkrümmbar ist, indem eine entsprechende Spannung angelegt wird. Durch die gegenseitige Verkrümmung der Balken kommt es zu dem Drehmoment 3158 und damit auch zu einer Drehung des aufgehängten Elements, wie z. B. einer Spiegelplatte.

Mit der in Fig. 27 gezeigten Parallelbalkenstrukturen 3150 mit Strukturen 1200 bis 2100 kann ein aktiv auslenkbarer Kippspiegel, wie in Fig. 28 gezeigt, realisiert werden. Bei dem elektrostatisch auslenkbaren Kippspiegel von Fig. 28 ist die beispielsweise kreisrunde Spiegelplatte 3201 über zwei Y-förmigen, flexiblen Parallelbalkenstrukturen 3202 (= Y-förmige Federelemente), die der Struktur 3156 in Fig. 27 entsprechen, mit dem festen Rahmen 3203 verbunden. Oberhalb, innerhalb und/oder auf der Unterseite jedes Balkens der Federelemente 3202 befinden sich die elektrostatisch, mono- oder bimorph auslenkbaren Plattenkondensatorantriebe. Durch eine Veränderung der elektrischen Spannung kann die Spiegelplatte aus der Ebene heraus verkippt werden, wobei die Kippachse 3204 mit der zentralen Symmetrieachse der Spiegelplatte 3204 zusammenfällt, wobei die Spiegelplatte 3201 an gegenüberliegenden Seiten entlang dieser Achse 3204 über die Y-förmigen Federelemente 3202 aufgehängt ist.

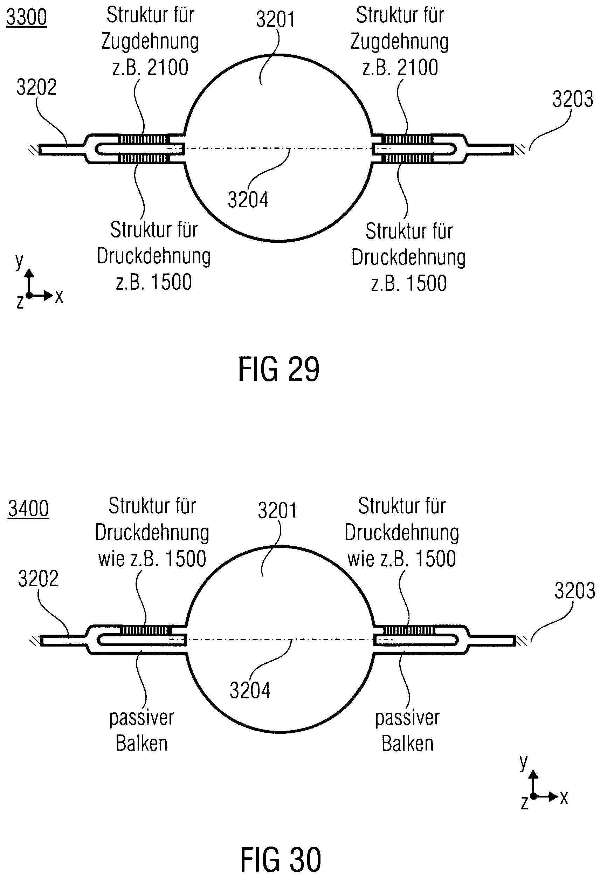

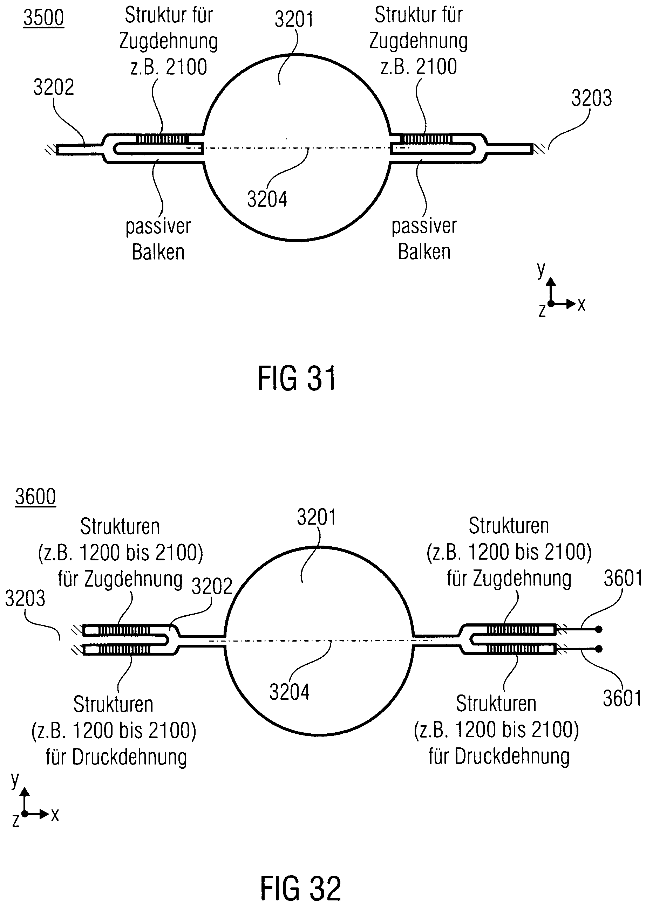

Das Beispiel 3200 in Fig. 28 besitzt zwei Unteraktortypen, welche Zug- oder Druckspannung erzeugen. Es sind zudem weitere Kombinationen möglich: Eine Vertauschung der erfindungsgemäßen, elektrostatisch auslenkbaren Cantilever 1200 bis 2100 ist möglich, was in Fig 29 gezeigt ist. Es ist zudem auch möglich, nur eine Seite der Y-förmigen Aufhängung der Spiegelplatte zu nutzen, was in Fig. 30 und 31 gezeigt ist.

Es ist zudem möglich, zusätzlich oder alternativ die Strukturen zur Druck- oder Zugdehnungserzeugung auf der Rückseite vorzusehen, d. h. auf der dem Spiegel abgewandten Seite.

Es kann sinnvoll sein, die in den Fig. 28 - 31 gezeigte Y-förmige Aufhängung 3202 der Spiegelplatte um 180° zu verdrehen, damit die elektrische Kontaktierung der elektrostatischen Aktoren einfacher realisiert werden kann. In Fig. 32 ist dies stellvertretend für alle zuvor erläuterten Kombinationen 3200 bis 3500 gezeigt. Hier kann die elektrische Verdrahtung der oberen Elektroden 301 der elektrostatischen Antriebe durch eine Leiterbahn 3601 realisiert werden, welche über die Balkenstruktur zum festen Rahmen geführt wird. Die zweite Kontaktebene 1201 kann durch ein entsprechend leitfähiges Substrat für alle Aktoren gemeinsam realisiert werden.

Wie schon zu Fig. 45 verdeutlicht wurde, ist die maximale Auslenkung mit Hilfe bei mono- oder bimorphen ausgelenkten Platten und Balken quadratisch abhängig von deren Strukturlänge 1. Große Auslenkungen können nur mit langen Blaken erreicht werden. Bei den soeben vorgestellten Ausführungsbeispielen von elektrostatisch auslenkbaren Kippspiegeln ist daher der laterale Platzbedarf aufgrund der benötigten lateralen Abmessungen Parallelbalkenstrukturen 3202 nachteilig. Einen Mikrokippspiegel mit kompakterem Antrieb wird im folgenden Abschnitt vorgestellt.

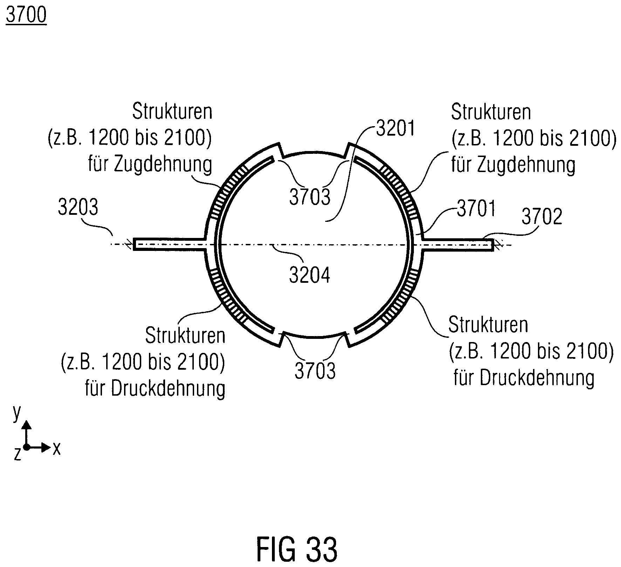

Ein mögliches Ausführungsbeispiel für einen Mikrokippspiegel für die räumliche Ablenkung von Licht, bei welchem die elektrostatischen Aktorkomponenten auf (in oder unterhalb) Federelementen platziert wurde, welche verteilt am Rand einer beispielsweise runden Spiegelplatte angreifen, ist in Fig. 33 gezeigt. Diese Ausführungsform ist als "verteilte Federn" bekannt. Auch die Platzierung von Aktorkomponenten auf den verteilten Federn war schon Gegenstand einer Patentanmeldung und ist ausführlich in der Patentanmeldung DE 102008049647 dargelegt. Hier sind wieder die elektrostatisch aktiv auslenkbaren mono- oder bimorphen Balkenstrukturen 1200 bis 2100 für die Auslenkung der Spiegelplatte genutzt worden.

Bei dem Ausführungsbeispiel von Fig. 33 ist eine hier exemplarisch kreisförmige Spiegelplatte 3201 über Torsionsfedern, die entlang der Kipp- und Spiegelachse 3204 verlaufen, aufgehängt, wobei aber die Torsionsfedern 3702 nicht unmittelbar an Punkten entlang des Umfangs der Spiegelplatte 3201 an derselben angreifen, die auf der Kippachse liegen, sondern an entlang des Umfangs von der Achse 3204 entfernten Punkten 3703. Zu diesen Punkten 3703 entlang des Umfangs führen von den Torsionsfedern 3702 jeweils eine so genannte verteilte Feder 3701, die jeweils balkenförmig ausgebildet und gemäß einer aktiv verkrümmbaren Struktur gemäß einem der obigen Ausführungsbeispiele aus Fig. 1 - 22 gebildet ist. Ein gleichzeitiges Anlegen einer Spannung an die Strukturen bewirkt eine Verkippung des Spiegels 3201 um die Achse 3204, wenn Zugdehnungserzeugungsstrukturen auf einer lateralen Seite und Druckdehnungserzeugungsstrukturen auf der anderen lateralen Seite relativ zu der Achse 3204 für die verteilten Federn 3701 verwendet werden, wie es in Fig. 33 gezeigt ist. Die verteilten Federn 3701 führen also balkenförmig entlang des Umfangs der Platte 3201 von der sich entlang der Achse 3204 erstreckenden jeweiligen Torsionsfeder 3702 zu den achsentfernten Punkten 3703 entlang des Umfangs der Platte 3201.

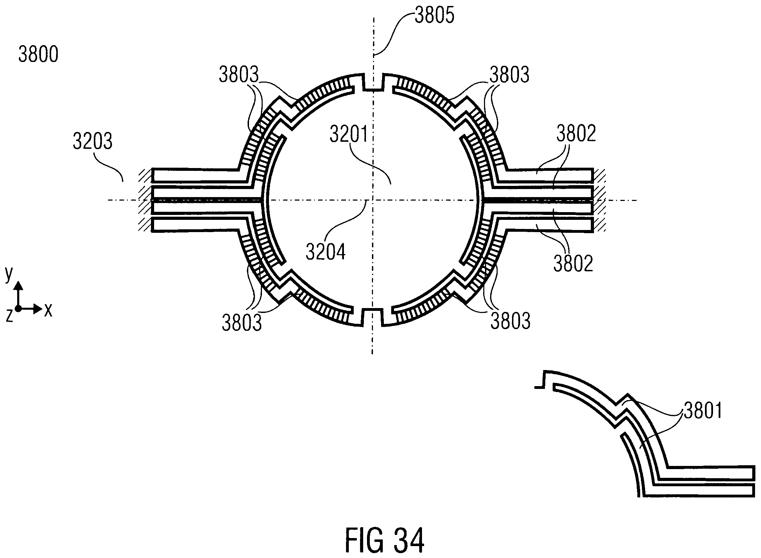

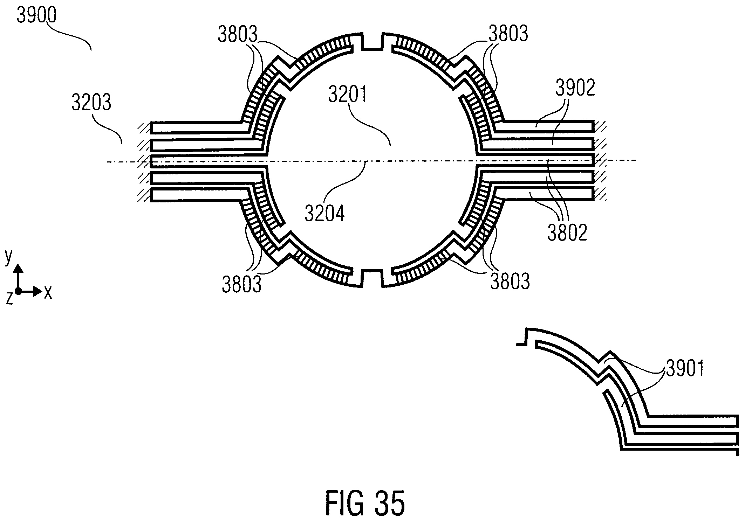

Zwei weitere Ausführungsbeispiele einer kreisrunden Spiegelplatte, bei welcher die elektrostatischen Aktorkomponenten 3803 gemäß obiger Ausführungsbeispiele an mindestens einer von 12 möglichen Orten auf, in oder unterhalb der verteilten Federn 3801 oder 3901 platziert werden können, sind in Fig. 34 und Fig. 35 gezeigt.

Die Ausführungsbeispiele der Fig. 34 und 35 machen deutlich, dass auch bereits in dem Ausführungsbeispiel von Fig. 33 die verteilten Federn nicht von einer gemeinsamen Torsionsachse ausgehen müssen, sondern dass jede verteilte Feder seine eigene Torsionsachse aufweisen kann. In dem Fall von Fig. 34 und 35 ist beispielsweise die Spiegelplatte 3201 spiegelsymmetrisch zu einer Achse 3805, die senkrecht zur Kippachse 3204 verläuft und ebenfalls eine Symmetrieachse der Spiegelplatte 3201 darstellt, über acht verteilte Federn 3803 aufgehängt, die an acht unterschiedlichen, zu der Kippachse 3204 symmetrischen Orten entlang des Umfangs der Spiegelplatte 3201 an letzterer angreifen und sich entlang des Umfangs der Spiegelplatte 3201 von den Angriffsorten entlang des Umfangs der Spiegelplatte 3201 zu der Kippachse 3204 hin erstrecken, um sich von dort aus über die Torsionsfedern 3802 zu der Aufhängung 3203 zu erstrecken, wobei jeder verteilten Feder 3803 eine jeweilige Torsionsfeder 3802 zugeordnet ist, wobei letztere parallel zu der Kippachse 3204 verläuft. Insgesamt existieren somit bei den acht verteilten Federn 3082 zwölf Abschnitte, die Strukturen für eine Druckdehnungs- oder Zugdehnungserzeugung gemäß einer der Strukturen 1200 - 2100 aufweisen können, und zwar, wie es bereits erwähnt worden ist, entweder auf der Vorderseite oder der Rückseite oder auf beiden. Das Verkippungsprinzip bei den Ausführungsbeispielen der Fig. 34 und 35 ist ansonsten das gleiche wie bei dem Ausführungsbeispiel nach Fig. 33. Die Verteilung möglicher Antriebsstrukturen gemäß 1200 - 2100 der vorhergehenden Ausführungsbeispiele auf die vorerwähnten zwölf möglichen Abschnitte der verteilten Federn 3803 bieten sich insbesondere folgende Kombinationen vorteilhaft an:

- Aktoren für Zugdehnung sind oberhalb der Torsionsachse 3204 und Aktoren für Druckdehnung sind nur unterhalb der Torsionsachse 3204 angebracht.

- Wie zuvor, bloß Zug- und Druckdehnung vertauscht bzw. Anordnung um 180° gedreht.

- Ausschließlich Aktoren für Zugdehnung sind nur oberhalb oder nur unterhalb der Torsionsachse 3204 angebracht.

- Ausschließlich Aktoren für Druckdehnung sind nur oberhalb oder nur unterhalb der Torsionsachse 3204 angebracht.

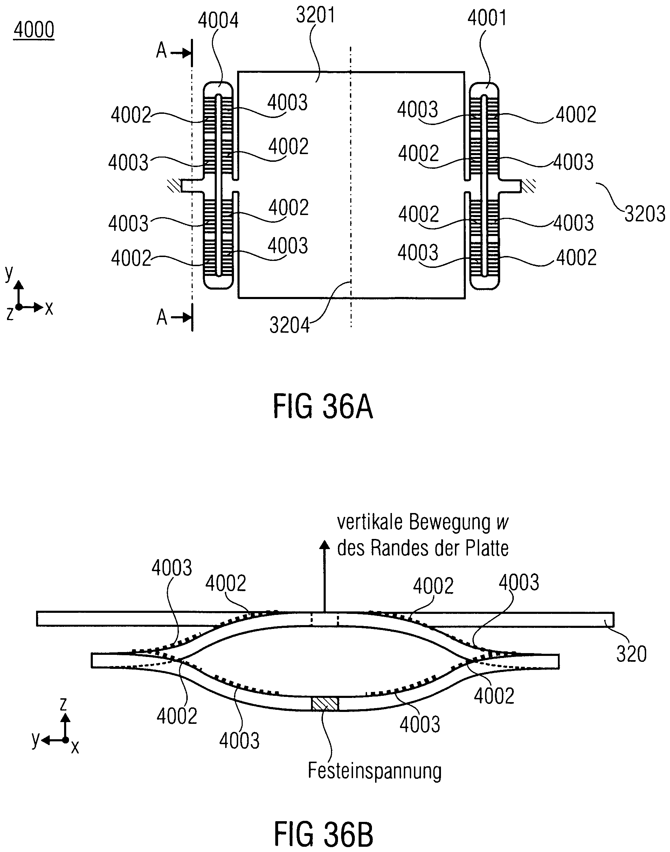

Im Folgenden werden Beispiele für Mikrokipp- und Hubspiegel beschrieben. Insbesondere wird ein Ausführungsbeispiel eines Kippspiegels beschrieben, welcher zugleich auch als Senkspiegel mit einer Translationsbewegung in z-Richtung bzw. Substratdickenrichtung genutzt werden kann. Ein solcher ist in Fig. 36 gezeigt.

Hier ist die beispielsweise rechteckige Spiegelplatte (3201) an zwei □-formigen Federelementen 4001 und 4004 befestigt. Auf, in oder unterhalb der □-förmigen Federelemente befinden sich bis zu 16 Stück der erfindungsgemäßen, elektrostatisch bimorph auslenkbaren Strukturen (1200 bis 2100). Eine aktiv einstellbare laterale Dehnung in diesen Strukturen führt zu einer S-förmigen Verwölbung der Balken der □-förmigen Federelemente (siehe Schnitt A-A in Fig. 36b), woraufhin der Rand der Spiegelplatte eine Auslenkung in z-Richtung erfährt. Wird nur ein Federelement (z. B. 4004) ausgelenkt, so wird die Spiegelplatte um ihre Drehachse 3204 verkippt. Eine Schwingbewegung dieser Spiegelplatte kann man auch durch abwechselnde Auslenkung beider Federelemente 4001 und 4004 ermöglichen. Werden beide □-förmigen Federelemente gleichzeitig ausgelenkt, so wird die gesamte Spiegelplatte angehoben. Die Platte kann somit als Hubspiegel genutzt werden.

Mit anderen Worten ausgedrückt zeigt das Ausführungsbeispiel von Fig. 36 eine Spiegelplatte 3201, die an gegenüberliegenden Seiten entlang des Umfangs derselben aufgehängt ist, und zwar über □-förmige Federelemente 4001 und 4004. Jedes □-förmige Federelement 4001 und 4004 besitzt zwei Hälften, die jeweils U-förmige Federabschnitte aufweisen, die mit der offenen Seite des U's einander zugewandt sind. Mit den offenen Enden der U's sind die Hälften mit der Spiegelplatte 3201 und der Aufhängung 3203 verbunden. Eine Auslenkung der Spiegelplatte 3201 aus ihrer Ruhelage, indem der Punkt, an dem ein jeweiliges Federelement mit dem Rand der Spiegelplatte 3201 verbunden ist, bewirkt eine Verkrümmung der U-förmigen Hälften der Federelemente, wie sie in Fig. 36b dargestellt ist. An jeder U-förmigen Hälfte 4005 ergeben sich sequentiell angeordnete vier Abschnitte von dem Verbindungspunkt 4006 entlang des Rands der Platte 3201 zu dem Aufhängungsort 3203, die abwechselnd zueinander entgegengesetzte Krümmungen bzw. Krümmungen in entgegengesetzte Richtungen erfahren, wie es in Fig. 36b ersichtlich ist. Zwei dieser vier Abschnitte befinden sich an einem Bein 4007 der U-förmigen Hälfte 4005 und die anderen zwei an dem anderen Bein 4008 der U-förmigen Hälfte 4005. Die Beine 4007 und 4008 sind, wie bereits erwähnt, in dem geschlossenen Abschnitt der U's über einen Verbindungsabschnitt 4009 miteinander verbunden. Aufgrund der entgegengesetzten Krümmungen sind entlang der vier Abschnitte abwechselnd Strukturen zur Erzeugung entgegengesetzter Spannungen, nämlich Druck- und Zuspannung, angeordnet, die in Fig. 36 mit unterschiedlichen Bezugszeichen versehen sind, nämlich mit dem Bezugszeichen 4002 für Strukturen für die Erzeugung von Druckdehnung und 4003 für Strukturen für die Erzeugung von Zugdehnung. Auf diese Weise ist die Spiegelplatte 3201 insgesamt über vier solche U-förmige Hälften 4005 aufgehängt, wovon zwei jeweils eines der Federelemente 4001 und 4004 bilden.

In wiederum anderen Worten ausgedrückt zeigt somit Fig. 36 eine rechteckige Spiegelplatte 3201, welche über □-förmige Federn 4001 und 4004 mit einem festen Rahmen 3203 verbunden ist, wobei in Fig. 36 wieder exemplarisch die Verkrümmungsstrukturen auf den □-förmigen Federn an den vorerwähnten 16 möglichen Orten platziert sind.

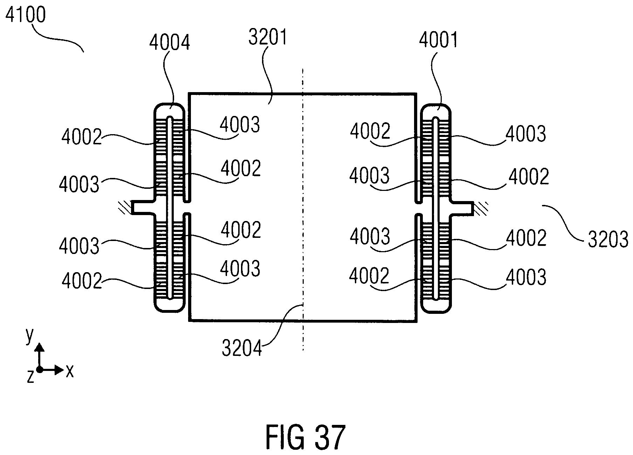

Werden die elektrostatischen Antriebselemente 4002 und 4003 auf einem der □-förmigen Federelemente vertauscht, so wird der Rand der Spiegelplatte in negative z-Richtung bewegt. Exemplarisch ist dies in Fig. 37 am Federelement 4001 gezeigt. Mit dieser Anordnung erfährt die Spiegelplatte eine Verkippung um die Drehachse 3204, wenn die elektrostatischen Antriebe beider Federelemente 4001 und 4004 gleichzeitig genutzt bzw. angesteuert werden. Der Verkippwinkel ist gegenüber der Anordnung in Fig. 36 bei gleich hoher Antriebsspannung der elektrostatischen Antriebe ungefähr doppelt so groß. Eine Hubbewegung der Spiegelplatte ist jedoch mit dieser Anordnung nicht mehr möglich.

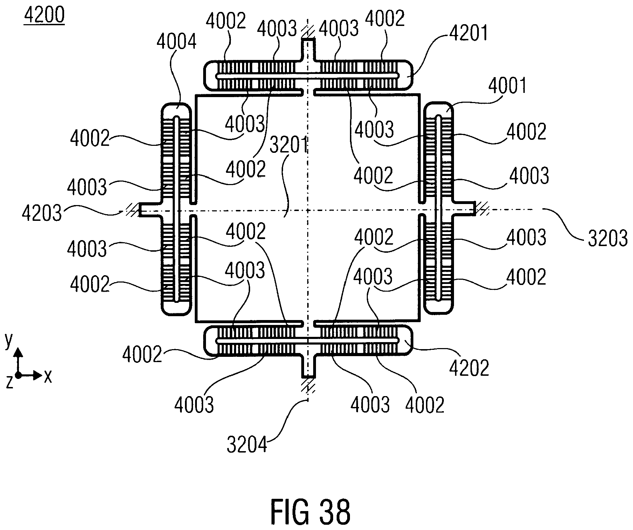

Die in Fig. 36 und 37 vorgestellten Ausführungsbeispiele für Mikrokippspiegel können auch zur räumlich - zweidimensionalen Ablenkung von Licht erweitert werden. Hierfür kann die in Fig. 38 gezeigte Anordnung genutzt werden. In diesem Beispiel wurde die Spiegelplatte 3201 über vier □-förmige Federelemente (4001, 4004, 4201 und 4202) mit dem festen Rahmen verbunden. Je nach Auslenkung der □-förmigen, einzelnen Federelemente kann die Spiegelplatte um beide Torsionsachsen 3204 und 4203 verkippt werden. Eine gleichzeitige Verkippung um beide Achsen (für Strahlpositionierung innerhalb einer Ebene) aber auch eine Hubbewegung (als phasenschiebendes, optisches Element) der Spiegelplatte aufgrund der gleichzeitigen Auslenkung aller □-förmigen Federelemente ist auch hier möglich.

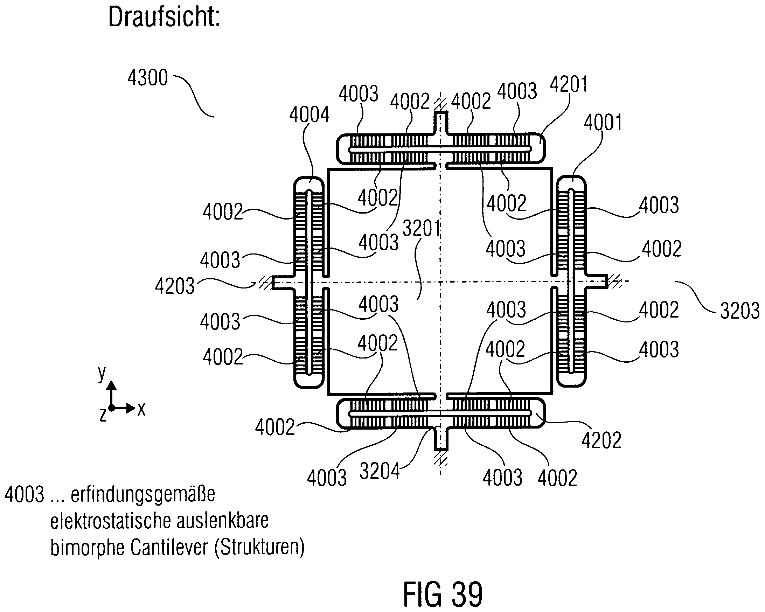

Analog der zuvor erläuterten Vertauschung von elektrostatischen Aktorkomponenten ist hier auch eine nahezu Verdopplung des Kippwinkels möglich. Dies ist in Fig. 39 verdeutlicht.

Wie auch bei dem Fig. 36 und 37 sollten in Fig. 38 die unterschiedlichen Bezugszeichen 4002 und 4003 Strukturen anzeigen, die unterschiedliche Zug- bzw. Druckspannungen erzeugen, nämlich das Bezugszeichen 4002 für Strukturen, die Druckdehnungen erzeugen, und das Bezugszeichen 4003 für Strukturen, die Zugdehnungen erzeugen.

Die Fig. 38 und 39 zeigen somit jeweils eine rechteckige Spiegelplatte 3201, welche über vier □-förmige Federn 4001, 4004, 4201 und 4202 mit einem festen Rahmen 4203 verbunden ist, wobei hier exemplarisch auch den □-förmigen Federn die zug- bzw. druckdehnungserzeugenden Strukturen 4002 und 4003 an den hier 32 möglichen Orten platziert sind.

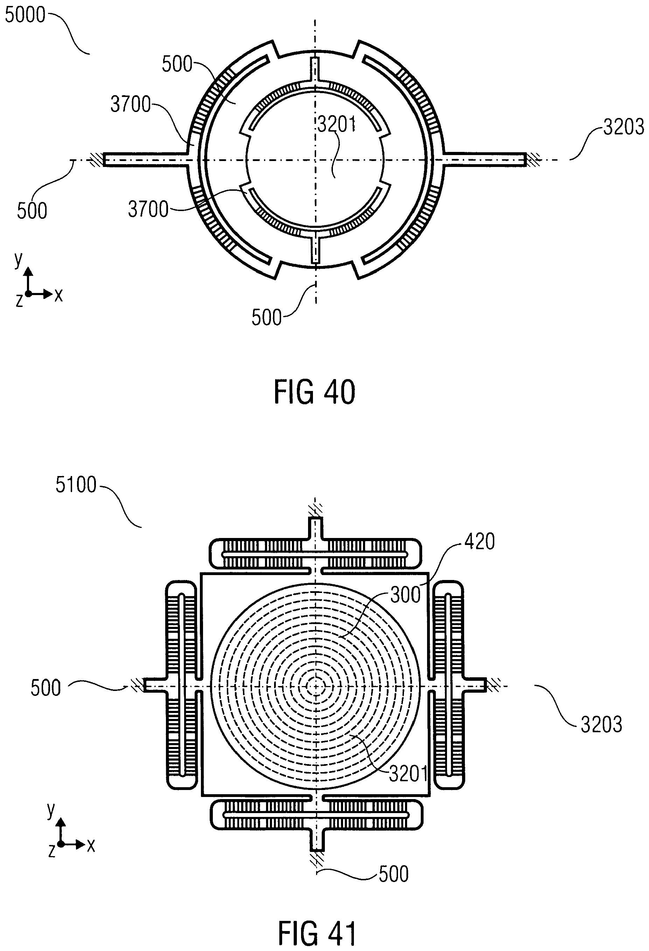

Die zum Schluss beschriebenen Ausführungsbeispiele für Antriebsprinzipien, Basiselemente und auch Herstellungstechnologien bzw. -substrat können auch kombiniert werden. Eine mögliche Kombination ist beispielsweise die Anordnung zweier kippbarer und zueinander kardanisch aufgehängter Spiegelplatten, um eine zweidimensionale Ablenkung von Licht zu ermöglichen. In dem Beispiel von Fig. 40 wurde hier exemplarisch zweimal der prinzipielle Aufbau 3700 verwendet. Prinzipiell können jedoch alle Kippspiegel verwendet werden, die im Vorhergehenden beschrieben worden sind, wobei mit Hilfe der kardanischen Anordnung dieselben miteinander kombiniert werden können, um als 2D-Kippspiegel verwendet zu werden.

Auch eine Kombination eines Fokussierspiegels mit krümmbarer Spiegelplatte, wie sie Bezug nehmend auf Fig. 25 beschrieben worden ist, lässt sich mit den Kippspiegeln kombinieren, die im Vorhergehenden beschrieben worden sind, oder auch mit den als Hubspiegel verwendbaren Anordnungen 4000 oder 4200. Eine hierfür beispielhafte Kombinationsanordnung ist in Fig. 41 gezeigt.

Insbesondere zeigt Fig. 40 eine kardanisch aufgehängte 2D-Kippspiegelanordnung, bei welcher die innere Spiegelplatte 3201 über einen beweglichen Rahmen 5003 mit dem festen Rahmen 3203 verbunden ist. Die innere Spiegelplatte 3201 kann eine Kippbewegung um die Achse 5002 und der bewegliche Rahmen eine Kippbewegung um die Achse 5001 ausüben. Fig. 41 zeigt eine Kombination einer elektrostatisch aktiv krümmbaren Spiegelplatte 3201 für die Strahlfokussierung 3000 und der 2D-Kippspiegelanordnung 4200.

Für die Rasterkraftmikroskopie (engl.: Atomic Force Microscopy = AFM) werden geläufig dünne Balken (Blattfeder) mit einer Messspitze für die Materialanalyse (Oberflächenrauigkeit, Domänen gleicher elektrischer Polarisierungen usw.) genutzt. Für dieses Messverfahren gibt es Messmodi, in welchen der Cantilever mit der Messspitze aktiv ausgelenkt oder resonant schwingend betrieben wird. Die Auslenkung des Balkens kann auch durch die im Vorhergehenden beschriebenen elektrostatisch mono- oder bimorph auslenkbaren Cantilever erfolgen. Fig. 42 zeigt eine Möglichkeit, die elektrostatisch auslenkbaren Cantilever für die Rasterkraftmikroskopie zu nutzen. In diesem Beispiel wird exemplarisch die Struktur 1500 mit der für die AFM benötigten Messspitze 6001 ergänzt.

Fig. 42 zeigt schließlich ein Ausführungsbeispiel, das veranschaulicht, dass die im Vorhergehenden beschriebenen Ausführungsbeispiele auch für die Rasterkraftmikroskopie verwendet werden können, nämlich als AFM-Cantilever (Cantilever = einseitig eingespannter Balken).

Obige Ausführungsbeispiele zeigten also unter anderem auch ein elektrostatisch auslenkbares mikromechanisches Bauteil, bei dem eine Elektrode 301 in einem geringen Abstand 304 über einem Balken oder einer Platte 1201 angeordnet ist, um dem Balken oder die Platte 1201 durch lateral wirkende Zug- oder Druckkräfte aktiv verkrümmen zu können, wobei der geringe Elektrodenabstand 304 durch eine isolierende Materialschicht 303 hergestellt wird. Die Elektroden des elektrostatischen Antriebs können durch eine laterale Strukturierung der isolierenden Schicht 303 in mehrere Segmente lateral unterteilt sein. Die laterale Strukturierung kann gleichmäßig ausgeführt sein, damit aus den lateral wirkenden Zug- oder Druckkräften eine lateral wirkende und näherungsweise konstante Zug- oder Druckdehnung entsteht. Die Elektrode 301 und die isolierende Materialschicht 303 können auch innerhalb oder unterhalb bzw. oberhalb und unterhalb des aktiv zu verkrümmenden Balkens oder der Platte 1201 angeordnet sein. Die Elektrode 301 kann gegenüber der Ebene verkippt angeordnet sein, wie es bei den Ausführungsbeispielen für ein Bauteil 1400 und 1900 der Fall war. Auch die Oberfläche des Balkens oder der Platte 1201 kann durch eine entsprechende Strukturierung angeschrägt sein, wozu auf die Ausführungsbeispiele 1500, 1800, 2000 und 2100 verwiesen wird. Der Verkippungswinkel liegt beispielsweise in einem Bereich zwischen 50° und 60° und beträgt beispielsweise insbesondere 54,7°.

Die Elektrode 301 und/oder die Oberfläche des Balkens oder der Platte 1201 können auch vertikal wellenförmig ausgeführt sein, wozu auf die Ausführungsbeispiele 1600 und 1700 verwiesen wird. Der wellenförmige Querschnitt kann sinusförmig, sphärisch oder oval ausgeführt sein. Der Querschnitt kann allerdings auch einer beliebigen Funktion entsprechen oder durch eine Freiform beschreibbar sein.

Die Elektrode 301 und die isolierende Materialschicht 303 können auch in mehreren Lagen übereinander gestapelt auf, innerhalb und/oder unterhalb des Balkens oder der Platte 1201 angeordnet sein. Bei Mehrfachaktoren können die einzelnen Segmente um eine halbe Struktur weiter versetzt zueinander angebracht sein.

Zudem ist es möglich, dass die isolierende Materialschicht 303 zugleich auch eine Opferschicht ist, welche dem Abstand der Elektrode 301 durch eine Opferschichtätzung herstellt. Der Abstand zwischen der Elektrode 301 und dem Balken bzw. der Platte 1201 liegt beispielsweise zwischen 100 nm und 5 $\mu$m.

Der Balken bzw. die Platte 1201 oder die Elektrode 301 können aus einem leitfähigen Material hergestellt sein, wie z. B. aus dotiertem, einkristallinem, amorphen oder polykristallinem Silizium, Germanium, Siliziumgermanium, Siliziumcarbid oder Galliumarsenid. Sie können allerdings auch aus Aluminium oder einer Aluminiumlegierung, wie z. B. AlMgSi, AlTiSi, AlSiCu, aus Titan, Titanaluminid oder einer Titanlegierung bestehen.

Die isolierende Schicht 303 kann wiederum aus Siliziumoxid, Siliziumnitrid, Aluminiumoxid, Aluminiumnitrid, Titanoxid oder Titannitrid gebildet sein.

Auf den zueinander zugewandten Flächen der Elektroden 301 und 1201 kann eine zusätzliche, elektrisch isolierende, d. h. die elektrische, Schicht aufgebracht sein, um die durch mögliche Feldemissionseffekte verursachten elektrischen Durchbrüche zu verhindern bzw. zu reduzieren, oder bei einem möglichen Pull-in der oberen Elektrode 301 zu verhindern, dass das Bauelement irreversibel beschädigt wird. Dabei kann die dielektrische Schicht aus Siliziumoxid, Siliziumnitrid, Aluminiumoxid, Aluminiumnitrid, Titanoxid oder Titannitrid bestehen. Der Zwischenraum 304 zwischen den Elektroden 301 und 1201 kann mit einem weichen Material, wie z. B. einem Polymer, einer Flüssigkeit oder einem beliebigen Gas oder Vakuum, gefüllt sein.

Der elektrostatisch verkrümmbare Balken oder die elektrostatisch verkrümmbare Platte kann zur Auslenkung von Mikrostrukturen verwendet werden, wie beispielsweise:

   i. für Kippspiegel, Hub- oder Senkspiegel (= Translationsspiegel), aber auch für Kippspiegel- und Senkspiegelarrays,

   ii. für Fokussierspiegel, oder auch für beliebig deformierbare Spiegel zur Wellenfrontkorrektur,

   iii. für eine aktive Kompensation der durch intrinsischen Materialspannungen erzeugten Verkrümmung von Spiegelplatten innerhalb von Kipp-, Hub- oder Senkspiegel (+ Arrays),

iv. für aktiv verstellbare Linsen oder Linsenarrays,

v. für die dynamische Anregung von Blattfedern innerhalb eines Rasterkraftmikroskopaufbaus,

vi. für variable elektrische Kapazitäten (MEMS Varicap oder MEMS Varactor) oder für elektrische Schalter,

vii. für die Verwendung innerhalb eines Mikrospiegelarrays in einer aktiven Backplan (hier: elektrooptische Schaltung für die Adressierung bzw. Auswahl einzelner Informationskanäle),

viii. für Beschleunigungs- oder Drehratensensoren.

Allgemein ist eine Verwendung zur Mikropositionierung möglich.

Eine Verwendung der Strukturen als Sensor, welcher einen Biegezustand bzw. eine Auslenkung eines Mikrobauteils durch eine Änderung der elektrischen Kapazität zwischen den Elektroden 301 und 1201 detektiert, ist ebenfalls möglich, und zwar zusätzlich oder alternativ zu der Verwendung als Aktor.

Die Struktur kann allerdings auch als Generator verwendet werden, welcher Bewegungsenergie in elektrische Energie wandelt, d. h. zum sogenannten Energy-Harvesting: Zu diesem Zweck kann an dem Balken eine Masse oder eine Platte befestigt sein, welche durch eine externe Bewegungsenergie oder durch eine Luftströmung ausgelenkt wird. Daraufhin wird der Balken verkrümmt, wodurch sich der Elektrodenabstand 304 und damit die elektrische Kapazität verändert. Bei einer ausgelenkten, konstanten elektrischen Spannung zwischen den Elektroden 301 und 1201 entsteht dabei ein Stromfluss aufgrund der Kapazitätsänderung. Dadurch ist elektrische Energie abgreif- und z.B. für die Versorgung autarker System verwendbar.

Obige Strukturen können allerdings auch für einen Aktor als integriertes Element zur Montage von Mikroelementen, wie z. B. Lichtwellenleiter, Mikrospiegel und Mikrolinsen, verwendet werden, welche über Scharniere mit dem Chip befestigt sind und dafür genutzt werden, um nach der Vereinzelung und der Aufbau- und Verbindungstechnik die Mikroelemente aufzustellen, zu justieren oder zu positionieren.

Der Einsatz solcher Aktoren kann auch vorsehen, dass dieselben als freitragende Strukturen verwendet werden, ohne Silizium-Chip bzw. Handling- bzw. Trägersubstrat, wie z. B. innerhalb mechatronischer Anwendungen, wie z. B. für die Feinpositionierung.

Die anregende Bewegung des Balkens oder der Platte kann quasi statisch oder resonant erfolgt.

Die Kombination bzw. Integration der Mikroaktoren mit einer elektronischen Schaltung für deren Ansteuerung kann ein entsprechendes System ergeben, das entsprechende Funktionen erfüllen kann.

Wie es im Vorhergehenden beispielsweise Bezug nehmend auf Fig. 22 - 24b beschrieben worden ist, ist es ebenfalls möglich, dass die Anordnung vertikal aufgebaut wird, d. h. mit einer Platzierung der Aktoren über- oder unterhalb der neutralen Faser der auszulenkenden Mikrostruktur. Eine Nutzung einer solchen lateral auslenkbaren Struktur ist beispielsweise denkbar für:

i. eine optische Blende, wie z. B. einer Irisblende, eines optischen Shutters bzw. eines Blenden- oder Shutter-Arrays,

ii. ein Shutter-Array, welches innerhalb transmissiver Displays genutzt wird,

iii. den Antrieb eines Zahnrades oder eines Linearantriebs (Stellmotor).

Denkbar wäre auch eine Kombination obiger Mikrostrukturen, so dass eine Mikrostruktur, wie z. B. ein Balken, in eine vertikale Richtung, aber auch innerhalb einer Ebene ausgelenkt werden kann, wobei die Verwendung einer solchen Struktur beispielsweise für die dreidimensionale Positionierung, wie z. B. als Mikrogreifer, vorgesehen sein könnte, oder für eine laterale Positionierung und gleichzeitig für eine vertikale Auslenkung eines Balkens mit Messspitze für die Rasterkraftmikroskopie, d. h. AFM mit dynamischer Anregung.

Andererseits zeigten einige der obigen Ausführungsbeispiele auch einen elektrostatisch auslenkbaren Fokussierspiegel 3000, bei dem sich auf, in oder unter der leitfähigen Spiegelplatte 3001 eine Elektrode 301, welche durch eine lateral strukturierte Isolationsschicht 303 elektrisch isolierend in einem geringem Abstand 304 angebracht ist und bei Anlegen einer elektrischen Steuerspannung die Spiegelplatte verkrümmt wird, befindet. Es ergeben sich grundsätzlich die gleichen Variationsmöglichkeiten, wie soeben im Vorhergehenden für das Mikrobauteil zusammenfassend erwähnt. Die Spiegelplatte kann dabei eine näherungsweise sphärische oder parabolische Krümmung erfahren, um beispielsweise Licht in einem zentralen Brennpunkt zu sammeln. Die Spiegelplatte kann aber auch eine rechteckige, kreisrunde, elliptische oder beliebige, wie z. B. polygonartige, Freiform besitzen. Die Spiegelplatte kann an einem oder an mehreren Punkten am Plattenrand durch geeignete Federelemente 3002 mit einem festen Rahmen 3003 verbunden sein. Eine zusätzlichen Planarisierungsschicht kann für den Fall vorgesehen sein, dass die Elektroden 301 und 1201 auf der Vorderseite der Spiegelplatte aufgebracht sind und eine signifikante Topologie, wie z. B. angewinkelte Elektroden, besitzen. Ein chemisch-mechanisches Polieren (CMP) kann verwendet werden, um die aufgebrachte Planarisierungsschicht zu begradigen. Ein solcher Fokussierspiegel kann verwendet werden, um ein Strahlprofil gezielt korrigieren bzw. beliebig zu verformen bzw. zu beeinflussen. Dabei kann eine elektrische Aufteilung bzw. Segmentierung mindestens einer der beiden Elektroden 301 oder 1201 vorgesehen sein, um mit mehreren elektrisch getrennten Steuerspannungen einzelne Bereiche der Spiegelplatte lokal verschieden stark verkrümmen zu können. Ein solches Bauelement könnte als adaptiv optischer Spiegel zur gezielten Beeinflussung der Phasenfront von Lichtwellen verwendet werden.

Ganz allgemein könnte ein solcher Fokussierspiegel 3000 verwendet werden für

i. die Fokussierung von Laserstrahlen beim Schneiden, Markieren und Schweißen von Materialien,

ii. die Nachführung der Fokuslänge bei laserbasierten Strichkodescannern,

iii. Zoom- und Fokusanwendungen in bildaufnehmenden und bildgebenden Systemen, wie Projektoren, Photokameras, Konfokalmikroskopen und in der optischen Kohärenzomorapie und

iv. das Auslesen mehrlagiger optischer Datenträger.

v. Hohlspiegelarrays innerhalb transmissiver Displays (in "telescopic pixel displays").

Hier beschrieben einige der obigen Ausführungsbeispiele elektrostatisch auslenkbare Kippspiegel 3100 bis 3900, bei denen die Spiegelplatte 3101 oder 3201 an mindestens einem Balken 3102, 3202, 3701, 3801 oder 3901 befestigt ist, wobei sich auf, in oder unter diesem Balken eine Elektrode 301 befindet, welche durch eine lateral strukturierte Isolationsschicht 303 elektrisch isolierend in einem geringem Abstand 304 angebracht ist und bei Anlegen einer elektrischen Steuerspannung die Spiegelplatte verkippt wird. Abermals finden hier wieder die Variationsmöglichkeiten Anwendung, die soeben in Bezug auf Mikrobauelement beschrieben worden sind. Die Spiegelplatte kann eine rechteckige, kreisrunde, elliptische oder beliebige, wie z. B. polygonartige, Freiform besitzen. Die Spiegelplatte 3201 kann über mindestens eine Y-artigen Parallelfederstruktur 3202 mit dem festen Rahmen 3203 verbunden sein, wie es z. B. bei dem Ausführungsbeispiel 3200 der Fall war. Es können zudem elektrostatische Antriebe auf, in oder unter den Balken an zwei verschiedenen Positionen auf den Y-artigen Parallelfederstrukturen platziert sein, wobei auf die unterschiedlichen Anordnungen 3200 bis 3600 verwiesen wird. Die Spiegelplatte 3201 kann aber auch über mehrere verteilte, balkenartige Federstrukturen 3701, 3801 oder 3901 und eine oder mehrere, parallel geführte Torsionsfedern 3702, 3802 und 3902 mit dem festen Rahmen 3203 verbunden sein, wozu auf die Ausführungsbeispiele 3700, 3800 und 3900 verwiesen wird. Die elektrostatischen Antriebe auf, in oder unter dem Balken der verteilten Federn können unterschiedlich platziert sein, wozu auf die unterschiedlichen Anordnungen gemäß 3200 bis 3600 verwiesen wird. Solche elektrostatisch auslenkbaren Kippspiegel können beispielsweise verwendet werden zur

i. Datenaufnahme in 1D-, 2D-Scannern und Mikroskopie,

ii. Datenausgaben in Laserdisplays, Laserdrucker, Laserbeschrifter oder -belichter.

Einige der obigen Ausführungsbeispiele bezogen sich aber auch auf elektrostatisch auslenkbare Kipp-, Senk- und Hubspiegel 4000 bis 4300, bei denen eine Spiegelplatte 3201 an mindestens einem Balken 4001, 4004, 4201 und 4202 befestigt ist, wobei sich auf, in oder unter diesem Balken eine Elektrode 301 befindet, welche durch eine lateral strukturierte Isolationsschicht 303 elektrisch isolierend in einem geringem Abstand 304 angebracht ist, wobei bei Anlegen einer elektrischen Steuerspannung der Rand der Spiegelplatte angehoben oder abgesenkt wird. Die Variationsmöglichkeiten, die im Vorhergehenden bezüglich des Mikrobauteils beschrieben worden sind, sind hier ebenfalls anwendbar. Wie es im Vorhergehenden beschrieben worden ist, kann eine S-förmige Verwölbung der Federelemente durch geeignete Anordnung der elektrostatischen Antriebe erzielt werden, damit der Plattenrand in die eine Richtung, wie z. B. die positive z-Richtung, wie in dem Fall von dem Ausführungsbeispiel 4000, oder in die negative z-Richtung, wie in dem Ausführungsbeispiel 4100, bewegt werden kann. Die Nutzung des Anhebens oder Absenkens eines Plattenrandes kann beispielsweise Verwendung finden, um eine Spiegelplatte zu verkippen, d. h. als Kippspiegel, oder die Spiegelplatte anzuheben und abzusenken, wie z. B. als Translationsspiegel.

Die Spiegelplatte kann eine rechteckige, kreisrunde, elliptische oder beliebige, wie z. B. polygonartige, Freiform besitzen. Die Verwendung von vier Federelementen ist ebenfalls möglich, wie bei den Ausführungsbeispielen 4200 und 4300 gezeigt worden ist. Hiermit kann eine zweidimensionale Kippbewegung realisiert werden. Die Verwendung als Kippspiegel ist denkbar beispielsweise zur

i. Datenaufnahme in 1D-, 2D-Scannern und Mikroskopie,

ii. Datenausgaben in Laserdisplays, Laserdrucker, Laserbeschrifter oder -belichter.

Die Verwendung als Translationsspiegel ist beispielsweise denkbar

i. in Fourier-Transform-Spektrometern, Interferometern, lamellaren Gitter-Interferometern,

ii. in konfokalen Mikroskopen oder

iii. in optischen Weglängenmodulatoren.

Schließlich wurde noch ein Ausführungsbeispiel mit elektrostatisch auslenkbaren Blattfeder 6000 beschrieben, bei der eine Elektroden 301 in einem geringen Abstand 304 über einem Balken 1201 angeordnet ist um den Balken 1201 durch lateral wirkende Zug- oder Druckkräfte aktiv verkrümmen zu können, wobei der geringe Elektrodenabstand 304 durch eine isolierende Materialschicht 303 hergestellt wird und sich an der Unterseite des Balkens eine Messspitze befindet. Auch finden die Variationsmöglichkeiten Anwendung, die im Vorhergehenden bezüglich des Mikrobauteils erwähnt worden Sind. Der Balken kann einseitig eingespannt und mit einem festen Rahmen verbunden sein. Die Nutzung einer solchen Blattfeder kann beispielsweise in Rasterkraftmikroskopen stattfinden, wie z. B. für die dynamische Anregung.

Es wurde gezeigt, dass die Elektrode 301 in der Substratdickerichtung des Substrates 1550, in dem das mikromechanische Bauelement gebildet sein kann, wie z.B. einem BSOI-Wafer, oberhalb oder unterhalb des verformbaren Elementes 1201 fixiert sein kann, so dass durch die Verkrümmung des verformbaren Elementes 1201 dasselbe aus einer Substratebene, entlang der sich das Substrat erstreckt, heraus verkrümmt wird, d.h. in die Substratdickerichtung. In diesem Fall erstreckt sich die Abstandshalterschicht parallel zur Substratebene, ebenso wie die Elektrode 301 und das verformbare Element 1201, wenn diese flächig gebildet sind. Alternativ kann das Bauelement so in dem Substrat (1550) gebildet sein, dass die Elektrode 301 seitlich an dem verformbaren Element fixiert ist, so dass durch die Verkrümmung des verformbaren Elementes dasselbe innerhalb einer Substratebene verkrümmt wird. In diesem Fall erstreckt sich die Abstandshalterschicht senkrecht zur Substratebene, ebenso wie die Elektrode 301 und das verformbare Element 1201, wenn letztere flächig gebildet sind.

Ein mikromechanisches Bauelement gemäß jedem der obigen Ausführungsbeispiele kann, wie es mit gestrichelten Linien in Fig. 6a angedeutet ist, eine Treiberschaltung 340 zum Anlegen der Spannung U an das mikromechanische Bauelement aufweisen, so dass das mikromechanische Bauelement als mikromechanischer Aktor wirkt, wie es oben beschrieben wurde. In dem Fall, dass es sich um ein mikromechanisches Bauelement eines Sensors - wie z.B. eines Beschleunigungssensors oder dergleichen -, mit einer Elektrode 301, einem verformbaren Element 1201, und einer isolierenden Abstandshalterschicht 303 handelt, bei dem die Elektrode über die isolierende Abstandshalterschicht 303 an dem verformbaren Element 1201 fixiert ist, und die isolierende Abstandshalterschicht 303 entlang einer lateralen Richtung 305 in mehrere voneinander beabstandete Segmente strukturiert ist, so dass sich durch eine Verformung des verformbaren Elements 1201 in der lateralen Richtung eine Kapazität zwischen der Elektrode und dem verformbaren Element ändert, kann es sich bei der angedeuteten Schaltung 340 in Fig. 6a um eine Detektorschaltung zum Erfassen der Kapazität zwischen der Elektrode 301 und dem verformbaren Element 1201 des mikromechanischen Bauelements handeln. Es könnte sich bei 340 aber auch um eine Spannungsquelle zum Anlegen einer konstanten Spannung zwischen der Elektrode 301 und dem verformbaren Element 1201 handeln, so dass aufgrund einer extern induzierten Krümmung des verformbaren Elements 1201 ein Stromfluss zwischen der Elektrode 301 und dem verformbaren Element 1201 generiert wird und somit ein Energiegenerator gebildet wird.

Wie es im vorhergehenden beschrieben wurde, kann das verformbare Element 1201 einen Federabschnitt 3803 zwischen einem Aufhängungsort 3203 und einem Funktionselement 3201 des mikromechanischen Bauelements bilden, wobei das Funktionselement eine um eine Kippachse kippbar aufgehängte Platte 3201 aufweisen kann, und der Federabschnitt eine erste verteilte Feder 3803 des mikromechanisches Bauelements bilden kann, die sich entgegengesetzt zu einer zweiten verteilten Feder des mikromechanisches Bauelements entlang eines Umfangs der Platte von einer sich entlang der Kippachse erstreckenden Torsionsfeder 3802 - und zwar einer jeweiligen oder für die erste und zweite verteilte Feder gemeinsame - des mikromechanisches Bauelements zu einem Befestigungsort am Umfang der Platte erstreckt, und zwar symmetrisch zur zweiten verteilten Feder. Dabei kann eine weitere Elektrode vorgesehen sein, die über eine weitere Abstandshalterschicht an der zweiten verteilten Feder fixiert ist, und zwar derart, dass bei der ersten verteilten Feder die isolierende Abstandshalterschicht 303 so strukturiert ist, dass durch Anlegen einer elektrischen Spannung U zwischen der Elektrode und dem verformbaren Element laterale Zug- oder Druckkräfte entstehen, die die erste verteilte Feder in einer ersten Normalenrichtung relativ zur Platte verkrümmen, wie z.B. nach unten bzw. in die negative z-Richtung - und bei der zweiten verteilten Feder die isolierende Abstandshalterschicht 303 so strukturiert ist, dass durch Anlegen einer elektrischen Spannung U zwischen der Elektrode und dem verformbaren Element laterale Zug- oder Druckkräfte entstehen, die die zweite verteilte Feder in einer zweiten, zur ersten entgegengesetzten Normalenrichtung relativ zur Platte verkrümmen.

Obige Ausführungsbeispiele beschreiben also unter anderem ein mikromechanisches Bauelement mit einer Elektrode 301; einem verformbaren Element 1201; und einer isolierenden Abstandshalterschicht 303, wobei die Elektrode über die isolierende Abstandshalterschicht 303 an dem verformbaren Element 1201 fixiert ist, und wobei die isolierende Abstandshalterschicht 303 entlang einer lateralen Richtung 305 in mehrere voneinander beabstandete Segmente strukturiert ist, so dass durch Anlegen einer elektrischen Spannung U zwischen der Elektrode und dem verformbaren Element laterale Zug- oder Druckkräfte entstehen, die das verformbare Element entlang der lateralen Richtung verkrümmen, oder die isolierende Abstandshalterschicht 303 entlang einer lateralen Richtung 305 in mehrere voneinander beabstandete Segmente strukturiert ist, so dass sich durch eine Verformung des verformbaren Elements 1201 in der lateralen Richtung eine Kapazität zwischen der Elektrode und dem verformbaren Element ändert. Dabei können die Segmente jeweils eine Längserstreckungsrichtung aufweisen, die quer zu der lateralen Richtung 305 verläuft, und die Segmente und Zwischenräume 304 zwischen denselben können streifenförmig sein. Ferner kann eine Periodizität der Strukturierung der isolierenden Abstandshalterschicht 303 in der lateralen Richtung 305 über eine Fläche hinweg, über die sich die Elektrode 301 und das verformbare Element 1201 einander gegenüberliegen, in etwa konstant sein. Es ist möglich, dass das verformbare Element 1201 eine Platte, eine Schale, eine Membran, ein Balken oder ein Stab ist. Das verformbaren Element 1201 kann so aufgehängt und eingespannt sein, dass es durch Anlegen der elektrischen Spannung entlang einer zu der lateralen Richtung 305 senkrechten lateralen Richtung ungekrümmt bleibt oder ebenfalls in eine gleiche Richtung wie entlang der lateralen Richtung 305 gekrümmt wird. Eine Dicke der isolierenden Abstandshalterschicht 303 kann zwischen 100 nm bis 5 $\mu$m, jeweils einschließlich, liegen. Das verformbare Element 1201 kann aus einem leitfähigen Material bestehen, lokal leitfähig gemacht oder mit einem leitfähigen Material beschichtet sein. Die Elektrode 301 und eine der Elektrode 301 zugewandte Oberfläche des verformbaren Elements zwischen den Segmenten können jeweils so geformt sein, dass dazwischen befindliche Zwischenräume in einer Ebene, die durch die laterale Richtung und eine Dickerichtung der isolierenden Abstandshalterschicht 303 aufgespannt wird, einen gleichen Querschnitt aufweisen. Dabei kann das Funktionselement eine um eine Kippachse kippbar aufgehängte Platte 3201 aufweisen, und der Federabschnitt eine erste verteilte Feder 3803 des mikromechanisches Bauelements bilden, die sich entgegengesetzt zu einer zweiten verteilten Feder des mikromechanisches Bauelements entlang eines Umfangs der Platte von einer sich entlang der Kippachse erstreckenden Torsionsfeder 3802 des mikromechanisches Bauelements zu einem Befestigungsort am Umfang der Platte erstreckt, und zwar symmetrisch zur zweiten verteilten Feder. Das mikromechanisches Bauelement kann dabei ferner eine weitere Elektrode umfassen, die über eine weitere Abstandshalterschicht an der zweiten verteilten Feder fixiert ist, und zwar derart, dass bei der ersten verteilten Feder die isolierende Abstandshalterschicht 303 so strukturiert ist, dass durch Anlegen einer elektrischen Spannung U zwischen der Elektrode und dem verformbaren Element laterale Zug- oder Druckkräfte entstehen, die die erste verteilte Feder in einer ersten Normalenrichtung relativ zur Platte verkrümmen, und bei der zweiten verteilten Feder die isolierende Abstandshalterschicht 303 so strukturiert ist, dass durch Anlegen einer elektrischen Spannung U zwischen der Elektrode und dem verformbaren Element laterale Zug- oder Druckkräfte entstehen, die die zweite verteilte Feder in einer zweiten, zur ersten entgegengesetzten Normalenrichtung relativ zur Platte verkrümmen. Das verformbaren Element 1201 kann einen Federabschnitt 3202 zwischen einem Aufhängungsort 3203 und einem Funktionselement 3201 des mikromechanischen Bauelements bilden, wobei das Funktionselement eine um eine Kippachse kippbar aufgehängte Platte 3201 aufweist, und der Federabschnitt einen ersten parallel zum Kippachse verlaufenden Balken 3803 einer Y-förmigen Feder des mikromechanisches Bauelements bildet, die sich parallel zu einem zweiten Balken der Y-förmigen Feder des mikromechanisches Bauelements erstreckt, und zwar symmetrisch zur Kippachse, wobei das mikromechanisches Bauelement ferner eine weitere Elektrode umfasst, die über eine weitere Abstandshalterschicht an dem zweiten Balken fixiert ist, und zwar derart, dass bei dem ersten Balken die isolierende Abstandshalterschicht 303 so strukturiert ist, dass durch Anlegen einer elektrischen Spannung U zwischen der Elektrode und dem ersten Balken laterale Zug- oder Druckkräfte entstehen, die den ersten Balken in einer ersten Normalenrichtung relativ zur Platte verkrümmen, und bei dem zweiten Balken die isolierende Abstandshalterschicht 303 so strukturiert ist, dass durch Anlegen einer elektrischen Spannung U zwischen der Elektrode und dem zweiten Balken laterale Zug- oder Druckkräfte entstehen, die den zweiten Balken in einer zweiten, zur ersten entgegengesetzten Normalenrichtung relativ zur Platte verkrümmen. Das verformbare Element 1201 kann einen Federabschnitt 3202 zwischen einem Aufhängungsort 3203 und einem Funktionselement 3201 des mikromechanischen Bauelements bilden, wobei das Funktionselement eine an einem Aufhängungspunkt entlang ihres Umfangs aufgehängte Platte 3201 aufweist, und der Federabschnitt einen aus vier Abschnitten einer U-förmigen Feder des mikromechanisches Bauelements bildet, die sich von dem Aufhängungspunkt entlang des Umfangs der Platte und wieder zurück zu dem Aufhängungsort erstreckt, wobei sich die U-förmige Feder bei Auslenkung der Platte an dem Aufhängungspunkt aus einer Ruhelageebene an den vier seriell entlang der U-förmigen Feder angeordneten Abschnitten abwechselnd in die eine und dann in die entgegengesetzte Richtung relativ zur Ruhelageebene krümmt, wobei das mikromechanisches Bauelement ferner weitere Elektroden umfasst, die über weitere Abstandshalterschichten an den anderen der vier Abschnitten fixiert sind, und zwar derart, dass bei dem ersten und dritten Abschnitt von dem Aushängungsort oder dem Aufhängungspunkt durch Anlegen einer elektrischen Spannung U zwischen der Elektrode und dem jeweiligen Abschnitt laterale Zug- oder Druckkräfte entstehen, die den jeweiligen Abschnitt in einer ersten Normalenrichtung relativ zur Platte verkrümmen, und bei dem zweiten und vierten Abschnitt von dem Aushängungsort oder dem Aufhängungspunkt aus durch Anlegen einer elektrischen Spannung U zwischen der Elektrode und dem jeweiligen Abschnitt laterale Zug- oder Druckkräfte entstehen, die den jeweiligen Abschnitt in einer zweiten, zur ersten entgegengesetzten Normalenrichtung relativ zur Platte verkrümmen, wobei eine weitere U-förmige Feder symmetrisch zu der U-förmigen Feder relativ zu einer Verbindungslinie von Aufhängungsort und Aufhängungspunkt gebildet ist, um zusammen eine □-förmige Feder zu bilden. Die Platte kann symmetrisch zu einer Achse senkrecht zur Kippachse bzw. Verbindungslinie aufgehängt sein. Dabei kann das Funktionselement ein optisches Element, wie zum Beispiel einen Spiegel, ein dispersives Element oder ein diffraktives Element, oder eine AFM-Messspitze aufweisen. Ein Energiegenerator mit einem soeben beschriebenen mikromechanischen Bauelement, der ferner eine Spannungsquelle zum Anlegen einer konstanten Spannung zwischen der Elektrode und dem verformbaren Element aufweist, so dass aufgrund einer extern induzierten Krümmung des verformbaren Elements ein Stromfluss zwischen der Elektrode und dem verformbaren Element generiert wird, war obigen Ausführungen ebenfalls entnehmbar.

Literatur und Quellenangaben

[1] Conrad, H., Klose, T., Sander, T., Schenk, H., Lakner, H.: Actuating Methods of Quasistatic Micromirrors for Active Focus Variation. Proc. of the IEEE 2008 International Students and Young Scientists Workshop "Photonics and Microsystems", Seiten 7 - 11, 2008.

[2] Shao, Y., Dickensheets, D- L., Himmer, P.: 3-D MOEMS Mirror for Laser Beam Pointing and Focus Control. IEEE JOURNAL OF SELECTED TOPICS IN QUAN-TUM ELECTRONICS, BAND 10, NR. 3, Seiten 528 - 535, 2004.

[3] Mescheder, U. M., Estan, C., Somogyi, G., Freudenreich, M.: Distortion optimized focusing mirror device with large aperture. Sensors and Actuators A, 130 - 131, Seiten 20 - 27, 2006.

[4] Angemeldetes, aber noch nicht offengelegtes Patent: "Mikromechanisches Element" (102010028111.5; IPMS: 10F51122-IPMS; Patentanwälte Schoppe u. a.: FH100405PDE)

[5] Conrad, H.: Konzeptionelle Untersuchungen eines elektrothermisch auslenkbaren mikromechanischen Membranspiegels zur aktiven Fokusvariation. Masterarbeit, HTW Dresden, 2007.

[6] Petersen, K. E.: Silicon Torsional Scanning Mirror. IBM J. RES. DEVELOP., Band 24, Nr. 5, Seiten 631 - 637, 1980.

[7] Dauderstädt, U., Dürr, P., Sinning, S., Wullinger, I., Wagner, M.: Charging effects in micromirror spatial light modulators. J. Micro/Nanolith. MEMS MOEMS, Band 7(2), Seiten 021011-1 - 021011-10, 2008.

[8] Manhart, S., Hupfer, W., Nikolov, S., Wuehrer, C., Vdovin, G.V., Sodnik, Z.: 50 mm MEMS Deformable Mirror. Adaptive Optical Systems Technology, Proc. of SPIE, Band 4007, Seiten 555 - 562, 2000.

[9] Mali, R. K., Bifano, T. G., Vandelli, N., Horenstein, M. N.: Development of microelectromechanical deformable mirrors for phase modulation of light. J. Opt. Eng., Band 36(2), Seiten 542 - 548, 1997.

[10] Smits, J. G., Fujimoto, K., Kleptsyn, V. F.: Microelectromechanical flexure PZT actuated optical scanner: static and resonance behavior. J. Micromech. Microeng., Band 15, Seiten 1.285 - 1.293, 2005.

[11] Kudryashov, A. V., Cherezova, T. Y.: Laser Beam Shaping by Means of Flexible Mirrors. Laser Beam Shaping Applications, Seiten 211 - 240, ISBN: 978-0-8247-5941-4, CRC Press, 2006.

[12] Singh, J., Teo, J. H. S., Xu, Y. u. a..: A two axes scanning SOI MEMS micromirror for endoscopic bioimaging. J. Micromech. Microeng., Band 18, Seiten 025001, 2008.

[13] Todd, S. T., Jain, A., Qu, H., Xie, H.: A multi-degree-of-freedom micromirror utilizing inverted-series-connected bimorph actuators. J. Opt. A: Pure Appl. Opt., Band 8, Seiten S352 - S359, 2006.

[14] Yang, J.P., Deng, X.C., Chong, T.C.: A Self-sensing Thermal Actuator Incorporating Micromirror for Tracking Mechanism of Optical Drive. Sensors, Band 2, Proceedings of IEEE, Seiten 900 - 903, 2004.

[15] GEHNER, A., SCHMIDT, J. U., WILDENHAIN, M., KNOBBE, J., WAGNER, M.: RECENT PROGRESS IN CMOS INTEGRATED MEMS AO MIRROR DEVELOPMENT. ADAPTIVE OPTICS FOR INDUSTRY AND MEDICINE, Proceedings of the Sixth International Workshop, Seiten 53 - 58, 2007.

[16] Sun, J., Guo, S., Wu, L., Liu, L., Choe, S., Sorg, B. S. und Xie, H.: 3D In Vivo optical coherence tomography based on a low-voltage, large-scan-range 2D MEMS mirror. Optics Express, Band 18, Ausgabe 12, Seiten 12.065 - 12.075, 2010.

[17] Schweizer, S.; Calmes, S.; Laudon, M.; Renaud, P.: Thermally actuated optical microscanner with large angle and low consumption, Sensors and Actuators 76 (1999), S. 470 - 477.

[18] Brother Industries, Ltd.: Brother Develops Spectacle-type Wearable Retinal Imaging Display, Technical Report (2008), http://www.brother.com/en/news/2008/rid/

[19] Sehr, H., Evans, A. G. R., Brunnschweiler, A., Ensell, G. J. und Niblock, T. E. G.: Fabrication and test of thermal vertical bimorph actuators for movement in the wafer plane. J. Micromech. Microeng. 11, Seiten 306 - 310, 2001.

[20] Huang, Q.-A. und Lee, N. K. S.: Analysis and design of polysilicon thermal flexure actuator. J. Micromech. Microeng. 9, Seiten 64 - 70, 1999.

[21] Pyayt, A. L., Starkweather, G. K. und Sinclair, M.: A high-efficiency display based on a telescopic pixel design. Nature Photonics 2, Seiten 492 - 495, 2008.

**Patentansprüche**

1. Mikromechanisches Bauelement mit
   einer Elektrode (301);
   einem verformbaren Element (1201); und
   einer isolierenden Abstandshalterschicht (303),
   wobei die Elektrode über die isolierende Abstandshalterschicht (303) an dem verformbaren Element (1201) fixiert ist, und
   **dadurch gekennzeichnet, dass**
   die isolierende Abstandshalterschicht (303) entlang einer lateralen Richtung (305) in mehrere voneinander beabstandete Segmente strukturiert ist, so dass durch Anlegen einer elektrischen Spannung (U) zwischen der Elektrode und dem verformbaren Element auf die Elektrode und das verformbare Element eine in einer Dickenrichtung wirkende Flächenkraft ausgeübt wird, in Folge dessen laterale Zug- oder Druckkräfte entstehen, die das verformbare Element gemäß dem bimorphen Prinzip entlang der lateralen Richtung verkrümmen.

2. Mikromechanisches Bauelement gemäß Anspruch 1, bei dem die Segmente jeweils eine Längserstreckungsrichtung aufweisen, die quer zu der lateralen Richtung (305) verläuft.

3. Mikromechanisches Bauelement gemäß einem der vorhergehenden Ansprüche, das in einem Substrat (1550) gebildet ist, wobei die Elektrode (301) in einer Substratdickerichtung oberhalb oder unterhalb des verformbaren Elementes (1201) fixiert ist, so dass durch die Verkrümmung des verformbaren Elementes (1201) dasselbe aus einer Substratebene heraus verkrümmt wird, wobei die isolierende Abstandshalterschicht (303) parallel zur Substratebene verläuft.

4. Mikromechanisches Bauelement gemäß einer der vorhergehenden Ansprüche, das in einem Substrat (1550) gebildet ist, wobei die Elektrode (301) seitlich an dem verformbaren Element fixiert ist, so dass durch die Verkrümmung des verformbaren Elementes dasselbe innerhalb einer Substratebene des Substrats verkrümmt wird, wobei die isolierende Abstandshalterschicht (303) quer zur Substratebene verläuft.

5. Mikromechanisches Bauelement gemäß einem der vorhergehenden Ansprüche, bei dem die Elektrode (301) eine erste Elektrode ist und das mikromechanische Bauelement eine weitere Elektrode (301) aufweist, die über eine weitere isolierende Abstandshalterschicht (303) auf einer dem verformbaren Element (1201) abgewandten Seite der ersten Elektrode (301) fixiert ist, wobei die weitere isolierende Abstandshalterschicht (303) entlang der lateralen Richtung (305) in mehrere voneinander beabstandete Segmente strukturiert ist.

6. Mikromechanisches Bauelement gemäß Anspruch 5, wobei die isolierende Abstandshalterschicht (303) eine erste isolierende Abstandshalterschicht (303) ist und die Segmente der weiteren isolierenden Abstandhalterschicht (303) lateral in Zwischenräumen der Segmente der ersten isolierenden Abstandshalterschicht (303) positioniert sind.

7. Mikromechanisches Bauelement gemäß einem der vorhergehenden Ansprüche, bei dem die Elektrode (301) eine erste Elektrode ist und das mikromechanische Bauelement eine weitere Elektrode (301) aufweist, die über eine weitere isolierende Abstandshalterschicht (303) auf einer der ersten Elektrode abgewandten Seite der des verformbaren Elements (1201) fixiert ist, wobei die weitere isolierende Abstandshalterschicht (303) entlang der lateralen Richtung (305) in mehrere voneinander beabstandete Segmente strukturiert ist, so dass durch Anlegen einer elektrischen Spannung (U) zwischen der ersten Elektrode und dem verformbaren Element eines von lateralen Zug- oder Druckkräften entstehen, die das verformbare Element entlang der lateralen Richtung in eine erste Richtung verkrümmen, während durch Anlegen einer elektrischen Spannung (U) zwischen der zweiten Elektrode und dem verformbaren Element entweder das gleiche von lateralen Zug- oder Druckkräften entstehen, die das verformbare Element entlang der lateralen Richtung in ebenfalls in die erste Richtung verkrümmen, oder das andere von lateralen Zug- oder Druckkräften, die das verformbare Element entlang der lateralen Richtung in eine der ersten entgegengesetzte Richtung verkrümmen.

8. Mikromechanisches Bauelement gemäß einem der vorhergehenden Ansprüche, bei dem die Elektrode (301) flächig und zwischen den Segmenten jeweils von dem verformbaren Element weg gewölbt geformt ist.

9. Mikromechanisches Bauelement gemäß einem der Ansprüche 1 bis 7, bei dem die Elektrode (301) flächig und zwischen den Segmenten jeweils zu dem verformbaren Element hin gewölbt geformt ist.

10. Mikromechanisches Bauelement gemäß einem der vorhergehenden Ansprüche, bei dem die Elektrode (301) flächig gebildet ist und zwischen den Segmenten jeweils einen V-förmigen Querschnitt in einer Ebene aufweist, die durch die laterale Richtung und eine Dickerichtung der isolierenden Abstandshalterschicht aufgespannt wird.

11. Mikromechanisches Bauelement gemäß einem der vorhergehenden Ansprüche, bei dem eine der Elektrode (301) zugewandte Oberfläche des verformbaren Elements zwischen den Segmenten von der Elektrode weg gewölbt geformt ist.

12. Mikromechanisches Bauelement gemäß einem der Ansprüche 1 bis 10, bei dem eine der Elektrode (301) zugewandte Oberfläche des verformbaren Elements (1201) zwischen den Segmenten jeweils zu der Elektrode hin gewölbt geformt ist.

13. Mikromechanisches Bauelement gemäß einem der vorhergehenden Ansprüche, mit einer Treiberschaltung zum Anlegen der Spannung an das mikromechanische Bauelement, so dass das mikromechanische Bauelement als mikromechanischer Aktor wirkt.

14. Mikromechanisches Bauelement gemäß einem der vorhergehenden Ansprüche, bei dem das verformbare Element (1201) einen Federabschnitt (3102; 3802; 4002, 4003) zwischen einem Aufhängungsort (3103; 3203) und einem Funktionselement (3101; 3201; 6001) des mikromechanischen Bauelements bildet.

15. Mikromechanisches Bauelement gemäß Anspruch 1, bei dem das verformbare Element eine Platte (3001; 3201) ist und die Segmente konzentrische Kreise bilden, so dass die durch das Anlegen der elektrischen Spannung (U) zwischen der Elektrode (301) und dem verformbaren Element (1201) entstehenden lateralen Zug- oder Druckkräfte die Platte helm- oder schüsselförmig verkrümmen.

16. Mikromechanisches Bauelement gemäß Anspruch 15, bei dem die Platte eine Spiegelplatte ist.

17. Mikromechanisches Bauelement gemäß einem der Ansprüche 1 bis 7, bei dem die Elektrode (301) flächig und zwischen den Segmenten jeweils zu dem verformbaren Element hin gewölbt geformt ist, und eine der Elektrode (301) zugewandte Oberfläche des verformbaren Elements zwischen den Segmenten von der Elektrode weg gewölbt geformt ist, so dass

sich die Verkrümmung des verformbaren Elements aufgrund einer Querkontraktion von Abschnitten des verformbaren Elements zwischen den Segmenten der isolierenden Abstandshalterschicht (303) in der Dickenrichtung von dem verformbaren Element weg ergibt.

18. Mikromechanisches Bauelement gemäß einem der Ansprüche 1 bis 4, bei dem die Elektrode (301) eine erste Elektrode ist und das mikromechanische Bauelement eine weitere Elektrode (301) aufweist, die über eine weitere isolierende Abstandshalterschicht (303) auf einer dem verformbaren Element (1201) abgewandten Seite der ersten Elektrode (301) fixiert ist, wobei die weitere isolierende Abstandshalterschicht (303) entlang der lateralen Richtung (305) in mehrere voneinander beabstandete Segmente strukturiert ist, und

wobei die isolierende Abstandshalterschicht (303) eine erste isolierende Abstandshalterschicht (303) ist und die Segmente der weiteren isolierenden Abstandhalterschicht (303) lateral in Zwischenräumen der Segmente der ersten isolierenden Abstandshalterschicht (303) positioniert sind.

19. Sensor mit einem mikromechanischen Bauelement gemäß einem der vorhergehenden Ansprüche, der ferner eine Detektorschaltung zum Erfassen der Kapazität zwischen der Elektrode (301) und dem verformbaren Element (1201) des mikromechanischen Bauelements aufweist.

20. Energiegenerator mit einem mikromechanischen Bauelement gemäß einem der Ansprüche 1 bis 18, der ferner eine Spannungsquelle zum Anlegen einer konstanten Spannung zwischen der Elektrode und dem verformbaren Element aufweist, so dass aufgrund einer extern induzierten Krümmung des verformbaren Elements ein Stromfluss zwischen der Elektrode und dem verformbaren Element generiert wird,
wobei an einem unfixierten Ende des verformbaren Elements ein Gewicht oder eine Platte befestigt ist.

**Claims**

1. Micromechanical device, comprising
an electrode (301);
a deformable element (1201); and
an insulating spacer layer (303),
wherein the electrode is fixed to the deformable element (1201) via the insulating spacer layer (303), and
**characterized in that**
the insulating spacer layer (303) is structured into several spaced-apart segments along a lateral direction (305), so that by applying an electric voltage (U) between the electrode and the deformable element an area force acting in a thickness direction is applied to the electrode and the deformable element, as a consequence of which lateral tensile or compressive forces result that bend the deformable element along the lateral direction according to the bimorph principle.

2. Micromechanical device according to claim 1, wherein the segments each have a longitudinal extension direction running transversely to the lateral direction (305).

3. Micromechanical device according to one of the previous claims, which is formed in a substrate (1550), wherein the electrode (301) is fixed in a substrate direction above or below the deformable element (1201), so that by bending the deformable element (1201) the same is bend out of the substrate plane, wherein the insulating spacer layer (303) runs parallel to the substrate plane.

4. Micromechanical device according to one of the previous claims, which is formed in a substrate (1550), wherein the electrode (301) is laterally fixed to the deformable element, so that by bending the deformable element the same is bent within a substrate plane of the substrate, wherein the insulating spacer layer (303) runs transversely to the substrate plane.

5. Micromechanical device according to one of the previous claims, wherein the electrode (301) is a first electrode and the micromechanical device comprises a further electrode (301) fixed to the side of the first electrode (301) facing away from the deformable element (1201) via a further insulating spacer layer (303), wherein the further insulating spacer layer (303) is structured into several spaced-apart segments along the lateral direction (305).

6. Micromechanical device according to claim 5, wherein the spacer layer (303) is a first insulating spacer layer (303) and the segments of the further insulating spacer layer (303) are positioned laterally in gaps of the segments of the first insulating spacer layer (303).

7. Micromechanical device according to one of the previous claims, wherein the electrode (301) is a first electrode and the micromechanical device comprises a further electrode (301) fixed to a side of the deformable element (1201) facing away from the first electrode via a further insulating spacer layer (303), wherein the further insulating spacer layer (303) is structured into several spaced-apart segments along the lateral direction (305), so that by applying an electric voltage (U) between the first electrode and the deformable element lateral tensile or compressive forces result that bend the deformable element along the lateral direction in a first direction, while by applying an electric voltage (U) between the second electrode and the deformable element either the same of lateral tensile or compressive forces result that bend the deformable element along the lateral direction also in the first direction, or the other of the lateral or compressive forces that bend the deformable element along the lateral direction in a direction opposing the first.

8. Micromechanical device according to one of the previous claims, wherein the electrode (301) is formed in a planar manner and respectively curved away from the deformable element between the segments.

9. Micromechanical device according to one of claims 1 to 7, wherein the electrode (301) is formed in a planar manner and respectively curved towards the deformable element between the segments.

10. Micromechanical device according to one of the previous claims, wherein the electrode (301) is formed in a planar manner and respectively has a V-shaped cross-section in a plane between the segments, which is spanned by the lateral direction and a thickness direction of the insulating spacer layer.

11. Micromechanical device according to one of the previous claims, wherein a surface of the deformable element facing the electrode (301) is respectively formed curved away from the electrode between the segments.

12. Micromechanical device according to one of claims 1 to 10, wherein a surface of the deformable element (1201) facing the electrode (301) is respectively formed curved towards the electrode between the segments.

13. Micromechanical device according to one of the previous claims having a driver circuit for applying the voltage to the micromechanical device, so that the micromechanical device acts as a micromechanical actuator.

14. Micromechanical device according to one of the previous claims, wherein the deformable element (1201) forms a spring portion (3102; 3802; 4002, 4003) between a suspension location (3103; 3203) and a functional element (3101; 3201; 6001) of the micromechanical device.

15. Micromechanical device according to claim 1, wherein the deformable element is a plate (3001; 3201) and the segments form concentric circles, so that the lateral tensile or compressive forces resulting by applying the electric voltage (U) between the electrode (301) and the deformable element (1201) bend the plate in a helmet or a bowl shape.

16. Micromechanical device according to claim 15, wherein the plate is a mirror plate.

17. Micromechanical device according to one of claims 1 to 7, wherein the electrode (301) is formed in a planar manner and respectively curved towards the deformable element between the segments; and
a surface of the deformable element facing the electrode (301) is respectively formed curved away from the electrode between the segments; so that
the bending of the deformable element results due to a lateral contraction of portions of the deformable element between the segments of the insulating spacer layer (303) in the thickness direction away from the deformable element.

18. Micromechanical device according to one of claims 1 to 4, wherein the electrode (301) is a first electrode and the micromechanical device comprises a further electrode (301) fixed to the side of the first electrode (301) facing away from the deformable element (1201) via a further insulating spacer layer (303), wherein the further insulating spacer layer (303) is structured into several spaced-apart segments along the lateral direction (305); and
wherein the spacer layer (303) is a first insulating spacer layer (303) and the segments of the further insulating spacer layer (303) are positioned laterally in gaps of the segments of the first insulating spacer layer (303).

19. Sensor having a micromechanical device according to one of the previous claims, further comprising a detector circuit for detecting the capacitance between the electrode (301) and the deformable element (1201) of the micromechanical device.

20. Energy generator comprising a micromechanical device according to one of claims 1 to 18, further comprising a voltage source for applying a constant voltage between the electrode and the deformable element, so that due to an externally induced bending of the deformable element a current flow is generated between the electrode and the deformable element,
wherein a weight or a plate is mounted to the unfixed end of the deformable element.

**Revendications**

1. Composant micromécanique avec
une électrode (301);
un élément déformable (1201); et
une couche isolante d'interposition (303),
dans lequel l'électrode est fixée, par l'intermédiaire de la couche isolante d'interposition (303), à l'élément déformable (1201), et
**caractérisé par le fait que**
la couche isolante d'interposition (303) est structurée dans une direction latérale (305) en plusieurs segments distants l'un de l'autre, de sorte que par l'application d'une tension électrique (U) entre l'électrode et l'élément déformable soit exercée sur l'électrode et l'élément déformable une énergie de surface agissant dans une direction de l'épaisseur par laquelle se produisent des forces de traction ou de poussée latérales qui gauchissent l'élément déformable selon le principe bi-morphe dans la direction latérale.

2. Composant micromécanique selon la revendication 1, dans lequel les segments présentent, chacun, une direction d'extension longitudinale qui s'étend transversalement à la direction latérale (305).

3. Composant micromécanique selon l'une des revendications précédentes, qui est formé dans un substrat (1550), dans lequel l'électrode (301) est fixée dans une direction de l'épaisseur de substrat au-dessus ou au-dessous de l'élément déformable (1201), de sorte que par le gauchissement de l'élément déformable (1201) cette dernière soit gauchie hors d'un plan de substrat, dans lequel la couche isolante d'interposition (303) s'étend parallèle au plan de substrat.

4. Composant micromécanique selon l'une des revendications précédentes, qui est formé dans un substrat (1550), dans lequel l'électrode (301) est fixée latéralement à l'élément déformable, de sorte que par le gauchissement de l'élément déformable cette dernière soit gauchie dans un plan de substrat, dans lequel la couche isolante d'interposition (303) s'étend transversalement par rapport au plan de substrat.

5. Composant micromécanique selon l'une des revendications précédentes, dans lequel l'électrode (301) est une première électrode et le composant micromécanique présente une autre électrode (301) qui est fixée, par l'intermédiaire d'une autre couche isolante d'interposition (303), sur un côté de la première électrode (301) orienté opposé à l'élément déformable (1201), dans lequel la couche isolante d'interposition (303) est structurée, dans la direction latérale (305), en plusieurs segments distants l'un de l'autre.

6. Composant micromécanique selon la revendication 5, dans lequel la couche isolante d'interposition (303) est une première couche isolante d'interposition (303) et les segments de l'autre couche isolante d'interposition (303) sont positionnés latéralement dans des espaces entre les segments de la première couche isolante d'interposition (303).

7. Composant micromécanique selon l'une des revendications précédentes, dans lequel l'électrode (301) est une première électrode et le composant micromécanique présente une autre électrode (301) qui est fixée, par l'intermédiaire d'une autre couche isolante d'interposition (303), sur un côté de l'élément déformable (1201) orienté opposé à la première électrode, dans lequel l'autre couche isolante d'interposition (303) est structurée, dans la direction latérale (305), en plusieurs segments distants l'un de l'autre, de sorte que par l'application d'une tension électrique (U) entre la première électrode et l'élément déformable se produisent unes parmi des forces de traction ou de poussée latérales qui gauchissent l'élément déformable dans la direction latérale dans une première direction, tandis que par l'application d'une tension électrique (U) entre la deuxième électrode et l'élément déformable se produisent soit les mêmes parmi des forces de traction ou de poussée latérales qui gauchissent l'élément déformable dans la direction latérale également dans la première direction, soit les autres parmi des forces de traction ou de poussée latérales qui gauchissent l'élément déformable dans la direction latérale dans une direction opposée à la première direction.

8. Composant micromécanique selon l'une des revendications précédentes, dans lequel l'électrode (301) est plate et chaque fois formée bombée entre les segments en direction opposée à l'élément déformable.

9. Composant micromécanique selon l'une des revendications 1 à 7, dans lequel l'électrode (301) est plate et formée bombée entre les segments en direction de l'élément déformable.

10. Composant micromécanique selon l'une des revendications précédentes, dans lequel l'électrode (301) est formée plate et présente entre les segments chaque fois une section en forme de "V" dans un plan défini par la direction latérale et une direction de l'épaisseur de la couche isolante d'interposition.

11. Composant micromécanique selon l'une des revendications précédentes, dans lequel une surface de l'élément déformable orientée vers l'électrode (301) est formée bombée entre les segments en direction opposée à l'électrode.

12. Composant micromécanique selon l'une des revendications 1 à 10, dans lequel une surface de l'élément déformable (1201) orientée vers l'électrode (301) est formée bombée entre les segments en direction de l'électrode.

13. Composant micromécanique selon l'une des revendications précédentes, avec un circuit d'attaque pour appliquer la tension au composant micromécanique de sorte que le composant micromécanique agisse comme un actionneur micromécanique.

14. Composant micromécanique selon l'une des revendications précédentes, dans lequel l'élément déformable (1201) constitue un segment de ressort (3102; 3802; 4002, 4003) entre un endroit de suspension (3103; 3203) et un élément fonctionnel (3101; 3201; 6001) du composant micromécanique.

15. Composant micromécanique selon la revendication 1, dans lequel l'élément déformable est une plaque (3001; 3201) et les segments forment des cercles concentriques de sorte que les forces de traction ou de poussée latérales qui se produisent par l'application d'une tension électrique (U) entre l'électrode (301) et l'élément déformable (1201) gauchissent la plaque en forme de casque ou de clé.

16. Composant micromécanique selon la revendication 15, dans lequel la plaque est une plaque miroir.

17. Composant micromécanique selon l'une des revendications 1 à 7, dans lequel l'électrode (301) est plate et formée bombée entre les segments en direction de l'élément déformable, et
une surface de l'élément déformable orientée vers l'électrode (301) est formée bombée entre les segments en direction opposée à l'électrode, de sorte que
la courbure de l'élément déformable résulte d'une contraction transversale de segments de l'élément déformable entre les segments de la couche isolante d'interposition (303) dans la direction de l'épaisseur opposée à l'élément déformable.

18. Composant micromécanique selon l'une des revendications 1 à 4, dans lequel l'électrode (301) est une première électrode et le composant micromécanique présente une autre électrode (301) qui est fixée, par l'intermédiaire d'une autre couche isolante d'interposition (303), sur un côté de la première électrode (301) opposé à l'élément déformable (1201), dans lequel l'autre couche isolante d'interposition (303) est structurée dans la direction latérale (305) en plusieurs segments distants l'un de l'autre, et dans lequel la couche isolante d'interposition (303) est une première couche isolante d'interposition (303) et les segments de l'autre couche isolante d'interposition (303) sont positionnés latéralement dans des espaces entre les segments de la première couche isolante d'interposition (303).

19. Capteur avec un composant micromécanique selon l'une des revendications précédentes, présentant par ailleurs un circuit de détection destiné à détecter la capacité entre l'électrode (301) et l'élément déformable (1201) du composant micromécanique.

20. Générateur d'énergie avec un composant micromécanique selon l'une des revendications 1 à 18, présentant par ailleurs une source de tension pour appliquer une tension constante entre l'électrode et l'élément déformable, de sorte que soit généré, par suite d'un gauchissement de l'élément déformable induit de l'extérieur, un flux de courant entre l'électrode et l'élément déformable,
dans lequel à une extrémité non fixée de l'élément déformable est fixé un poids ou une plaque.

FIG 1

FIG 2A

FIG 2B

FIG 2C

FIG 3A

FIG 3B

FIG 4A

FIG 4B

FIG 4C

EP 2 664 058 B1

**FIG 5**

FIG 6A

FIG 6B

EP 2 664 058 B1

bzw. Zug- oder Druckdehnung auf
oder innerhalb des
verformbaren Elements

$U$ → elektrostatisches Feld → $F_Z$ → Geometrie und Anordnung der Elektroden → $F_X$ → verformbares Element → $w$

## FIG 7

EP 2 664 058 B1

EP 2 664 058 B1

1400                    303              301         304

305

1201

Z
y ● → x

**FIG 8**

1500                    303              301         304

305

1201

Z
y ● → x

**FIG 9**

FIG 10

FIG 11

FIG 12

FIG 13

1552

1554

1550

1556

**FIG 14A**

1552

1558

1554

1556

**FIG 14B**

z

y ●→ x

1560

1558

1552

1554

1556

**FIG 14C**

1562

**FIG 14D**

FIG 14E

FIG 14F

FIG 14G

FIG 14H

FIG 15

FIG 16

EP 2 664 058 B1

FIG 17

FIG 18

EP 2 664 058 B1

2000

303    301    304

1201

Z
y →x

FIG 19

2100

303    301
       304

1201

Z
y →x

FIG 20

303 301 304

1201

Z
y・→x

FIG 21A

303 301 304

1201

305

Z
y・→x

FIG 21B

303 301 304

1201

Z
y・→x

FIG 21C

2700

303    301    304

2700

U

1201

y
z → x

## FIG 22A

2800

z
y → x

## FIG 22B

FIG 23A

FIG 23B

FIG 23C

FIG 23D

FIG 23E

EP 2 664 058 B1

FIG 24A

FIG 24C

FIG 24B

FIG 24D

301

304

FIG 24E

2900

1201

nichtausgelenkter
Zustand

erfindungsgemäße, elektrostatisch
auslenkbare Strukturen,
welche Druck- oder Zugdehnung erzeugen

EP 2 664 058 B1

FIG 25A

3000

3003

3002

3001

A

A

y
z  x

FIG 25B

3001    3005    3003

303  301  310    304    3004

y
z  x

FIG 25C

y
z  x

# FIG 26A

# FIG 26B

# FIG 26C

Verkippung aufgrund Änderung der
elektrischen Spannung zw. 301 und 1201

FIG 27

Struktur für
Druckdehnung
z.B. 1500

Struktur für
Druckdehnung
z.B. 1500

Struktur für
Zugdehnung
z.B. 2100

Struktur für
Zugdehnung
z.B. 2100

FIG 28

3300

Struktur für
Zugdehnung
z.B. 2100

3201

Struktur für
Zugdehnung
z.B. 2100

3202

3203

3204

Struktur für
Druckdehnung
z.B. 1500

Struktur für
Druckdehnung
z.B. 1500

y

z → x

FIG 29

3400

Struktur für
Druckdehnung
wie z.B. 1500

3201

Struktur für
Druckdehnung
wie z.B. 1500

3202

3203

3204

passiver
Balken

passiver
Balken

y

z → x

FIG 30

FIG 31

FIG 32

3700

Strukturen
(z.B. 1200 bis 2100)
für Zugdehnung

Strukturen
(z.B. 1200 bis 2100)
für Zugdehnung

3203

3201

3703

3701  3702

3204

Strukturen
(z.B. 1200 bis 2100)
für Druckdehnung

3703

Strukturen
(z.B. 1200 bis 2100)
für Druckdehnung

y
z → x

FIG 33

FIG 34

EP 2 664 058 B1

FIG 35

EP 2 664 058 B1

4000

A →

4004    3201    4001

4003
4002
4002
4003
4002
4003
4002
4003

4003
4002
4002
4003
4002
4003
4002
4003

3203

3204

A →

y
z → x

**FIG 36A**

vertikale Bewegung *w*
des Randes der Platte

4003    4002    4002    4003

320

z
y → x

4002    4003    4003    4002

Festeinspannung

**FIG 36B**

FIG 37

FIG 38

Draufsicht:

4003 ... erfindungsgemäße
elektrostatische auslenkbare
bimorphe Cantilever (Strukturen)

FIG 39

EP 2 664 058 B1

5000

500

3700

3201

3203

3700

500

500

y
z x

## FIG 40

5100

420

300

500

3203

3201

500

y
z x

## FIG 41

6000

erfindungsgemäße elektrostatische auslenkbare
bimorphe Cantilever (Strukturen 1200 bis 2100)

6001

FIG 42

100a

100

$F$

100

FIG 43

100

$U = 0$

101

d

$U > 0$

$E$

$W$

100

FIG 44

FIG 45

FIG 46

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0249199 A1

- DE 102008049647

**In der Beschreibung aufgeführte Nicht-Patentliteratur**

- **CONRAD, H. ; KLOSE, T. ; SANDER, T. ; SCHENK, H. ; LAKNER, H.** Actuating Methods of Quasistatic Micromirrors for Active Focus Variation. *Proc. of the IEEE 2008 International Students and Young Scientists Workshop "Photonics and Microsystems,* 2008, 7-11

- **SHAO, Y. ; DICKENSHEETS, D- L. ; HIMMER, P.** 3-D MOEMS Mirror for Laser Beam Pointing and Focus Control. *IEEE JOURNAL OF SELECTED TOPICS IN QUAN-TUM ELECTRONICS,* 2004, vol. 10 (3), 528-535

- **MESCHEDER, U. M. ; ESTAN, C. ; SOMOGYI, G. ; FREUDENREICH, M.** Distortion optimized focusing mirror device with large aperture. *Sensors and Actuators A,* 2006, vol. 130-131, 20-27

- **CONRAD, H.** Konzeptionelle Untersuchungen eines elektrothermisch auslenkbaren mikromechanischen Membranspiegels zur aktiven Fokusvariation. *Masterarbeit, HTW Dresden,* 2007

- **PETERSEN, K. E.** Silicon Torsional Scanning Mirror. *IBM J. RES. DEVELOP.,* 1980, vol. 24 (5), 631-637

- **DAUDERSTÄDT, U. ; DÜRR, P. ; SINNING, S. ; WULLINGER, I. ; WAGNER, M.** Charging effects in micromirror spatial light modulators. *J. Micro/Nanolith. MEMS MOEMS,* 2008, vol. 7 (2), 021011-1, 021011-10

- **MANHART, S. ; HUPFER, W. ; NIKOLOV, S. ; WUEHRER, C. ; VDOVIN, G.V. ; SODNIK, Z.** 50 mm MEMS Deformable Mirror. Adaptive Optical Systems Technology. *Proc. of SPIE,* 2000, vol. 4007, 555-562

- **MALI, R. K. ; BIFANO, T. G. ; VANDELLI, N. ; HORENSTEIN, M. N.** Development of microelectromechanical deformable mirrors for phase modulation of light. *J. Opt. Eng.,* 1997, vol. 36 (2), 542-548

- **SMITS, J. G. ; FUJIMOTO, K. ; KLEPTSYN, V. F.** Microelectromechanical flexure PZT actuated optical scanner: static and resonance behavior. *J. Micromech. Microeng.,* 2005, vol. 15

- Laser Beam Shaping by Means of Flexible Mirrors. **KUDRYASHOV, A. V. ; CHEREZOVA, T. Y.** Laser Beam Shaping Applications. CRC Press, 2006, 211-240

- **SINGH, J. ; TEO, J. H. S. ; XU, Y. U. A..** A two axes scanning SOI MEMS micromirror for endoscopic bi-oimaging. *J. Micromech. Microeng.,* 2008, vol. 18, 025001

- **TODD, S. T. ; JAIN, A. ; QU, H. ; XIE, H.** A multi-degree-of-freedom micromirror utilizing inverted-series-connected bimorph actuators. *J. Opt. A: Pure Appl. Opt.,* 2006, vol. 8, S352-S359

- **YANG, J.P. ; DENG, X.C. ; CHONG, T.C.** A Self-sensing Thermal Actuator Incorporating Micromirror for Tracking Mechanism of Optical Drive. Sensors. *Proceedings of IEEE,* 2004, vol. 2, 900-903

- **GEHNER, A. ; SCHMIDT, J. U. ; WILDENHAIN, M. ; KNOBBE, J. ; WAGNER, M.** RECENT PROGRESS IN CMOS INTEGRATED MEMS AO MIRROR DEVELOPMENT. ADAPTIVE OPTICS FOR INDUSTRY AND MEDICINE. *Proceedings of the Sixth International Workshop,* 2007, 53-58

- 3D In Vivo optical coherence tomography based on a low-voltage, large-scan-range 2D MEMS mirror. **SUN, J. ; GUO, S. ; WU, L. ; LIU, L. ; CHOE, S. ; SORG, B. S. ; XIE, H.** Optics Express. 2010, vol. 18, 12.065-12.075

- **SCHWEIZER, S. ; CALMES, S. ; LAUDON, M. ; RENAUD, P.** Thermally actuated optical microscanner with large angle and low consumption. *Sensors and Actuators,* 1999, vol. 76, 470-477

- Brother Industries, Ltd.: Brother Develops Spectacle-type Wearable Retinal Imaging Display. *Technical Report,* 2008, http://www.brother.com/en/news/2008/rid/

- **SEHR, H. ; EVANS, A. G. R. ; BRUNNSCHWEILER, A. ; ENSELL, G. J. ; NIBLOCK, T. E. G.** Fabrication and test of thermal vertical bimorph actuators for movement in the wafer plane. *J. Micromech. Microeng.,* 2001, vol. 11, 306-310

- **HUANG, Q.-A. ; LEE, N. K. S.** Analysis and design of polysilicon thermal flexure actuator. *J. Micromech. Microeng.,* 1999, vol. 9, 64-70

- **PYAYT, A. L. ; STARKWEATHER, G. K. ; SINCLAIR, M.** A high-efficiency display based on a telescopic pixel design. *Nature Photonics,* 2008, vol. 2, 492-495